# EUROPEAN PATENT APPLICATION

(11) **EP 4 708 018 A1**
(43) Date of publication of application: **11.03.2026**
(21) Application number: 25198684.0
(22) Date of filing: 28.08.2025
(51) Int. Cl.: G06F 3/12

(54) **PRINTING SYSTEM, PRINTING APPARATUS, PRINTING METHOD, INFORMATION PROCESSING APPARATUS, AND NON-TRANSITORY COMPUTER-READABLE STORAGE MEDIUM STORING PROGRAM**

(30) Priority: 30.08.2024 JP 2024148611
(71) Applicant: Seiko Epson Corporation, Tokyo 160-8801 (JP)
(72) Inventor: MITSUI, Yoichi, Suwa-shi, 392-8502 (JP)
(74) Representative: Lewis Silkin LLP

(57) **Abstract**

A printing system includes a printing apparatus and an information processing apparatus, the printing apparatus includes a printing unit and a controller, the information processing apparatus includes an information storage unit and an information controller, the information controller executes receiving a target print instruction, receiving a surplus print instruction, and transmitting surplus data and one or more print jobs to the printing apparatus, and the controller executes acquiring target image data representing a target image including a product image, acquiring surplus image data representing a surplus image not including the product image and having a size matching a size of the target image, printing a target region by printing the target images as many as a number represented by the print job, and printing a surplus region by printing the surplus images as many as a number represented by the surplus data.

## Description

The present application is based on, and claims priority from JP Application Serial Number 2024-148611, filed August 30, 2024, the disclosure of which is hereby incorporated by reference herein in its entirety.

### BACKGROUND

### 1. Technical Field

The present disclosure relates to a printing system, a printing apparatus, a printing method, an information processing apparatus, and a non-transitory computer-readable storage medium storing a program.

### 2. Related Art

JP-A-2002-355794 describes a processing apparatus that processes a medium. This processing apparatus is configured so as to make a cut in a medium with a processing blade. The medium processed by such a processing apparatus may be manufactured with a printing apparatus in some cases. The printing apparatus is configured to print, on a medium, an image of a product to be processed.

JP-A-2002-355794 is an example of the related art.

In the processing apparatus, a surplus region different from a target region in which the image of the product to be processed is located may be required in the medium in some cases. The surplus region is utilized for an adjustment of the processing blade, setting of the medium to the processing apparatus, and so on in the processing apparatus. The printing apparatus provides the surplus region to the medium by printing an extra image of the product. In this case, it is necessary to set the number of prints including the extra image of the product in the printing apparatus, which requires much time and effort for processing.

### SUMMARY

A printing system which solves the problems described above is a printing system including a printing apparatus configured to print an image on a medium, and an information processing apparatus configured to process information related to the printing apparatus, wherein the printing apparatus includes a printing unit configured to print the image on the medium based on print image data including a product image, and a controller configured to control the printing unit based on a print job including the print image data, the information processing apparatus includes an information storage unit configured to store a plurality of print jobs each identical to the print job, and an information controller configured to transmit the information to the printing apparatus, the information controller is configured to execute receiving a target print instruction to print a target region by receiving one or more print jobs selected from the plurality of print jobs, receiving a surplus print instruction to printing a surplus region different from the target region, and transmitting surplus data based on the surplus print instruction and the one or more print jobs to the printing apparatus, and the controller is configured to execute acquiring target image data representing a target image including the product image from the print image data, acquiring, from the print image data, surplus image data that represents a surplus image not including the product image, and represents the surplus image having a size matching a size of the target image, printing the target region by printing the target images as many as a number represented by the print job, and printing the surplus region by printing the surplus images as many as a number represented by the surplus data.

A printing apparatus which solves the problem described above includes a printing unit configured to print an image on a medium based on print image data including a product image, and a controller configured to control the printing unit based on a print job including the print image data, wherein the controller is configured to execute receiving the print job for printing a target region, receiving surplus data for printing a surplus region different from the target region, acquiring target image data representing a target image including the product image from the print image data, acquiring surplus image data representing a surplus image that does not include the product image and has a size matching a size of the target image from the print image data, printing the target region with the target images as many as a number represented by the print job, and printing the surplus region with the surplus images as many as a number represented by the surplus data.

A printing method which solves the problem described above is a method executed by a computer controlling, based on a print job including print image data including a product image, a printing unit configured to print an image on a medium based on the print image data, the method including receiving the print job for printing a target region, receiving surplus data for printing a surplus region different from the target region, acquiring target image data representing a target image including the product image from the print image data, acquiring surplus image data representing a surplus image that does not include the product image and has a size matching a size of the target image from the print image data, printing the target region with the target images as many as a number represented by the print job, and printing the surplus region with the surplus images as many as a number represented by the surplus data.

An information processing apparatus which solves the problem described above is an apparatus configured to process information related to a printing apparatus configured to print an image on a medium based on print image data including a product image, the apparatus including an information storage unit configured to store a plurality of print jobs including the print image data and a plurality of layout files, and an information controller configured to transmit the information to the printing apparatus, wherein the information controller is configured to execute receiving, by receiving one or more print jobs selected from the plurality of print jobs, a target print instruction to print a target region in which target images including the product image are located as many as a number represented by the one or more print jobs, receiving, by receiving one or more layout files selected from the plurality of layout files, a surplus print instruction to print a surplus region in which surplus images not including the product image are located as many as a number represented by the one or more layout files, and transmitting the one or more layout files and the one or more print jobs to the printing apparatus.

(O) A non-transitory computer-readable storage medium storing a program which solves the problem described above is a medium storing a program that causes a computer, which includes an information storage unit configured to store a plurality of print jobs including print image data including a product image and a plurality of layout files, and an information controller configured to transmit information to a printing apparatus configured to print an image on a medium based on the print image data, to execute processing of information related to the printing apparatus, the processing including receiving, by receiving one or more print jobs selected from the plurality of print jobs, a target print instruction to print a target region in which target images including the product image are located as many as a number represented by the one or more print jobs, receiving, by receiving one or more layout files selected from the plurality of layout files, a surplus print instruction to print a surplus region in which surplus images not including the product image are located as many as a number represented by the one or more layout files, and transmitting the one or more layout files and the one or more print jobs to the printing apparatus.

### BRIEF DESCRIPTION OF THE DRAWINGS

FIG. 1 is a block diagram showing a printing system and a peripheral configuration thereof.
FIG. 2 is a diagram showing a printing apparatus.
FIG. 3 is a diagram when an image is printed on a medium.
FIG. 4 is a diagram when a plurality of print jobs is executed on the medium.
FIG. 5 is a diagram showing a processing apparatus.
FIG. 6 is a diagram when the medium is processed.
FIG. 7 is a diagram when the medium on which the plurality of print jobs is executed is processed.
FIG. 8 is a diagram showing data exchange between the printing system and the peripheral configuration thereof.
FIG. 9 is a diagram showing an example of print image data.
FIG. 10 is a diagram showing another example of the print image data.
FIG. 11 is a diagram showing an example of job data.
FIG. 12 is a diagram showing an example of surplus data.
FIG. 13 is a diagram showing an example of a surplus region.
FIG. 14 is a diagram showing a list screen.
FIG. 15 is a diagram showing a job setting screen.
FIG. 16 is a diagram showing a surplus setting screen.
FIG. 17 is a flowchart showing transmission processing in first, second, and third embodiments.
FIG. 18 is a flowchart showing print processing in the first, second, and third embodiments.
FIG. 19 is a flowchart showing region print processing in the first embodiment.
FIG. 20 is a diagram when the surplus region is printed with a first pattern in the first embodiment.
FIG. 21 is a diagram when the surplus region is printed with a second pattern in the first embodiment.
FIG. 22 is a flowchart showing region print processing in the second and third embodiments.
FIG. 23 is a diagram when a first surplus region is printed between a first target region and a second target region in the second embodiment.
FIG. 24 is a diagram when a second surplus region is printed between the first target region and the second target region in the second embodiment.
FIG. 25 is a diagram when the first surplus region and the second surplus region are printed between the first target region and the second target region in the second embodiment.
FIG. 26 is a diagram when a surplus image including a pattern image is printed in the third embodiment.
FIG. 27 is a flowchart showing transmission processing in a fourth embodiment.
FIG. 28 is a flowchart showing print processing in the fourth embodiment.
FIG. 29 is a diagram when a mark-absent image is printed in the fourth embodiment.
FIG. 30 is a diagram when a first mark-absent image is printed in the fourth embodiment.
FIG. 31 is a diagram when a second mark-absent image is printed in the fourth embodiment.
FIG. 32 is a flowchart showing transmission processing different from that in FIG. 28.
FIG. 33 is a diagram when idle conveyance is executed instead of printing of the mark-absent image in the example shown in FIG. 29.
FIG. 34 is a diagram when the idle conveyance is performed instead of printing of the first mark-absent image in the example shown in FIG. 30.
FIG. 35 is a diagram when the idle conveyance is performed instead of printing of the second mark-absent image in the example shown in FIG. 31.

### DESCRIPTION OF EMBODIMENTS

An embodiment of a printing system including a printing apparatus and an information processing apparatus will hereinafter be described with reference to the drawings.

### Printing System

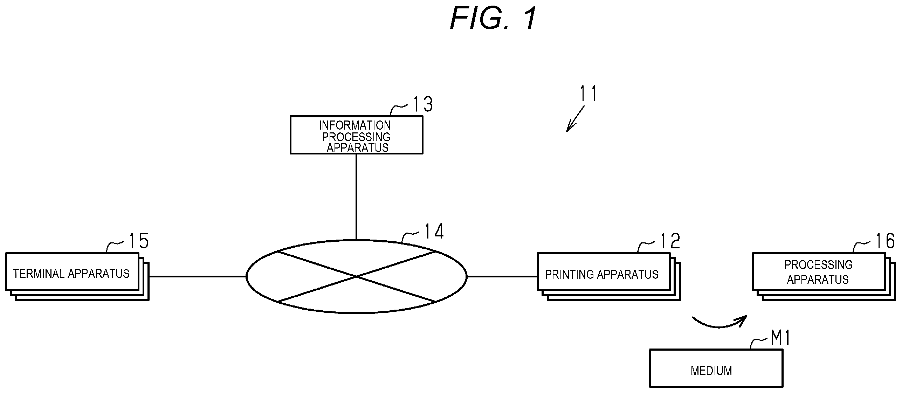

As shown in FIG. 1, the printing system 11 includes one or more printing apparatuses 12 and one information processing apparatus 13. The printing apparatus 12 and the information processing apparatus 13 are each coupled to a network 14. The network 14 is a communication network such as a WAN or a LAN. The printing apparatus 12 and the information processing apparatus 13 communicate with each other through the network 14.

The printing system 11 is configured to communicate with one or more terminal apparatuses 15. The terminal apparatus 15 is a terminal owned by the user. The terminal apparatus 15 is a smartphone, a tablet, a personal computer, or the like. The terminal apparatus 15 is coupled to the network 14. The terminal apparatus 15 communicates with the information processing apparatus 13 via the network 14. The terminal apparatus 15 may communicate with the printing apparatus 12 through the network 14. The user uses the printing system 11 through the terminal apparatus 15.

The printing apparatus 12 is configured to print an image on a medium M1. The printing apparatus 12 is, for example, an inkjet printer that ejects ink as an example of a liquid on the medium M1 to thereby print images such as characters or photographs. The medium M1 is, for example, label paper. The label paper includes a mount and a label attached to the mount. The printing apparatus 12 prints an image on the medium M1 to be processed by a processing apparatus 16.

The medium M1 after printing is processed by one or more of a plurality of processing apparatuses 16. The processing apparatus 16 is configured so as to process the medium M1 after printing. The processing apparatus 16 processes the medium M1 by, for example, making a cut in the medium M1. In one example, the processing apparatus 16 processes the medium M1 by making a cut in a label of the label paper. The processing apparatus 16 may make a cut in the label paper together with the mount.

### Printing Apparatus

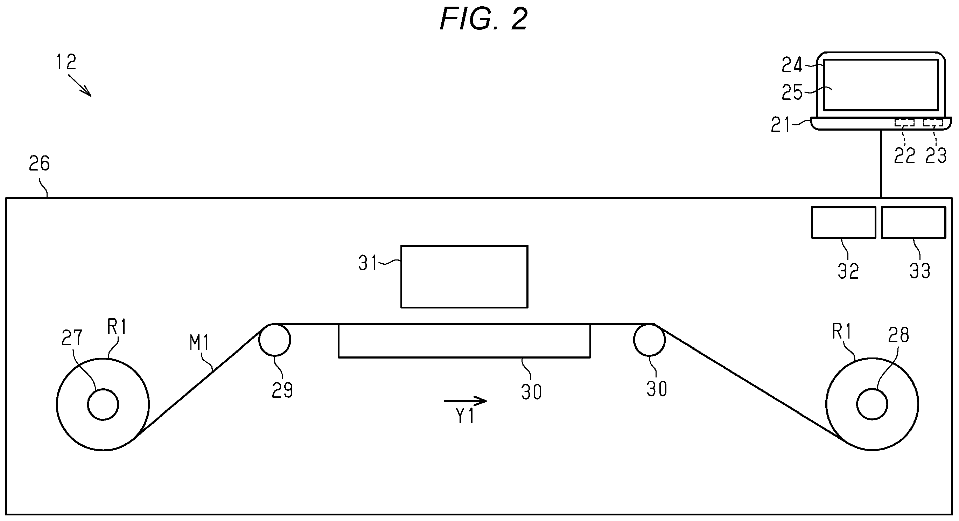

As shown in FIG. 2, the printing apparatus 12 may include a processing terminal 21. The processing terminal 21 processes information received by the printing apparatus 12. The processing terminal 21 includes a controller and a storage unit. Specifically, the processing terminal 21 includes a processing controller 22 and a processing storage unit 23. The storage unit is configured to store a program. The storage unit includes a memory such as a ROM or a RAM. The storage unit may include a hard disk drive, a solid state drive, or the like. The controller is configured to execute processing in accordance with a program stored in the storage unit. The controller includes a processor such as a CPU or a GPU. The controller may include a hardware circuit such as an ASIC. In this way, the processing terminal 21 is realized by a computer. The processing terminal 21 is, for example, a personal computer. The processing terminal 21 may be a smartphone, a tablet, or the like.

The processing controller 22 is configured to receive a print job. The print job includes image data to be printed. The processing controller 22 is configured to perform image conversion and image processing on the image data contained in the print job. The processing controller 22 includes a raster image processor (RIP). The processing controller 22 is configured to rasterize the image data. The processing controller 22 converts the image data into raster image data. That is, the processing controller 22 converts the image data into halftone dot data. The printing apparatus 12 prints an image on the medium M1 based on the image data thus converted. The processing storage unit 23 stores programs related to image conversion, image processing, and the like. The processing storage unit 23 stores, for example, a program related to rasterization.

The processing terminal 21 may include a display unit. Specifically, the processing terminal 21 may include a processing display unit 24. The display unit is configured to display information. The display unit is, for example, a liquid crystal display. The processing display unit 24 is configured to display information related to the printing apparatus 12. The processing display unit 24 displays, for example, a screen related to image conversion and image processing.

The processing terminal 21 may include an operation unit. Specifically, the processing terminal 21 may include a processing operation unit 25. The operation unit is an interface operated by the user. The processing operation unit 25 is a touch panel, a pointing device, a keyboard, or the like. The user operates the printing apparatus 12 by operating the processing operation unit 25. The user may change settings related to image conversion, image processing, and so on through the processing operation unit 25.

The printing apparatus 12 includes an apparatus main body 26. The apparatus main body 26 is coupled to the processing terminal 21. The apparatus main body 26 receives data from the processing terminal 21. The apparatus main body 26 may incorporate the processing terminal 21. That is, the processing terminal 21 is not limited to a computer externally attached to the apparatus main body 26, and may be a computer incorporated by the apparatus main body 26.

The apparatus main body 26 includes a feeding shaft 27. The feeding shaft 27 is configured to feed the medium M1. The roll body R1 is mounted on the feeding shaft 27. The roll body R1 is an article obtained by winding the medium M1 to be stacked. The roll body R1 which is obtained by winding the medium M1 before printing to be stacked is set on the feeding shaft 27.

The apparatus main body 26 may include a winding shaft 28. The winding shaft 28 is configured to wind the medium M1. By the winding shaft 28 winding the medium M1, the roll body R1 is formed on the winding shaft 28. That is, the winding shaft 28 forms the roll body R1 obtained by winding the medium M1 after printing to be stacked.

The apparatus main body 26 includes a conveyance unit 29. The conveyance unit 29 is configured to convey the medium M1. The conveyance unit 29 conveys the medium M1 from the feeding shaft 27 toward the winding shaft 28. The conveyance unit 29 may convey the medium M1 from the feeding shaft 27 toward the processing apparatus 16. That is, the printing apparatus 12 may be configured to perform printing on the medium M1 in line with respect to the processing apparatus 16. The conveyance unit 29 includes, for example, one or more rollers. The conveyance unit 29 rotates to thereby convey the medium M1. The conveyance unit 29 may intermittently convey the medium M1 or may continuously convey the medium M1.

The apparatus main body 26 includes a support table 30. The support table 30 is configured to support the medium M1. The support table 30 is located, for example, between the feeding shaft 27 and the winding shaft 28. In one example, the support table 30 supports a portion in printing out of the medium M1.

The apparatus main body 26 includes a printing unit 31. The printing unit 31 is configured to print an image on the medium M1. The printing unit 31 prints the image on the medium M1 by ejecting a liquid onto the medium M1. The printing unit 31 is opposed to the support table 30. The printing unit 31 is, for example, a head that ejects the liquid. In one example, the printing unit 31 is configured to eject ink of four colors of C, M, Y, and K.

The apparatus main body 26 includes a controller and a storage unit. Specifically, the apparatus main body 26 includes a print controller 32 and a print storage unit 33. The print controller 32 is substantially the same in configuration as the processing controller 22. The print storage unit 33 is substantially the same in configuration as the processing storage unit 23. As described above, the apparatus main body 26 includes the computer.

The print controller 32 is configured to receive data from the processing terminal 21. The print controller 32 is configured to receive a print job through the processing terminal 21. The print controller 32 receives, for example, the print job including image data converted by the processing controller 22. The print controller 32 controls the apparatus main body 26 based on the print job. Specifically, the print controller 32 controls the printing unit 31 based on the print job. Accordingly, the image is printed on the medium M1. The print controller 32 may control the conveyance unit 29, the winding shaft 28, and so on based on the print job. The print controller 32 may also serve as the processing controller 22. The print storage unit 33 stores a program related to printing. The print storage unit 33 may store programs related to image conversion and image processing. The print storage unit 33 may store text data, image data, and so on in addition to the programs. The print storage unit 33 may also serve as the processing storage unit 23.

The print controller 32 may be configured to process the image data. The print controller 32 may include an RIP. The print controller 32 may be configured to rasterize the image data. The print controller 32 may be configured to perform, on the image data, image conversion, image processing, and so on. The print controller 32 may combine the image data thus received with other data. The print controller 32 may combine the image data received from the processing terminal 21 with the data stored in the print storage unit 33. The print controller 32 may combine text data stored in the print storage unit 33, image data stored in the print storage unit 33, and so on with the image data received from the processing terminal 21. The print controller 32 may perform printing on the medium M1 based on the image data thus combined.

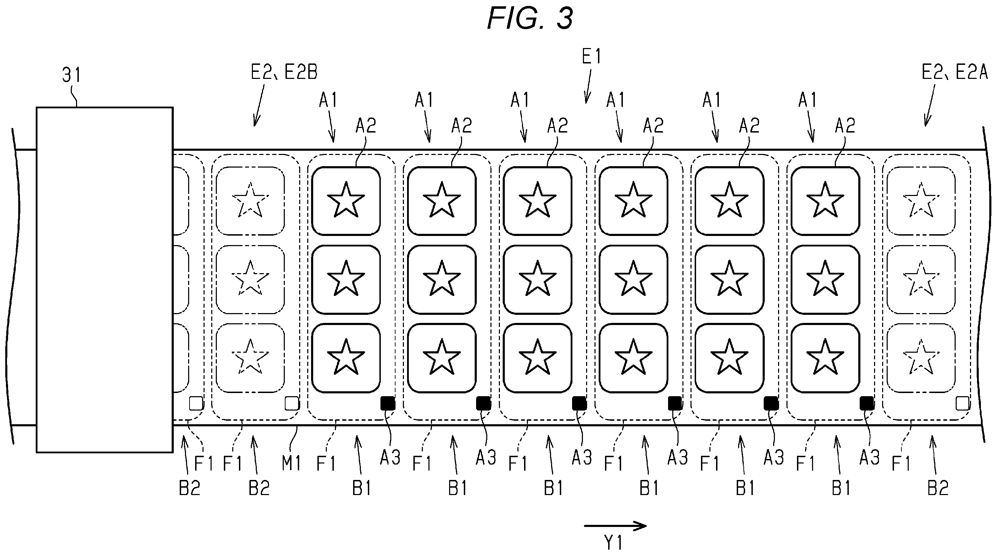

As illustrated in FIG. 3, the printing apparatus 12 is configured to print an image on the medium M1 by image frame F1. The image frame F1 represents one sheet of image to be printed based on the image data contained in the print job. The printing apparatus 12 receives data by image frame F1 as the image data, and repeatedly prints the image by image frame F1 on the medium M1 to thereby print an image row on the medium M1. That is, the image row includes a plurality of image frames F1. The printing apparatus 12 is configured to print the image frames F1 at regular intervals. However, when the image row is printed on the medium M1 by the printing unit 31, the plurality of image frames F1 can be printed at once.

The printing apparatus 12 is configured to print the product image A1 on the medium M1. Specifically, the printing apparatus 12 is configured to print the image frames F1 including the product image A1. Therefore, the printing apparatus 12 prints the product image A1 at regular intervals.

The product image A1 is an image to be processed by the processing apparatus 16. The product image A1 is, for example, an image including one or more product icons A2. In one example, the product image A1 is an image in which three product icons A2 are arranged over the width of the medium M1. The product image A1 may be an image in which a plurality of product icons A2 is arranged in a conveyance direction Y1 of the medium M1. The conveyance direction Y1 is a direction in which the medium M1 is conveyed. In the printing apparatus 12, the conveyance direction Y1 is a direction from the feeding shaft 27 toward the winding shaft 28.

The printing apparatus 12 is configured to print a mark image A3 on the medium M1. Specifically, the printing apparatus 12 is configured to print the image frames F1 including the mark image A3. Therefore, the printing apparatus 12 prints the mark images A3 at regular intervals. The mark image A3 is an image representing processing timing.

The printing apparatus 12 prints the mark images A3 on the medium M1 so as to correspond respectively to the product images A1. The printing apparatus 12 is configured to print, for example, the image frames F1 including the product image A1 and the mark image A3. In this case, the printing apparatus 12 prints the same number of mark images A3 as the number of product images A1. The printing apparatus 12 prints the mark images A3 at the same intervals as the intervals of the product images A1.

The printing apparatus 12 is configured to print a target region E1 on the medium M1. Specifically, the printing apparatus 12 prints the target region E1 on the medium M1 by executing the print job. The target region E1 is a region to be printed based on the print job. Therefore, the target region E1 corresponds to the print job. The target region E1 is a region to be processed by the processing apparatus 16.

The printing apparatus 12 prints the target region E1 by printing a target image B1. The printing apparatus 12 prints the target region E1 by printing one or more target images B1 based on the print job. The printing apparatus 12 prints the target region E1 by printing the same number of target images B1 as the number represented by the print job. It can be said that the target region E1 is configured with an image row in which the image frames F1 representing the target images B1 are arranged. The target images B1 are images constituting the target region E1. The plurality of target images B1 may be the same images. The target image B1 includes, for example, the product image A1 and the mark image A3.

The printing apparatus 12 may be configured to print a surplus region E2 on the medium M1. The printing apparatus 12 may print the surplus region E2 on the medium M1 as the print job is executed. The printing apparatus 12 may print the surplus region E2 on the medium M1 as the target region E1 is printed on the medium M1. The surplus region E2 is a region accompanying the print job. That is, the surplus region E2 is a region accompanying the target region E1. The surplus region E2 is a region different from the target region E1. The surplus region E2 is a region that does not need to be processed by the processing apparatus 16. The surplus region E2 is printed so as to be aligned with the target region E1 in the conveyance direction Y1. The surplus region E2 may be printed downstream of the target region E1, may be printed upstream thereof, or may be printed at both thereof.

The printing apparatus 12 prints the surplus region E2 by printing a surplus image B2. The printing apparatus 12 prints the surplus region E2 by printing one or more surplus images B2. It can be said that the surplus region E2 is configured with an image row in which the image frames F1 representing the surplus images B2 are arranged. The surplus image B2 is an image constituting the surplus region E2. The surplus image B2 may be the same as or different from the target image B1. The plurality of surplus images B2 may be the same images or may be different images. The surplus image B2 may be, for example, an image including the product image A1 and the mark image A3, or may be a blank image.

The size of the image frame F1 representing the surplus image B2 matches the size of the image frame F1 representing the target image B1. Therefore, the printing apparatus 12 prints the target region E1 and the surplus region E2 by printing a plurality of image frames F1.

The surplus region E2 is printed in order to facilitate processing of the medium M1 by the processing apparatus 16. The surplus region E2 is printed in order to provide an extra length in the target region E1, in order to transmit information to the operator of the processing apparatus 16, or in order to set the processing apparatus 16. In the surplus region E2, information related to the corresponding print job may be printed, or information related to the processing may be printed. That is, the surplus image B2 may include information related to the print job, the processing, and so on besides the images such as the product image A1 and the mark image A3.

The printing apparatus 12 may be configured to print a lead-in region E2A on the medium M1. The printing apparatus 12 may be configured to print a lead-out region E2B on the medium M1. The lead-in region E2A is the surplus region E2 printed in advance of the target region E1. The lead-out region E2B is the surplus region E2 to be printed after the target region E1. Therefore, the lead-in region E2A is located downstream in the conveyance direction Y1 of the target region E1 in the printing apparatus 12. The lead-out region E2B is located upstream in the conveyance direction Y1 of the target region E1 in the printing apparatus 12.

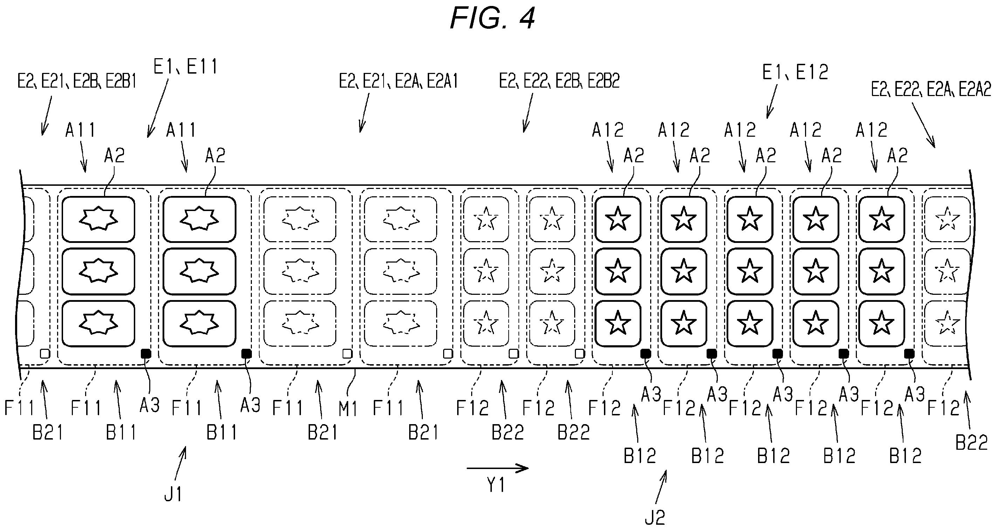

As illustrated in FIG. 4, the printing apparatus 12 may continuously execute a plurality of print jobs on the roll body R1 in some cases in order to improve productivity. For example, the printing apparatus 12 may continuously execute a first print job J1 and a second print job J2 in some cases. In the example illustrated in FIG. 4, the printing apparatus 12 executes the first print job J1 after executing the second print job J2. The printing apparatus 12 may execute the second print job J2 after executing the first print job J1. The first print job J1 and the second print job J2 are names given simply for distinction, and are not determined by the order of execution. The first print job J1 and the second print job J2 refer to two consecutive print jobs out of the plurality of print jobs. When the printing apparatus 12 executes a plurality of print jobs, the printing apparatus 12 may print a table of contents of the print jobs at a leading end or a trailing end of the medium M1. In this case, an operator of the processing apparatus 16 can figure out the plurality of print jobs printed on the roll body R1 with the table of contents.

By the printing apparatus 12 executing a plurality of print jobs, the target region E1 is printed on the medium M1 for each of the plurality of print jobs. In the example illustrated in FIG. 4, a first target region E11 and a second target region E12 are printed on the medium M1. The first target region E11 is the target region E1 by the first print job J1. The second target region E12 is the target region E1 by the second print job J2.

The surplus region E2 may be printed on the medium M1 for each print job by the printing apparatus 12 executing the plurality of print jobs. In the example illustrated in FIG. 4, a first surplus region E21 and a second surplus region E22 are printed on the medium M1. The first surplus region E21 is the surplus region E2 by the first print job J1. The second surplus region E22 is the surplus region E2 by the second print job J2. The first surplus region E21 is printed both downstream and upstream of the first target region E11, but may be printed only downstream or only upstream thereof. The second surplus region E22 is printed both downstream and upstream of the second target region E12, but may be printed only downstream or only upstream thereof.

The first surplus region E21 may include a first lead-in region E2A1. The first lead-in region E2A1 is the lead-in region E2A printed in advance of the first target region E11. The first lead-in region E2A1 is the lead-in region E2A accompanying the first print job J1.

The first surplus region E21 may include a first lead-out region E2B1. The first lead-out region E2B1 is the lead-out region E2B printed after the first target region E11. The first lead-out region E2B1 is the lead-out region E2B accompanying the first print job J1.

The second surplus region E22 may include a second lead-in region E2A2. The second lead-in region E2A2 is the lead-in region E2A to be printed in advance of the second target region E12. The second lead-in region E2A2 is the lead-in region E2A accompanying the second print job J2.

The second surplus region E22 may include a second lead-out region E2B2. The second lead-out region E2B2 is the lead-out region E2B to be printed after the second target region E12. The second lead-out region E2B2 is the lead-out region E2B accompanying the second print job J2.

By the printing apparatus 12 executing the plurality of print jobs, the image frame F1 is printed on the medium M1 for each print job. In the example illustrated in FIG. 4, a first image frame F11 and a second image frame F12 are printed on the medium M1. The first image frame F11 is the image frame F1 by the first print job J1. The second image frame F12 is the image frame F1 by the second print job J2. The first image frame F11 configures the first target region E11 and the first surplus region E21. The second image frame F12 configures the second target region E12 and the second surplus region E22. The number of prints of the first image frame F11 is determined by the setting of the first target region E11 and the first surplus region E21. The number of prints of the second image frame F12 is determined by the setting of the second target region E12 and the second surplus region E22.

The first target region E11 is configured with first target images B11. The first target region E11 is configured with an image row in which the first image frames F11 representing the first target images B11 are arranged. The first target image B11 is the target image B1 by the first print job J1. The first target image B11 includes, for example, a first product image A11 and the mark image A3. The first product image A11 is the product image A1 by the first print job J1.

The second target region E12 is configured with second target images B12. The second target region E12 is configured with an image row in which the second image frames F12 representing the second target images B12 are arranged. The second target image B12 is the target image B1 by the second print job J2. The second target image B12 includes, for example, a second product image A12 and the mark image A3. The second product image A12 is the product image A1 by the second print job J2.

The first surplus region E21 is configured with first surplus images B21. The first surplus region E21 includes an image row in which the first image frames F11 representing the first surplus images B21 are arranged. The first surplus image B21 is the surplus image B2 by the first print job J1. The first surplus image B21 may include, for example, the first product image A11 and the mark image A3.

The second surplus region E22 is configured with second surplus images B22. The second surplus region E22 includes an image row in which the second image frames F12 representing the second surplus images B22 are arranged. The second surplus image B22 is the surplus image B2 by the second print job J2. The second surplus image B22 may include, for example, the second product image A12 and the mark image A3.

The size of the image frame F1 may be different by the print job. In the example illustrated in FIG. 4, the size of the first image frame F11 is larger than the size of the second image frame F12. Specifically, in the conveyance direction Y1, the length of the first image frame F11 is larger than the length of the second image frame F12. When the size of the image frame F1 is different, the interval between the mark images A3 is different. In one example, the interval between the mark images A3 in the first image frame F11 is larger than the interval between the mark images A3 in the second image frame F12. In the plurality of print jobs, the mark images A3 may be images of the same type or images different in type. The mark images A3 may be any images that can be detected by the processing apparatus 16.

### Processing Apparatus

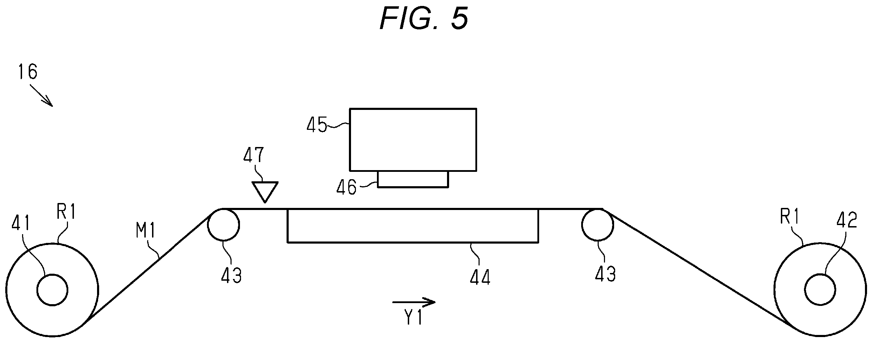

As illustrated in FIG. 5, the processing apparatus 16 may include a supply shaft 41. The supply shaft 41 is configured to feed the medium M1. The roll body R1 is mounted on the supply shaft 41. Specifically, the roll body R1 obtained by winding, in a stacked manner, the medium M on which printing has been performed and on which processing has not been performed is set on the supply shaft 41. When the roll body R1 wound around the winding shaft 28 is set on the supply shaft 41, the leading end and the trailing end of the medium M1 are exchanged between the processing apparatus 16 and the printing apparatus 12. Specifically, in the processing apparatus 16, a portion of the medium M1 that is wound last by the printing apparatus 12 is supplied first by the supply shaft 41. That is, in the medium M1, the end portion which is the trailing end in the printing apparatus 12 turns to the leading end in the processing apparatus 16. The processing apparatus 16 may be configured to directly receive the medium M1 from the printing apparatus 12. That is, the processing apparatus 16 may be configured to process the medium M1 in line with respect to the printing apparatus 12. In this case, the leading end and the trailing end of the medium M1 are not exchanged between the printing apparatus 12 and the processing apparatus 16.

The processing apparatus 16 includes a collection shaft 42. The collection shaft 42 is configured to wind the medium M1. By the collection shaft 42 winding the medium M1, the roll body R1 is formed on the collection shaft 42. That is, the collection shaft 42 forms the roll body R1 obtained by winding, in a stacked manner, the medium M1 processed.

The processing apparatus 16 includes a conveyance mechanism 43. The conveyance mechanism 43 is configured to convey the medium M1. The conveyance mechanism 43 conveys the medium M1 from the supply shaft 41 toward the collection shaft 42. The conveyance mechanism 43 includes, for example, one or more rollers. The conveyance mechanism 43 rotates to thereby convey the medium M1. The conveyance mechanism 43 intermittently conveys the medium M1.

The processing apparatus 16 includes a processing table 44. The processing table 44 is configured to support the medium M1. The processing table 44 is located, for example, between the supply shaft 41 and the collection shaft 42. In one example, the processing table 44 supports a portion in processing out of the medium M1.

The processing apparatus 16 includes a processing unit 45. The processing unit 45 is configured to process the medium M1. The processing unit 45 processes the medium M1 by making a cut in the medium M1. The processing unit 45 is opposed to the processing table 44. The processing unit 45 is configured to move up and down with respect to the processing table 44. The processing unit 45 includes a processing blade 46. The processing unit 45 presses the processing blade 46 against the medium M1 to thereby process the medium M1. The processing unit 45 comes closer to the medium M1 to thereby press the processing blade 46 against the medium M1. Accordingly, the processing unit 45 makes a cut in the medium M1.

The processing apparatus 16 includes a detector 47. The detector 47 is configured to detect the mark image A3. The detector 47 is, for example, a monochrome sensor. The detector 47 may be located at a position deviated from the processing unit 45 in the conveyance direction Y1. In one example, the detector 47 is located upstream of the processing unit 45 in the conveyance direction Y1. The conveyance direction Y1 is a direction from the supply shaft 41 toward the collection shaft 42 in the processing apparatus 16. The detector 47 may be located downstream of the processing unit 45 in the conveyance direction Y1. The detector 47 is not required to be deviated from the processing unit 45 in the conveyance direction Y1.

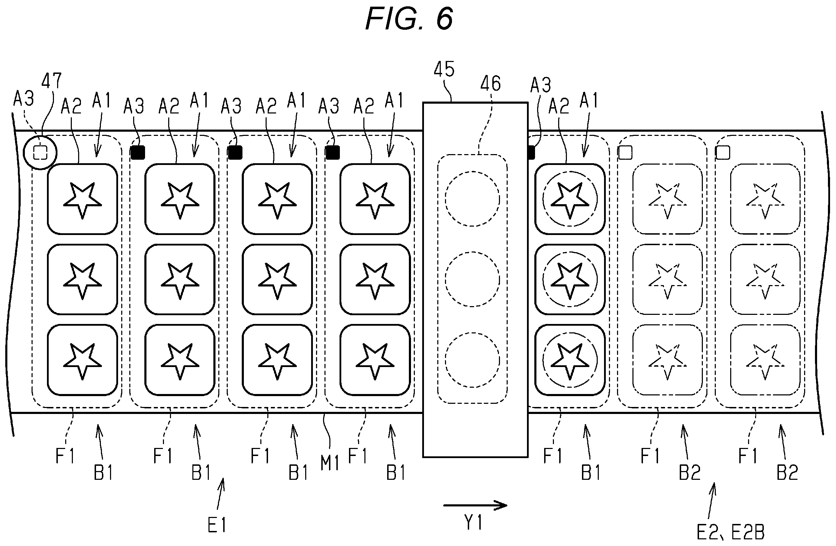

As illustrated in FIG. 6, the processing apparatus 16 operates to process the medium M1 with the processing unit 45 when the detector 47 detects the mark image A3. The processing apparatus 16 operates to process the medium M1 every time the detector 47 detects the mark image A3. Specifically, when the detector 47 detects the mark image A3, the processing apparatus 16 stops the conveyance of the medium M1. After stopping the conveyance of the medium M1, the processing apparatus 16 presses the processing blade 46 against the medium M1. A circular dashed dotted line shown in FIG. 6 is the cut by the processing blade 46. In the example illustrated in FIG. 6, the processing blade 46 is a blade that makes a circular cut in three product icons A2 constituting one product image A1. After separating the processing blade 46 from the medium M1, the processing apparatus 16 resumes the conveyance of the medium M1. The processing apparatus 16 processes the plurality of product images A1 one after another by repeating the operation described above. In this way, the processing apparatus 16 is configured to process the medium M1 for each product image A1. The processing apparatus 16 can make a cut in the medium M1 in another shape such as a triangle or a rectangle by replacing the processing blade 46. The processing apparatus 16 is configured to be able to adjust the position of the processing blade 46 so that the processing blade 46 can appropriately perform the processing with respect to the product image A1 at the position where the detector 47 detects the mark image A3. Alternatively, the processing blade 46 may appropriately perform the processing with respect to the product image A1 by stopping the conveyance after the medium M1 is conveyed by a predetermined distance after the detector 47 detects the mark image A3.

The processing apparatus 16 needs to process the product image A1 located in the target region E1. Therefore, when the processing unit 45 and the detector 47 are shifted from each other in the conveyance direction Y1, the mark image A3 may be required in the surplus region E2 in some cases. For example, the processing apparatus 16 may process the product image A1 in the target region E1 in some cases by detecting the mark image A3 in the lead-in region E2A. The processing apparatus 16 may process the product image A1 in the target region E1 by detecting the mark image A3 in the lead-out region E2B.

The processing apparatus 16 may process the surplus region E2. When the processing unit 45 and the detector 47 are shifted from each other in the conveyance direction Y1, the processing apparatus 16 may perform processing with respect to the surplus region E2 in some cases by detecting the mark image A3 located in the target region E1. For example, the processing apparatus 16 may process the lead-out region E2B in some cases by detecting the mark image A3 in the target region E1. The processing apparatus 16 may process the lead-in region E2A by detecting the mark image A3 in the target region E1. The operator of the processing apparatus 16 may adjust the position of the processing blade 46 by checking the processing on the surplus region E2.

Depending on the procedure of printing and processing on the medium M1, the position of the lead-in region E2A and the position of the lead-out region E2B with respect to the target region E1 are exchanged. For example, when the roll body R1 wound around the winding shaft 28 is set on the supply shaft 41, the lead-in region E2A is located upstream of the target region E1 in the processing apparatus 16. In this case, the lead-out region E2B is located downstream of the target region E1. When printing and processing are performed on the medium M1 in line, the lead-in region E2A is located downstream of the target region E1 in the processing apparatus 16. In this case, the lead-out region E2B is located upstream of the target region E1.

The processing apparatus 16 is configured so that the detection interval of the mark image A3 can be set. The operator of the processing apparatus 16 sets the detection interval by operating the processing apparatus 16. The detection interval is a threshold. When the detector 47 does not detect the mark image A3 even though the medium M1 is conveyed by the distance represented by the detection interval thus set, the processing apparatus 16 stops as an error. Therefore, the operator appropriately sets the detection interval in the processing apparatus 16 based on an interval between the mark images A3 printed on the medium M1. The processing apparatus 16 also stops when, for example, the power switch is operated.

The processing apparatus 16 may include a slicer for cutting, into strips, the medium M1 having been processed. The medium M1 thus cut into strips may be independently wound by the collection shaft 42. The processing apparatus 16 may include a peeling mechanism that peels off the label from the mount. The peeling mechanism peels off the label from the mount so as to leave a portion surrounded by the cut by the processing blade 46. Accordingly, the medium M1 is wound in a state where a part or whole of the product image A1 remains.

The operator of the processing apparatus 16 sets the processing apparatus 16 in accordance with the print job printed on the roll body R1. For example, the operator replaces the processing blade 46 in accordance with the product image A1 or changes the detection interval in accordance with the interval between the mark images A3. Therefore, when information related to printing, processing, and so on is printed on the roll body R1, time and effort required for setting the processing apparatus 16 are reduced. For example, when information related to printing, processing, and so on is printed in the surplus region E2, the time and effort for the processing are reduced.

In the processing apparatus 16, the position of the processing blade 46 may shift as the medium M1 is processed. For example, the operator of the processing apparatus 16 adjusts the position of the processing blade 46 every time the processing apparatus 16 processes a certain number of product images A1. Therefore, by automatically stopping the processing apparatus 16 when the position adjustment of the processing blade 46 is required, the time and effort for the processing are reduced.

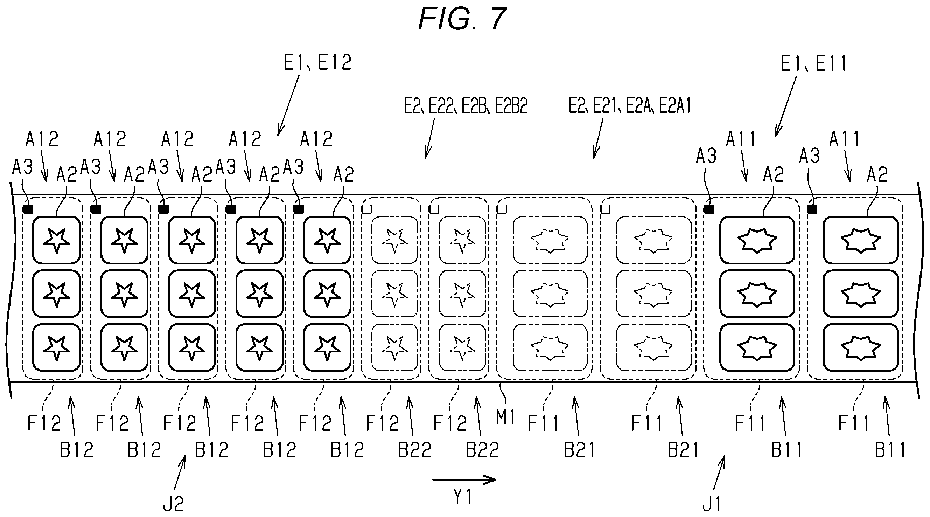

As illustrated in FIG. 7, a plurality of print jobs, that is, a plurality of types of product images A1 may be printed on the roll body R1 in some cases. For example, the first print job J1 and the second print job J2 may be executed on the roll body R1 in some cases. That is, the first product image A11 and the second product image A12 may be printed on the roll body R1 in some cases. In this case, it results in that the processing apparatus 16 continuously processes the plurality of types of product images A1. In the example illustrated in FIG. 7, the processing apparatus 16 processes the first product image A11 and then processes the second product image A12. The processing apparatus 16 may process the second product image A12 and the first product image A11 in this order.

In the processing apparatus 16, the processing settings may be different by print job in some cases. For example, the processing blade 46 used on the first product image A11 may be different from the processing blade 46 used on the second product image A12 in some cases. For example, the interval between the mark images A3 in the first print job J1 may be different from the interval between the mark images A3 in the second print job J2 in some cases. Therefore, in the processing apparatus 16, necessity of replacing the processing blade 46 or changing the detection interval of the mark image A3 for each print job in some cases.

The operator replaces the processing blade 46 or changes the detection interval of the mark image A3 in a state where the processing apparatus 16 is stopped. Therefore, by the processing apparatus 16 is automatically stopped when the replacement of the processing blade 46, the change in the detection interval, or the like is required, the time and effort for the processing are reduced. For example, when the processing apparatus 16 is automatically stopped between the print jobs, the time and effort for the processing are reduced. Specifically, when the processing apparatus 16 stops at a timing at which the processing unit 45 overlaps the surplus region E2 such as the first surplus region E21 or the second surplus region E22, the time and effort for the processing are reduced.

In the processing apparatus 16, processing settings may be the same for a plurality of print jobs in some cases. For example, the processing blade 46 used for processing the first product image A11 and the processing blade 46 used for processing the second product image A12 may be the same in some cases. For example, the interval between the mark images A3 in the first print job J1 and the interval between the mark images A3 in the second print job J2 may be the same in some cases. That is, in the processing apparatus 16, it may be unnecessary to replace the processing blade 46 or change the detection interval of the mark image A3 for each print job in some cases. In such a case, by the processing apparatus 16 continuously operating without being stopped, the time and effort for the processing are reduced.

### Terminal Apparatus

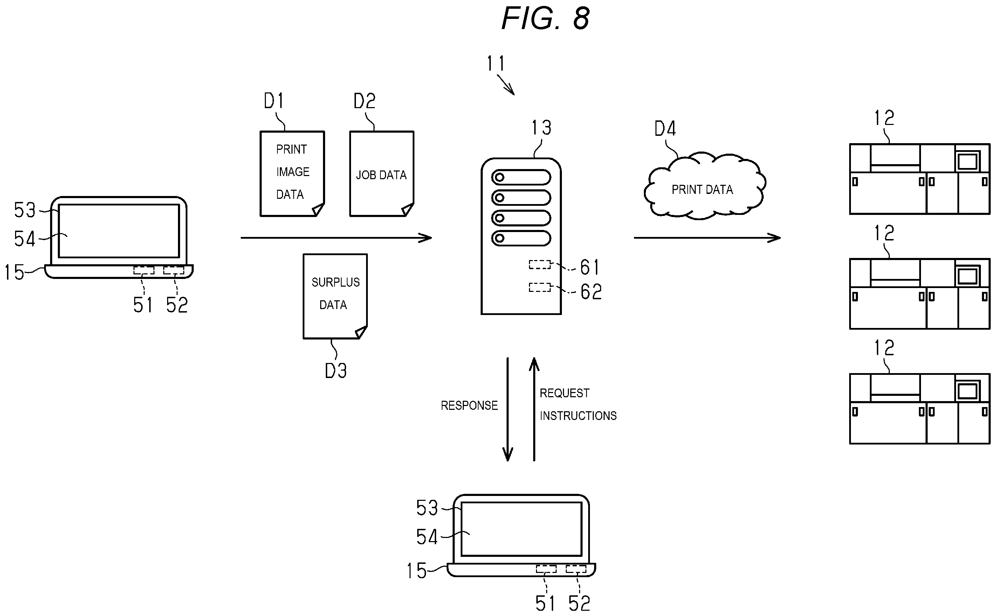

As illustrated in FIG. 8, the terminal apparatus 15 is the same in hardware configuration as the processing terminal 21. The terminal apparatus 15 includes a controller and a storage unit. Specifically, the terminal apparatus 15 includes a terminal controller 51 and a terminal storage unit 52. In this way, the terminal apparatus 15 is realized by a computer.

The terminal apparatus 15 includes a display unit. Specifically, the terminal apparatus 15 includes a terminal display unit 53. The terminal display unit 53 is configured to display information related to the printing system 11. The terminal display unit 53 may display, for example, a screen provided from the printing system 11.

The terminal apparatus 15 includes an operation unit. Specifically, the terminal apparatus 15 includes a terminal operation unit 54. The user operates the terminal operation unit 54 to thereby operate the terminal apparatus 15. The user gives instructions and data to the printing system 11 through the terminal operation unit 54.

The terminal apparatus 15 is configured to transmit the print job to the printing system 11. The terminal apparatus 15 is configured to, for example, transmit the print job to the information processing apparatus 13. The user uploads the print job from the terminal apparatus 15 to the information processing apparatus 13. The user stores the print job in the information processing apparatus 13.

The print job includes print image data D1. Therefore, the terminal apparatus 15 is configured to transmit the print image data D1 to the printing system 11. For example, the terminal apparatus 15 is configured to transmit the print image data D1 to the information processing apparatus 13. The print image data D1 is data representing an image to be printed on the medium M1. Specifically, the print job includes a print image file. The print image file includes the print image data D1. The print image file is, for example, a portable document format (PDF) file.

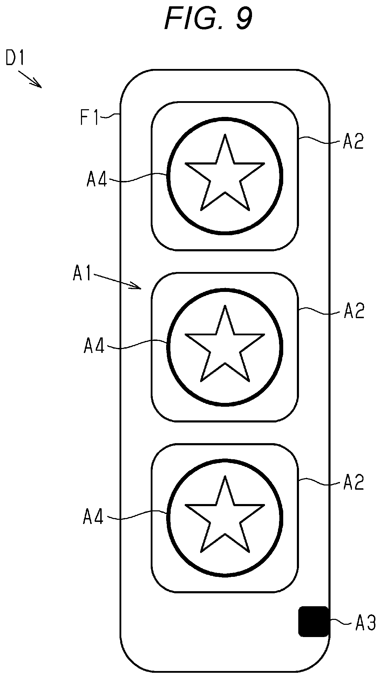

As illustrated in FIG. 9, the print image data D1 includes one or more image frames F1. In the print image data D1, the image frame F1 represents an image corresponding to one sheet to be rasterized by the printing apparatus 12. Therefore, the printing apparatus 12 prints an image on the medium M1 by the image frame F1 based on the print image data D1.

The print image data D1 includes a product image A1. That is, the print image data D1 includes product image data representing the product image A1. The product image A1 is drawn in the image frame F1.

The print image data D1 includes the mark image A3. That is, the print image data D1 includes mark image data representing the mark image A3. The mark image A3 is drawn in the image frame F1.

The print image data D1 may include a pattern image A4. The pattern image A4 is an image showing a processing pattern to the product image A1. In one example, the pattern image A4 is an image showing a position of the cut to the product image A1. The pattern image A4 is, for example, an image showing a frame line. The print image data D1 may include pattern image data representing the pattern image A4. The pattern image A4 is drawn in the image frame F1.

The print image data D1 may be generated by the terminal apparatus 15. In the terminal apparatus 15, the print image data D1 may be generated by, for example, image editing software for editing an image, or uploading software for transmitting the print job to the information processing apparatus 13. By the product icons A2 being arranged, that is, so-called "imposed" by the software of the terminal apparatus 15, the product image A1 may be formed. By the product image A1, the mark image A3, and the pattern image A4 being arranged by the software of the terminal apparatus 15, the print image data D1 may be generated.

The print image data D1 may be data including a plurality of identifiers respectively associated with a plurality of images. The print image data D1 may be data in which an identifier is attached to an image drawn in the image frame F1. The print image data D1 may be data from which an image can be extracted based on an identifier. That is, the print image data D1 may be data with which the product image A1, the mark image A3, and the pattern image A4 can independently be handled of each other. In this case, a degree of freedom of image processing is improved in the printing apparatus 12. That is, the printing apparatus 12 can acquire various types of image data from the print image data D1. For example, the printing apparatus 12 can acquire the image data including the mark image A3. The printing apparatus 12 can acquire the image data that does not include the mark image A3. The printing apparatus 12 can print an image including the mark image A3, an image that does not include the mark image A3, and so on by the image frame F1. In addition, the printing apparatus 12 can acquire the image data including the product image A1, the image data that does not include the product image A1, the image data including the pattern image A4, the image data that does not include the pattern image A4, and so on.

The print image data D1 may be data with which the product image A1, the mark image A3, and the pattern image A4 can independently be handled of each other with objects. In this case, the objects function as the identifiers. Each of the product image A1, the mark image A3, and the pattern image A4 is drawn by the object. For example, the product image A1 is drawn with a plurality of objects representing the product icons A2. In the example illustrated in FIG. 9, the product icon A2 is drawn with a background object and a star object. The mark image A3 is drawn with a mark object. The pattern image A4 is drawn with a frame object. Therefore, the printing apparatus 12 can extract the product image A1, the mark image A3, and the pattern image A4 from the print image data D1, based on the objects. In this way, in the print image data D1, it is possible to independently handle the images by object.

The object is associated with a color. The object is associated with, for example, a process color. In one example, the object is associated with a color that can be expressed by C, M, Y, and K. The object is printed with the process color associated therewith.

A spot color may be set in the print image data D1. The spot color may be associated with the object. For example, the spot color may be associated with the mark object constituting the mark image A3. The spot color may be associated with the frame object constituting the pattern image A4. That is, the mark image A3 may be an image drawn with the spot color. The pattern image A4 may be an image drawn with the spot color. The spot colors different from each other may be associated with the pattern image A4 and the mark image A3. In the print image data D1, the spot color may be set as a color that cannot be expressed by C, M, Y, and K, or may be set as a color that is not used in the product image A1 among colors that can be expressed by C, M, Y, and K.

The printing apparatus 12 can identify the mark object constituting the mark image A3 and the frame object constituting the pattern image A4 in the print image data D1 based on the spot colors. This is because the printing apparatus 12 rasterizes the image associated with the spot color separately from the image associated with the process color with respect to the print image data D1. Therefore, in such print image data D1, the image drawn with the process color and the image drawn with the spot color can be handled independently of each other. Therefore, based on the spot color, the printing apparatus 12 can extract the mark image A3 or can extract the pattern image A4. For example, the printing apparatus 12 can acquire the image data including the mark image A3, the image data that does not include the mark image A3, the image data including the pattern image A4, the image data that does not include the pattern image A4, and so on.

The spot color may be converted into a print color in the printing apparatus 12. The print color is a color that can be printed by the printing apparatus 12. For example, the printing apparatus 12 may convert the spot color into the process color based on conversion information representing the print color associated with the spot color. In this case, the printing apparatus 12 can print the object drawn with the spot color. The printing apparatus 12 can print the image including the mark image A3, the pattern image A4, and the like by the image frame F1.

In the print image data D1, a name may be provided to the spot color. For example, a name representing that the spot color associated with the mark object is a color for drawing the mark image A3 may be provided to that spot color. A name representing that the spot color associated with the frame object is a color for drawing the pattern image A4 may be provided to that spot color. The printing apparatus 12 may identify the mark object constituting the mark image A3, the frame object constituting the pattern image A4, and so on based on a character string contained in the name provided to the spot color.

The print image data D1 may be data drawn with a plurality of layers. For example, the product image A1 and the mark image A3 may be images drawn in respective layers different from each other. In one example, the print image data D1 includes a first layer, a second layer, and a third layer. The first layer is a layer in which the product image A1 is drawn. The second layer is a layer in which the mark image A3 is drawn. The third layer is a layer in which the pattern image A4 is drawn. In such print image data D1, the product image A1, the mark image A3, and the pattern image A4 can be independently handled with the respective layers.

In the print image data D1, names may be provided to the layers. Specifically, a name representing an image to be drawn in a layer may be provided to that layer. For example, a name representing that the first layer is a layer in which the product image A1 is drawn may be provided to the first layer. A name representing that the second layer is a layer in which the mark image A3 is drawn may be provided to the second layer. A name representing that the third layer is a layer in which the pattern image A4 is drawn may be provided to the third layer. The printing apparatus 12 may identify the layer in which the pattern image A4 is drawn, the layer in which the mark image A3 is drawn, and so on based on a character string contained in the name provided to the layer.

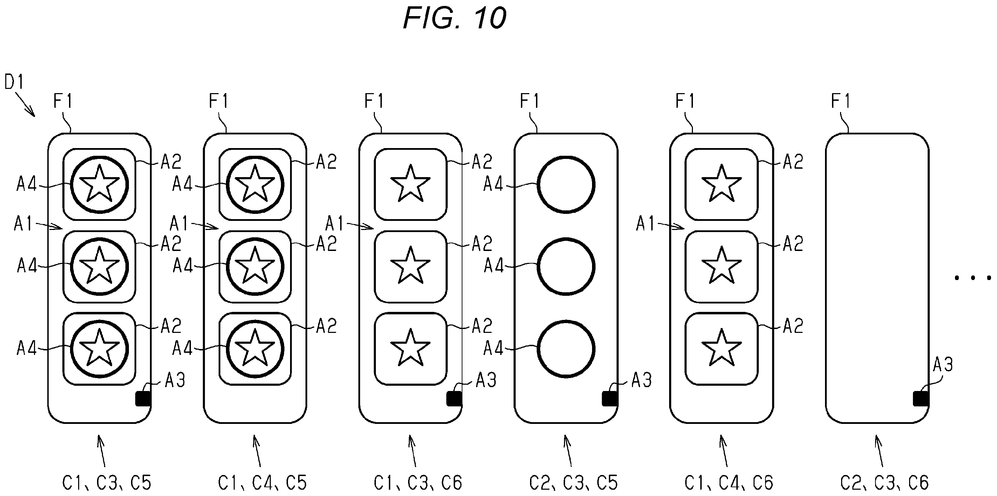

As illustrated in FIG. 10, the print image data D1 may be data including a plurality of image frames F1. Specifically, the print image data D1 may include a plurality of image frames F1 different in combination of the product image A1, the mark image A3, and the pattern image A4. The print image data D1 may include a plurality of image frames F1 representing differences due to the combination of the product image A1, the mark image A3, and the pattern image A4. The print image data D1 may include, for example, the image frame F1 representing an image including the product image A1 and the image frame F1 representing an image that does not include the product image A1. The print image data D1 may include, for example, the image frame F1 representing an image including the mark image A3 and the image frame F1 representing an image that does not include the mark image A3. The print image data D1 may include, for example, the image frame F1 representing an image including the pattern image A4 and the image frame F1 representing an image that does not include the pattern image A4. That is, the print image data D1 may include product-present image data representing a product-present image C1 including the product image A1. The print image data D1 may include product-absent image data representing a product-absent image C2 that does not include the product image A1. The print image data D1 may include mark-present image data representing a mark-present image C3 including the mark image A3. The print image data D1 may include mark-absent image data representing a mark-absent image C4 that does not include the mark image A3. The print image data D1 may include pattern-present image data representing a pattern-present image C5 including the pattern image A4. The print image data D1 may include pattern-absent image data representing a pattern-absent image C6 that does not include the pattern image A4.

The print image data D1 may include an identifier representing a type of the image contained in each of the plurality of image frames F1. The printing apparatus 12 can acquire various image data from the print image data D1 based on the identifier. The printing apparatus 12 can acquire the product-present image data, the product-absent image data, the mark-present image data, the mark-absent image data, the pattern-present image data, the pattern-absent image data, and so on based on the identifier. Therefore, the printing apparatus 12 can print the product-present image C1, the product-absent image C2, the mark-present image C3, the mark-absent image C4, the pattern-present image C5, the pattern-absent image C6, and so on by the image frame F1. Similarly, regarding the print image data D1 illustrated in FIG. 9, the printing apparatus 12 can print the product-present image C1, the product-absent image C2, the mark-present image C3, the mark-absent image C4, the pattern-present image C5, the pattern-absent image C6, and so on by the image frame F1.

The print image data D1 includes target image data and surplus image data. The target image data is an image representing the target image B1. The target image data is image data used for the target region E1 out of image data acquired from the print image data D1. The target image B1 is an image used in the target region E1 out of the product-present image C1, the product-absent image C2, the mark-present image C3, the mark-absent image C4, the pattern-present image C5, the pattern-absent image C6, and so on. The surplus image data is an image representing the surplus image B2. The surplus image data is image data used for the surplus region E2 out of the image data acquired from the print image data D1. The surplus image B2 is an image used in the surplus region E2 out of the product-present image C1, the product-absent image C2, the mark-present image C3, the mark-absent image C4, the pattern-present image C5, the pattern-absent image C6, and so on.

The target image B1 and the surplus image B2 are the same in size as each other. The image frame F1 representing the target image B1 and the image frame F1 representing the surplus image B2 are the same in size as each other. The size of the image frame F1 depends on the print image data D1. The images represented by the image data acquired from the print image data D1 are all the same in size. The product-present image C1, the product-absent image C2, the mark-present image C3, the mark-absent image C4, the pattern-present image C5, and the pattern-absent image C6, and so on are all the same in size.

As illustrated in FIG. 8, the terminal apparatus 15 is configured to transmit job data D2 to the printing system 11. For example, the terminal apparatus 15 is configured to transmit the job data D2 to the information processing apparatus 13. The job data D2 is data related to printing. The job data D2 includes data related to printing, processing, and the like. The job data D2 is contained in the print job. Specifically, the print job includes a job ticket. The job ticket includes the job data D2. The job ticket is, for example, a job definition format (JDF) file. The printing apparatus 12 prints the image represented by the print image data D1 on the medium M1 based on the job data D2.

The job data D2 may be generated by the terminal apparatus 15. In the terminal apparatus 15, for example, the job ticket may be generated by JDF formation software. The terminal apparatus 15 may generate the job ticket based on information provided from the user with the JDF formation software.

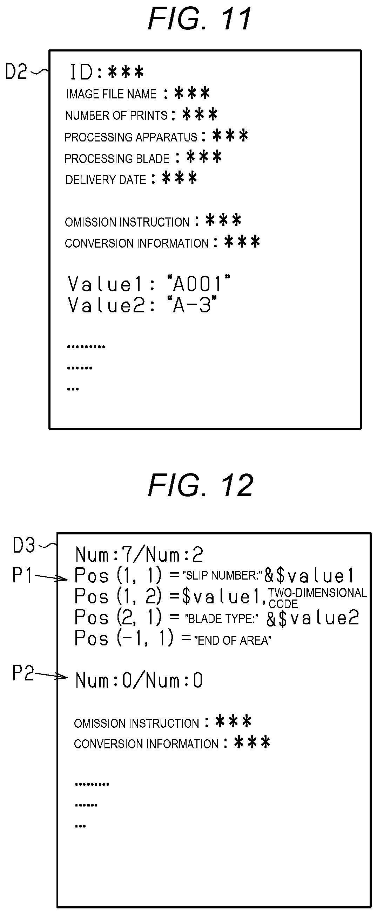

As illustrated in FIG. 11, the job data D2 includes information related to printing and processing. The job data D2 may include information for designating the processing apparatus 16 that processes the medium M1 after printing. The job data D2 may include information for designating the processing blade 46 for processing the medium M1 after printing. In one example, the job data D2 includes information such as an ID of the print job, a name of the image file to be used, the number of prints to be delivered, the processing apparatus 16 to be used, the processing blade 46 to be used, and the delivery date. The job data D2 may include an omission instruction to omit the mark image A3, conversion information representing a print color associated with the spot color, and the like. The job data D2 may include arguments such as Valuel and Value2.

As illustrated in FIG. 8, the terminal apparatus 15 may be configured to transmit surplus data D3 to the printing system 11. For example, the terminal apparatus 15 may be configured to transmit the surplus data D3 to the information processing apparatus 13. The user may upload the surplus data D3 from the terminal apparatus 15 to the information processing apparatus 13. The user stores the surplus data D3 in the information processing apparatus 13.

The surplus data D3 is data related to the surplus region E2. The surplus data D3 includes, for example, data related to the layout of the surplus region E2. The surplus data D3 is, for example, data contained in a layout file. The layout file is a file in which the setting of the surplus region E2 is described. In one example, the user transmits the layout file from the terminal apparatus 15 to the information processing apparatus 13. The user stores the layout file in the information processing apparatus 13.

As illustrated in FIG. 12, the surplus data D3 includes various types of information. The surplus data D3 may include information related to the length of the surplus region E2. The surplus data D3 may include, for example, a designation value that designates the length of the surplus region E2. In one example, the designation value is a value that designates the number of surplus images B2.

In the example illustrated in FIG. 12, the designation value is information in a first row. The designation value represents that a space of 7 columns and 2 rows is provided in the surplus region E2. That is, the designation value designates the number of surplus images B2 as 7. In this case, the designation value represents that 7 image frames F1 constitute the surplus region E2. The designation value may represent that a space is provided in the image frame F1. In one example, the designation value represents that the space of 2 rows is provided in the image frame F1. The designation value is not limited to designating the length of the surplus region E2 with the number of surplus images B2, and may designate the length of the surplus region E2 with the distance of the surplus region E2. The designation value may designate, for example, the length of the surplus region E2 in meters.

The surplus data D3 may include information described in the surplus region E2. In the example illustrated in FIG. 12, information in second to fifth rows represents position information of spaces and information to be described in those spaces. For example, the information in the second row represents that a text of SLIP NUMBER and a value of Valuel described in the JDF file are described in the space in the first column and the first row. The information in the third row represents that the value of Valuel described in the JDF file is described in a two-dimensional code in the space in the first column and the second row. The information in the fourth row represents that a text of BLADE TYPE and a value of Value2 described in the JDF file are described in the space in the second column and the first row. The information in the fifth row represents that a text of END OF AREA is described in the space in a first column from the last column and the first row.

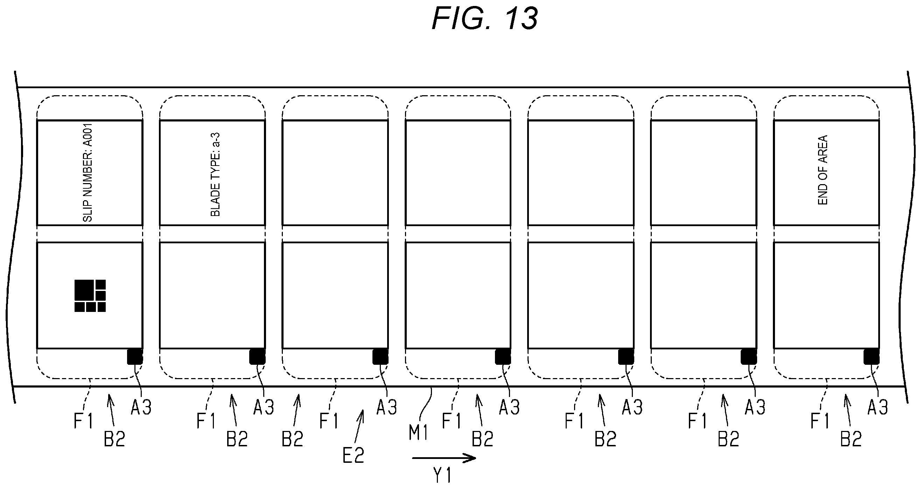

According to the surplus data D3 illustrated in FIG. 12, the surplus region E2 illustrated in FIG. 13 is printed. The printing apparatus 12 prints the information contained in the surplus data D3 in the surplus region E2 by combining the surplus data D3 with the print image data D1. That is, the printing apparatus 12 prints the surplus image B2 including the information contained in the surplus data D3 by combining the surplus data D3 with the print image data D1. The printing apparatus 12 prints not only the product image A1, the mark image A3, the pattern image A4, and the like but also the information contained in the surplus data D3 in the surplus region E2. In the surplus region E2, the frame indicating the space may be printed, but is not required to be printed. Whether to print the frame indicating the space may be set by the surplus data D3.

As illustrated in FIG. 12, the surplus data D3 may include not only the information to be printed in the surplus region E2 but also information not to be printed in the surplus region E2. The surplus data D3 may include the omission instruction to omit the mark image A3, the conversion information representing the print color associated with the spot color, and the like.

The surplus data D3 may include information of a plurality of patterns regarding the layout of the surplus region E2. The surplus data D3 may include, for example, a first pattern P1 and a second pattern P2. Based on the surplus data D3, the printing apparatus 12 may print the surplus region E2 in the layout represented by the first pattern P1, or may print the surplus region E2 in the layout represented by the second pattern P2.

The first pattern P1 and the second pattern P2 each represent a designation value. The first pattern P1 represents a first designation value. The second pattern P2 represents a second designation value. The first designation value and the second designation value represent, for example, respective values different from each other. In one example, the second designation value is a value smaller than the first designation value. The second designation value is preferably 0. When the designation value is 0, the surplus region E2 is not formed. In the example illustrated in FIG. 12, as described above, the first designation value represents 7, and the second designation value represents 0. In this case, in the first pattern P1, it is represented that the surplus region E2 is configured with 7 surplus images B2. In the second pattern P2, it is represented that the surplus region E2 is configured with 0 surplus images B2. The first designation value and the second designation value may designate the length of the surplus region E2 with the distance.

### Information Processing Apparatus

As shown in FIG. 8, the information processing apparatus 13 includes a controller and a storage unit. Specifically, the information processing apparatus 13 includes an information controller 61 and an information storage unit 62. In this way, the information processing apparatus 13 is realized by a computer. The information processing apparatus 13 includes one or more servers. The information processing apparatus 13 may be realized by a single server or may be realized by a plurality of servers cooperating with each other.

The information processing apparatus 13 is configured to process information related to the printing apparatus 12. The information processing apparatus 13 receives information from the terminal apparatus 15 and transmits information to the printing apparatus 12. The information controller 61 is configured to receive the information from the terminal apparatus 15. The information controller 61 is configured to transmit the information to the printing apparatus 12.

The information processing apparatus 13 is configured to receive the print job. The information processing apparatus 13 is configured to receive the print image file and the job ticket from the terminal apparatus 15. The information processing apparatus 13 is configured to receive the print image data D1. The information processing apparatus 13 is configured to receive the job data D2.

The information processing apparatus 13 is configured to store the print job. The information processing apparatus 13 stores the print job received from the terminal apparatus 15. That is, the information processing apparatus 13 saves the print job. The information processing apparatus 13 accumulates a plurality of print jobs by saving the print jobs one after another. Therefore, the information storage unit 62 stores the plurality of print jobs.

The information processing apparatus 13 may be configured to receive the surplus data D3. The information processing apparatus 13 may receive the layout file from the terminal apparatus 15. The information processing apparatus 13 may be configured to store the layout file. That is, the information processing apparatus 13 may save the layout file. The information processing apparatus 13 may accumulate a plurality of layout files by saving the layout files one after another. Therefore, the information storage unit 62 stores the plurality of layout files. The information processing apparatus 13 is not limited to receiving the surplus data D3 from the terminal apparatus 15, and may store the surplus data D3 in advance or generate the surplus data D3.

The information processing apparatus 13 is configured to receive a request from the terminal apparatus 15. The information processing apparatus 13 is configured to receive, for example, a request for browsing the print job from the terminal apparatus 15. In one example, the information processing apparatus 13 receives a request for browsing the print job from a browser of the terminal apparatus 15. The terminal apparatus 15 that transmits the browsing request may be the same terminal as the terminal apparatus 15 that has uploaded the print job, or may be a different terminal. The information processing apparatus 13 is configured to respond to the request from the terminal apparatus 15. The information processing apparatus 13 transmits information of the print job related to the user to the terminal apparatus 15 based on, for example, user authentication with an ID and a password.

The information processing apparatus 13 is configured to receive an instruction from the terminal apparatus 15. The information processing apparatus 13 operates based on the instruction received from the terminal apparatus 15. The user provides the instruction to the information processing apparatus 13 to thereby transmit data from the information processing apparatus 13 to the printing apparatus 12.

The information processing apparatus 13 is configured to receive a transmission instruction. Upon reception of the transmission instruction, the information processing apparatus 13 transmits print data D4 to the printing apparatus 12. The transmission instruction is an instruction to transmit the print data D4 from the information processing apparatus 13 to the printing apparatus 12. The print data D4 is data for causing the printing apparatus 12 to perform printing.

The information processing apparatus 13 is configured to receive a target print instruction. The target print instruction is an instruction to cause the printing apparatus 12 to print the target region E1. The target print instruction is an instruction including the setting of the target region E1. The target region E1 is set by the print job. That is, the setting of the target region E1 is contained in the print job. Specifically, the setting of the target region E1 is contained in the job data D2.

The target print instruction includes an instruction representing a print job to be transmitted from the information processing apparatus 13 to the printing apparatus 12. The target print instruction includes, for example, an instruction representing one or more print jobs selected from the plurality of print jobs accumulated in the information processing apparatus 13. The information processing apparatus 13 receives the target print instruction by receiving selection of one or more print jobs from the plurality of print jobs.

The information processing apparatus 13 may be configured to receive a surplus print instruction. The surplus print instruction is an instruction to cause the printing apparatus 12 to print the surplus region E2. The surplus print instruction is an instruction including the setting of the surplus region E2. The surplus region E2 is set by the surplus data D3. That is, the setting of the surplus region E2 is contained in the surplus data D3.

The surplus print instruction includes an instruction representing the surplus data D3 transmitted from the information processing apparatus 13 to the printing apparatus 12. The surplus print instruction includes, for example, an instruction representing one or more layout files selected from the plurality of layout files accumulated in the information processing apparatus 13. The information processing apparatus 13 receives the surplus print instruction by receiving selection of one or more layout files from the plurality of layout files.

The surplus print instruction may include not only the selection of the layout file but also an instruction to cause the information processing apparatus 13 to generate the surplus data D3. The information processing apparatus 13 may generate the surplus data D3 based on the setting of the surplus region E2 contained in the surplus print instruction. The information processing apparatus 13 may generate the surplus data D3 including the surplus print instruction. The information processing apparatus 13 may receive the surplus print instruction by receiving an instruction to generate the surplus data D3.

The information processing apparatus 13 may be configured to receive an omission instruction. The omission instruction is an instruction to cause the printing apparatus 12 to omit the mark image A3. The omission instruction includes an instruction representing an omission position of the mark image A3. The omission instruction may be contained in, for example, the target print instruction. The omission instruction may be contained in the print job. The omission instruction may be contained in the job data D2. The omission instruction may be contained in, for example, the surplus print instruction. The omission instruction may be contained in the layout file. The omission instruction may be contained in the surplus data D3.

The omission instruction may include an instruction representing the image frame F1 in which the mark image A3 is omitted out of the plurality of image frames F1 constituting the image row. The omission instruction may include an instruction representing the image frame F1 in which the mark image A3 is omitted out of the plurality of image frames F1 constituting the target region E1. The omission instruction may include an instruction representing the image frame F1 in which the mark image A3 is omitted out of the plurality of image frames F1 constituting the surplus region E2.

The omission instruction may include an instruction to provide a region where the image frame F1 is not printed in the image row including the plurality of image frames F1. The omission instruction may include an instruction to provide a region where the image frame F1 is not printed in the target region E1. The omission instruction may include an instruction to provide a region where the image frame F1 is not printed in the surplus region E2. The omission instruction may include an instruction to provide an area not to be printed between the target region E1 and the surplus region E2.

The information processing apparatus 13 may receive the omission instruction by receiving selection of the print job. The information processing apparatus 13 may receive the omission instruction by receiving selection of the layout file. The information processing apparatus 13 may receive the omission instruction by receiving an instruction to generate the surplus data D3.

The print data D4 includes the print job. The print data D4 includes the print image data D1 and the job data D2. The print data D4 includes one or more print jobs selected from a plurality of print jobs stored in the information processing apparatus 13. That is, the information processing apparatus 13 transmits the print data D4 including one or more print jobs out of the plurality of print jobs to the printing apparatus 12 by receiving an instruction from the user.

The print data D4 may include the surplus data D3. The print data D4 may include, for example, one or more layout files selected from the plurality of layout files stored in the information processing apparatus 13. That is, the information processing apparatus 13 may transmit the print data D4 including one or more layout files out of the plurality of layout files to the printing apparatus 12 by receiving an instruction from the user. The print data D4 may include not only the layout file but also the surplus data D3 generated by the information processing apparatus 13. The print data D4 may include the surplus data D3 based on the surplus print instruction.

The print data D4 may include omission data. The omission data is data based on the omission instruction. The omission data may be contained in the job data D2 or may be contained in the surplus data D3. The information processing apparatus 13 may generate the omission data based on the omission instruction. The information processing apparatus 13 may transmit the omission data to the printing apparatus 12 together with the print job.

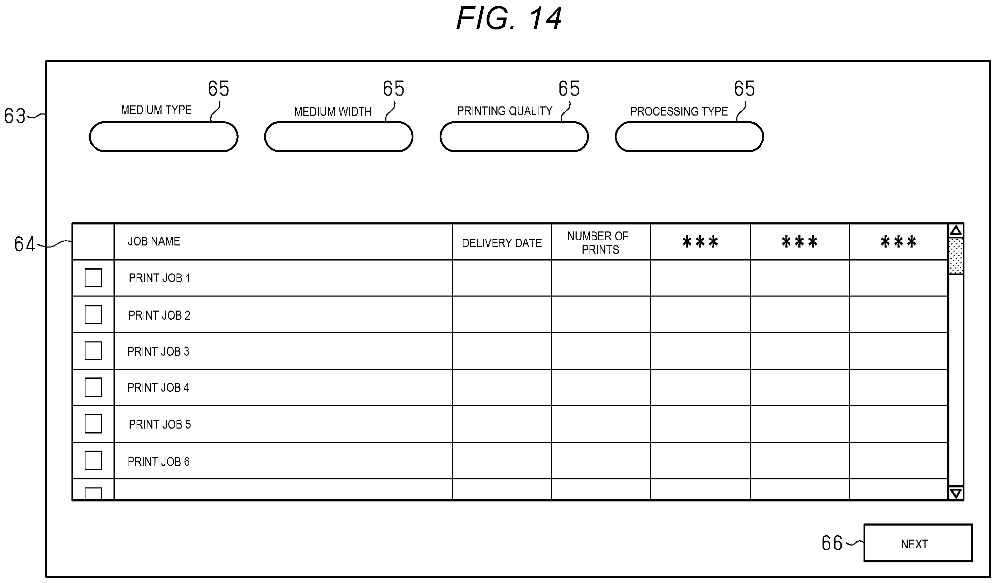

As illustrated in FIG. 14, the information processing apparatus 13 is configured to cause the terminal apparatus 15 to display a list screen 63. Upon reception of the browsing request, the information processing apparatus 13 causes the terminal apparatus 15 to display the list screen 63. The list screen 63 includes a list field 64. A list of the print jobs accumulated in the information processing apparatus 13 is displayed in the list field 64. The print job may be displayed in the list field 64 so that the content of the job data D2 contained in the print job can be confirmed.

The list screen 63 is configured such that one or more print jobs can be selected from the plurality of print jobs displayed in the list field 64. For example, the print job is selected by selecting a check box displayed for each print job.

The information processing apparatus 13 may be configured to accept editing on the print job. Specifically, the information processing apparatus 13 may accept editing on the job data D2. For example, the information processing apparatus 13 may accept editing on the print job to be selected in the list field 64. One or more selection fields 65 may be displayed on the list screen 63. In the selection field 65, for example, items which can be selected by the user are displayed in a list. The user may edit the print job by operating the selection field 65.

A transition button 66 is displayed on the list screen 63. The transition button 66 is a button for making the transition of the screen. When the transition button 66 is operated in a state where the print job is selected on the list screen 63, the information processing apparatus 13 makes the transition of the display of the terminal apparatus 15 from the list screen 63 to another screen.

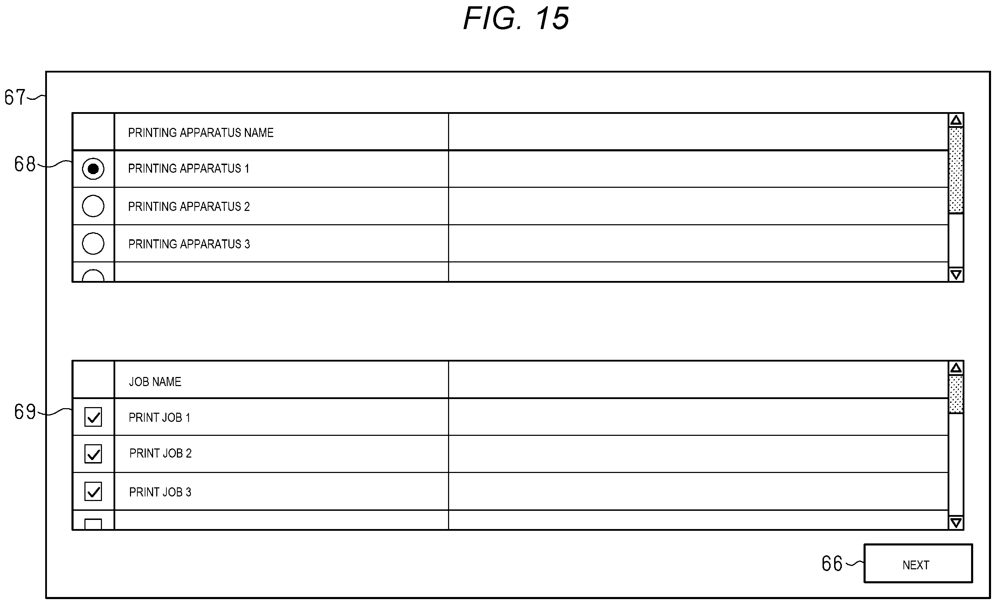

As illustrated in FIG. 15, the information processing apparatus 13 causes the terminal apparatus 15 to display a job setting screen 67. When the transition button 66 is operated in the state where the print job is selected in the list screen 63, the information processing apparatus 13 causes the terminal apparatus 15 to display the job setting screen 67. The job setting screen 67 is a screen on which a transmission destination is set to the print job. The job setting screen 67 is a screen on which the print job is distributed to the printing apparatus 12.

An apparatus list field 68 is displayed on the job setting screen 67. One or more printing apparatuses 12 to which the information processing apparatus 13 can transmit the print job are displayed in the apparatus list field 68. The user selects one printing apparatus 12 to be the transmission destination in the apparatus list field 68. The information processing apparatus 13 receives, through the job setting screen 67, one printing apparatus 12 selected from the plurality of printing apparatuses 12. The information processing apparatus 13 receives, as the transmission destination of the print job, the one printing apparatus 12 selected from the plurality of printing apparatuses 12.

A job list field 69 is displayed on the job setting screen 67. In the job list field 69, one or more print jobs selected on the list screen 63 are displayed. The user selects, from the job list field 69, one or more print jobs to be executed in a rump. The information processing apparatus 13 receives, through the job setting screen 67, one or more print jobs selected from the plurality of print jobs.

The transition button 66 is displayed on the job setting screen 67. When the transition button 66 is operated in a state where both the apparatus list field 68 and the job list field 69 are selected, the information processing apparatus 13 makes the transition of the display of the terminal apparatus 15 from the job setting screen 67 to another screen. In one example, the information processing apparatus 13 receives the target print instruction by receiving the operation of the transition button 66 in the job setting screen 67.

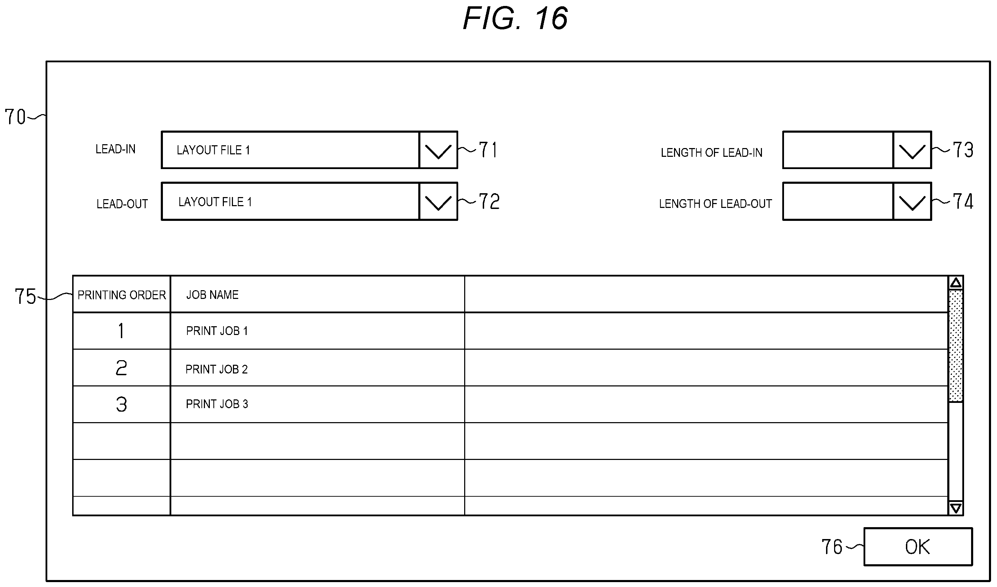

As illustrated in FIG. 16, the information processing apparatus 13 causes the terminal apparatus 15 to display a surplus setting screen 70. When the transition button 66 is operated in the job setting screen 67, the information processing apparatus 13 causes the terminal apparatus 15 to display the surplus setting screen 70. The surplus setting screen 70 is a screen for setting the surplus region E2 to the print job. The surplus setting screen 70 is a screen for attaching the surplus region E2 to the print job. The surplus setting screen 70 is a screen for associating the surplus data D3 with the print job. The surplus setting screen 70 is a screen for associating the layout file with the print job. The surplus setting screen 70 is a screen for setting the surplus region E2 to the target region E1 by the print job. The setting of the surplus region E2 received on the surplus setting screen 70 is applied to all the print jobs received on the job setting screen 67.

One or more setting fields are displayed on the surplus setting screen 70. In one example, a lead-in setting field 71 and a lead-out setting field 72 are displayed on the surplus setting screen 70. The lead-in setting field 71 is a field for performing setting with respect to the lead-in region E2A. The lead-out setting field 72 is a field for performing setting with respect to the lead-out region E2B. In the setting field, one or more layout files accumulated in the information processing apparatus 13 are displayed. The user selects, from the setting field, a layout file to be applied. The layout file thus selected is applied to all the print jobs received on the job setting screen 67. The surplus setting screen 70 may be configured to receive the layout file by the print job. The surplus setting screen 70 may be configured to individually receive the setting of the surplus region E2 by the print job.

The layout file may be automatically selected on the surplus setting screen 70. The layout file may be associated with one of the plurality of processing apparatuses 16. The information processing apparatus 13 may select the layout file based on the print job. For example, the information processing apparatus 13 identifies the processing apparatus 16 designated by the print job selected. That is, the information processing apparatus 13 identifies, from the print job, information designating the processing apparatus 16 that processes the medium M1. The information processing apparatus 13 may select one layout file from the plurality of layout files so that the processing apparatus 16 designated by the print job matches the processing apparatus 16 associated with the layout file. The information processing apparatus 13 may select one layout file from the plurality of layout files for the lead-in setting field 71. The information processing apparatus 13 may select one layout file from the plurality of layout files for the lead-out setting field 72.

The layout file may be associated with the lead-in region E2A or the lead-out region E2B. The layout file to be associated with the lead-in region E2A may be selectable in the lead-in setting field 71. The layout file to be associated with the lead-out region E2B may be selectable in the lead-out setting field 72.

The information processing apparatus 13 may determine the number of surplus images B2 based on the length of the surplus region E2 designated by the layout file thus selected. The information processing apparatus 13 may calculate the number of surplus images B2 such that the surplus region E2 is printed with a length designated by the layout file. For example, the information processing apparatus 13 may determine a quotient obtained by dividing the length of the surplus region E2 represented by the layout file by the length of the image frame F1 as the number of surplus images B2 constituting the surplus region E2. For example, the information processing apparatus 13 may determine the number of surplus images B2 constituting the surplus region E2 by adding 1 to the quotient obtained by dividing the length of the surplus region E2 represented by the layout file by the length of the image frame F1. In this case, the surplus region E2 is printed with a length equal to or longer than the length designated by the layout file. The information processing apparatus 13 calculates the quotient by dividing the length designated by the layout file based on the image frame F1 represented by the print image data D1 contained in the print job selected on the job setting screen 67.

The surplus setting screen 70 is not limited to the configuration of receiving the selection of the layout file, and may be configured to directly receive the setting of the surplus region E2. The surplus setting screen 70 may be configured such that the setting of the surplus region E2 can be directly input. An input field for receiving the length of the surplus region E2 may be displayed on the surplus setting screen 70. For example, a lead-in input field 73 and a lead-out input field 74 may be displayed on the surplus setting screen 70. The length of the lead-in region E2A is input to the lead-in input field 73. The length of the lead-out region E2B is input to the lead-out input field 74. The lead-in input field 73 is a field for receiving the length of the lead-in region E2A. The lead-out input field 74 is a field for receiving the length of the lead-out region E2B. The input field may receive not only the length of the surplus region E2, but also the number of surplus images B2 constituting the surplus region E2. The surplus setting screen 70 may be configured such that not only the length of the surplus region E2 but also the content to be printed as the surplus region E2 can be input.

The information processing apparatus 13 may determine the number of surplus images B2 to be printed in the surplus region E2 based on the length input to the input field. The information processing apparatus 13 may calculate the number of surplus images B2 such that the surplus region E2 is printed with the length input to the input field. For example, the information processing apparatus 13 may determine a quotient obtained by dividing the length input to the input field by the length of the image frame F1 as the number of surplus images B2 constituting the surplus region E2. For example, the information processing apparatus 13 may determine the number of surplus images B2 constituting the surplus region E2 by adding 1 to the quotient obtained by dividing the length input to the input field by the length of the image frame F1. In this case, the surplus region E2 is printed with a length equal to or longer than the length input to the input field. The information processing apparatus 13 calculates the quotient by dividing the length input to the input field based on the image frame F1 represented by the print image data D1 contained in the print job selected on the job setting screen 67.

The information processing apparatus 13 may generate the surplus data D3 representing the number of surplus images B2 determined. Determining the number of surplus regions E2 by the information processing apparatus 13 is not a limitation, and the printing apparatus 12 may determine the number of surplus images B2 based on the print data D4. In this case, the information processing apparatus 13 generates the surplus data D3 including the length input to the input field, the content of the layout file selected, and so on.

A printing order display field 75 is displayed on the surplus setting screen 70. In the printing order display field 75, one or more print jobs having been selected are displayed. The printing order display field 75 shows a printing order of the print jobs. The surplus setting screen 70 may be configured to receive a change in the printing order in the printing order display field 75.

The surplus setting screen 70 may display the length of the medium M1 consumed by printing based on the print job selected and the setting of the surplus region E2. Accordingly, the user can determine whether one or more print jobs to be executed in a rump fit within the roll body R1.

A start button 76 is displayed on the surplus setting screen 70. When the start button 76 is operated in a state where setting is performed on the surplus region E2, the surplus setting screen 70 is closed. The information processing apparatus 13 receives the surplus print instruction by receiving the operation of the start button 76. In one example, the information processing apparatus 13 receives the surplus print instruction after receiving the target print instruction.

The information processing apparatus 13 receives the transmission instruction by receiving the operation of the start button 76. Accordingly, the information processing apparatus 13 generates the print data D4. Specifically, the information processing apparatus 13 generates the print data D4 based on the information received on the job setting screen 67, the surplus setting screen 70, and the like. The information processing apparatus 13 generates the print data D4 by selecting the print job, selecting the layout file, generating the surplus data D3, and generating the omission data. The information processing apparatus 13 transmits the print data D4 to the printing apparatus 12 as the transmission destination.

As described above, according to such a printing system 11, the user can make various settings regarding the target region E1 and the surplus region E2. Accordingly, the user can obtain a desired medium M1. For example, the user can obtain the medium M1 on which the surplus region E2 is printed with the length suitable for the processing apparatus 16. The user can obtain the medium M1 having the surplus region E2 in which the processing apparatus 16 does not stop. The user can obtain the medium M1 having the surplus region E2 in which the position of the processing blade 46 can be adjusted. The user can obtain the medium M1 in which the processing apparatus 16 can automatically stop at any position.

Then, processing of the printing system 11 will be described based on a first embodiment, a second embodiment, a third embodiment, and a fourth embodiment. In the first embodiment, the number of surplus images B2 constituting the surplus region E2 is designated. In the second embodiment, the mark image A3 is printed in the surplus region E2. In the third embodiment, the pattern image A4 is printed in the surplus region E2. In the fourth embodiment, the mark image A3 is omitted.

### First Embodiment

First, the first embodiment will be described.

In the processing apparatus 16, the surplus region E2 may be required for the medium M1 in some cases. The surplus region E2 is utilized for adjustment of the processing blade 46, setting of the medium M1 to the processing apparatus 16, and the like in the processing apparatus 16. For example, when the roll body R1 is set in the processing apparatus 16, the roll body R1 is attached to the supply shaft 41 in a state where the leading end of the medium M1 is attached to the collection shaft 42. On this occasion, the processing apparatus 16 cannot process a portion of the medium M1 from the processing blade 46 to the collection shaft 42. In the processing apparatus 16, the detection position of the mark image A3 by the detector 47 and the processing position of the product image A1 by the processing blade 46 may be shifted from each other in some cases. Such a processing apparatus 16 cannot process the portion of the medium M1 located between the detector 47 and the processing blade 46 in some cases. As described above, in the processing apparatus 16, a portion of the medium M1 that is not processed may be generated in some cases.

It is troublesome for the user to designate the number of target images B1 constituting the target region E1 in consideration of the portion that is not processed. Therefore, when the number of surplus images B2 constituting the surplus region E2 can be designated, the time and effort required for the processing are reduced. For example, when the length of the surplus region E2 can be set based on the distance from the processing blade 46 to the collection shaft 42, the time and effort required for the processing are reduced. When the length of the surplus region E2 can be set based on the distance from the detector 47 to the processing blade 46, the time and effort required for the processing are reduced. In the first embodiment, the printing system 11 prints the target region E1 and the surplus region E2 by separately receiving the number of target images B1 and the number of surplus images B2. Note that in the first embodiment, the processing apparatus 16 may be configured to repeat the conveyance and the processing at a predetermined period without detecting the mark image A3.

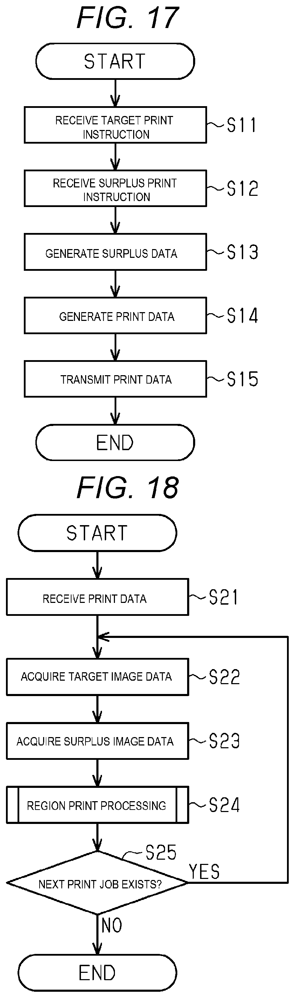

As illustrated in FIG. 17, the information processing apparatus 13 is configured to execute transmission processing. The transmission processing is realized by the information controller 61 executing a program stored in the information storage unit 62. The transmission processing is processing of transmitting the print data D4 to the printing apparatus 12. The transmission processing is started when, for example, the information processing apparatus 13 causes the terminal apparatus 15 to display the job setting screen 67.

In step S11, the information processing apparatus 13 receives the target print instruction. Specifically, the information processing apparatus 13 receives the target print instruction by receiving the print job. The information processing apparatus 13 receives one or more print jobs selected from the plurality of print jobs stored in the information storage unit 62. The information processing apparatus 13 receives the print job selected on the job setting screen 67. Accordingly, the information processing apparatus 13 receives the target print instruction.

In step S11, the information processing apparatus 13 may receive two or more print jobs selected from the plurality of print jobs stored in the information storage unit 62. The information processing apparatus 13 may receive one printing apparatus 12 selected from the plurality of printing apparatuses 12 as the transmission destination of the two or more print jobs. The information processing apparatus 13 may receive the target print instruction by receiving the two or more print jobs and the one printing apparatus 12.

In step S12, the information processing apparatus 13 receives the surplus print instruction. In one example, the information processing apparatus 13 receives the surplus print instruction after receiving the target print instruction. The surplus print instruction includes information designating the length of the surplus region E2. The surplus print instruction includes, for example, information designating the lengths of the lead-in region E2A, the lead-out region E2B, and so on. The information processing apparatus 13 receives the surplus print instruction by, for example, receiving the layout file. The information processing apparatus 13 receives one or more layout files selected from the plurality of layout files stored in the information storage unit 62. The information processing apparatus 13 receives the layout file selected in the lead-in setting field 71, the layout file selected in the lead-out setting field 72, or both thereof. Accordingly, the information processing apparatus 13 receives the surplus print instruction.

The information processing apparatus 13 may receive the surplus print instruction by directly receiving the layout file from the terminal apparatus 15. The information processing apparatus 13 may receive the surplus print instruction by not only receiving the layout file but also directly receiving the setting related to the surplus region E2 through the surplus setting screen 70. The information processing apparatus 13 may receive the surplus print instruction by receiving the length input to, for example, the lead-in input field 73 or the lead-out input field 74. The information processing apparatus 13 may receive the surplus print instruction by receiving the number of surplus images B2 constituting the surplus region E2. The information processing apparatus 13 may receive the surplus print instruction by receiving the number of surplus images B2 constituting the lead-in region E2A, the number of surplus images B2 constituting the lead-out region E2B, or the like.

The information processing apparatus 13 may automatically select the layout file based on the print job. Specifically, the information processing apparatus 13 may select the layout file such that the processing apparatus 16 designated by the print job matches the processing apparatus 16 associated with the layout file. When receiving the plurality of print jobs, the information processing apparatus 13 may select the layout file such that the processing apparatus 16 associated with the layout file matches the processing apparatus 16 when the plurality of print jobs designates that processing apparatus 16 in common. The information processing apparatus 13 may receive the surplus print instruction when automatically selecting the layout file.

In step S13, the information processing apparatus 13 generates the surplus data D3. The information processing apparatus 13 generates the surplus data D3 based on the surplus print instruction. The information processing apparatus 13 may generate the surplus data D3 including the layout file received. The information processing apparatus 13 may generate the surplus data D3 including a parameter representing the setting related to the surplus region E2 received through the surplus setting screen 70. The surplus data D3 includes information related to the length of the surplus region E2. The surplus data D3 may include the information related to the length of the lead-in region E2A and the length of the lead-out region E2B. The surplus data D3 may include information related to the number of surplus images B2 constituting the lead-in region E2A and the number of surplus images B2 constituting the lead-out region E2B.

In step S13, the information processing apparatus 13 may determine the number of surplus images B2 constituting the surplus region E2 based on the surplus print instruction. Specifically, the information processing apparatus 13 determines the number of surplus images B2 constituting the surplus region E2 based on the length of the surplus region E2 contained in the surplus print instruction and the print job. The information processing apparatus 13 determines the number of surplus images B2 constituting the lead-in region E2A based on the length of the lead-in region E2A contained in the surplus print instruction and the print job. The information processing apparatus 13 determines the number of surplus images B2 constituting the lead-out region E2B based on the length of the lead-out region E2B contained in the surplus print instruction and the print job. The information processing apparatus 13 may generate the surplus data D3 including information related to the number of surplus images B2 thus determined. Note that when a plurality of print jobs are received, the information processing apparatus 13 determines the number of surplus images B2 constituting the surplus region E2 for each of the print jobs.

In step S14, the information processing apparatus 13 generates the print data D4. The information processing apparatus 13 generates the print data D4 including the print job received in step S11. The information processing apparatus 13 generates the print data D4 including the surplus data D3 generated in step S13.

In step S15, the information processing apparatus 13 transmits the print data D4 to the printing apparatus 12. Specifically, the information processing apparatus 13 transmits the surplus data D3 and the print job to the printing apparatus 12. The information processing apparatus 13 may transmit one print job and the surplus data D3, or may transmit two or more print jobs and the surplus data D3. After ending the processing in step S15, the information processing apparatus 13 ends the transmission processing.

As shown in FIG. 18, the printing apparatus 12 is configured to execute print processing. The print processing is realized by the processing controller 22, the print controller 32, and the like executing a program stored in the processing storage unit 23, the print storage unit 33, and the like. The print processing is processing of printing an image on the medium M1 based on the print data D4. The print processing starts when the printing apparatus 12 receives the print data D4.

In step S21, the printing apparatus 12 receives the print data D4. The printing apparatus 12 receives the print job contained in the print data D4 by receiving the print data D4. The printing apparatus 12 receives the surplus data D3 contained in the print data D4 by receiving the print data D4.

In step S22, the printing apparatus 12 acquires the target image data representing the target image B1 including the product image A1 from the print image data D1. In one example, the printing apparatus 12 acquires the target image data representing the target image B1 including the product image A1 and the mark image A3. The target image B1 may include not only the product image A1 and the mark image A3 but also another image.

In step S22, the printing apparatus 12 may acquire the target image data from the print image data D1 based on the identifier such as the spot color or the layer. The printing apparatus 12 may acquire the target image data by extracting the image frame F1 indicating the target image B1 from the plurality of image frames F1 contained in the print image data D1. The printing apparatus 12 may combine the target image data with other data. The printing apparatus 12 may combine the target image data with data stored in the printing apparatus 12.

In step S23, the printing apparatus 12 acquires the surplus image data representing the surplus image B2 that does not include the product image A1 from the print image data D1. In one example, the printing apparatus 12 acquires, from the print image data D1, the surplus image data representing the surplus image B2 that does not include the product image A1 and includes the mark image A3. The surplus image B2 may include not only the mark image A3 but also another image.

In step S23, the printing apparatus 12 acquires the surplus image data from the print image data D1 so that the size of the surplus image B2 matches the size of the first target image B11. The printing apparatus 12 acquires the target image data representing the target image B1 and the surplus image data representing the surplus image B2 based on the image frame F1. Therefore, the size of the surplus image B2 matches the size of the first target image B11.

In step S23, the printing apparatus 12 may acquire the surplus image data from the print image data D1 based on the identifier such as the spot color or the layer. The printing apparatus 12 may acquire the surplus image data by extracting the image frame F1 indicating the surplus image B2 from the plurality of image frames F1 contained in the print image data D1. The printing apparatus 12 may combine the surplus image data with other data. The printing apparatus 12 may combine the surplus data D3 with the target image data, or may combine data stored in the printing apparatus 12 with the target image data.

In step S23, the printing apparatus 12 may acquire the surplus image data representing the surplus image B2 including the information described in the layout file. The printing apparatus 12 may acquire the surplus image data by combining the print image data D1 and the layout file. For example, the printing apparatus 12 may acquire surplus image data representing the surplus image B2 in which information related to printing and processing is described.

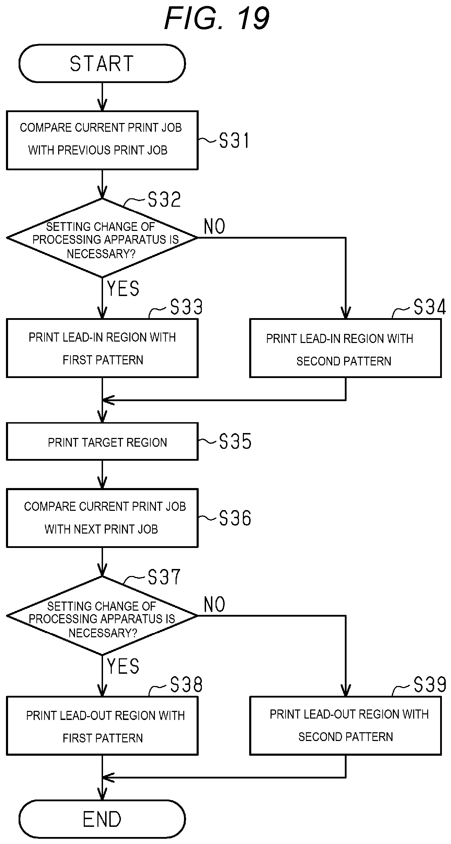

In step S24, the printing apparatus 12 executes region print processing. The region print processing is processing of printing the target region E1 and the surplus region E2. The printing apparatus 12 prints the target region E1 by printing the same number of target images B1 as the number represented by the print job. The printing apparatus 12 prints the surplus region E2 by printing the same number of surplus images B2 as the number represented by the surplus data D3. Specifically, the printing apparatus 12 prints the lead-in region E2A by printing the same number of surplus images B2 as the number represented by the surplus data D3. The printing apparatus 12 prints the lead-out region E2B by printing the same number of surplus images B2 as the number represented by the surplus data D3. The specific processing in step S24 will be described later with reference to FIG. 19.

In step S25, the printing apparatus 12 determines whether there is a next print job. When there is the next print job, the printing apparatus 12 returns the process to step S22. As a result, the printing apparatus 12 prints the target region E1 for each print job. That is, the printing apparatus 12 prints the target region E1 for each of the two or more print jobs. The printing apparatus 12 prints the surplus region E2 for each of the print jobs. The printing apparatus 12 prints the lead-in region E2A and the lead-out region E2B for each of the print jobs. That is, the printing apparatus 12 prints the surplus region E2 for each of the two or more print jobs. When there is no next print job, the printing apparatus 12 ends the print processing.

As shown in FIG. 19, the printing apparatus 12 executes the region print processing. In the region print processing, the printing apparatus 12 may determine whether to print the surplus region E2 with the first pattern P1 or to print the surplus region E2 with the second pattern P2 based on the execution order of the print jobs. That is, the printing apparatus 12 may determine whether to print the surplus image B2 with the first designation value or to print the surplus image B2 with the second designation value based on the execution order of the two or more print jobs. In this case, the printing apparatus 12 can change the number of surplus images B2 constituting the surplus region E2 for each print job interval.

The printing apparatus 12 may be configured to automatically determine whether to print the surplus region E2 with the first pattern P1 or to print the surplus region E2 with the second pattern P2. The printing apparatus 12 may be configured to cause the user to determine, each time, whether to print the surplus region E2 with the first pattern P1 or to print the surplus region E2 with the second pattern P2. For example, the printing apparatus 12 may be configured to receive settings for automatic determination from the user. The information processing apparatus 13 may receive, on the surplus setting screen 70, whether the printing apparatus 12 performs the automatic determination.

In step S31, the printing apparatus 12 compares the current print job with the previous print job. When there is no previous print job, for example, when the current print job is the first print job, the printing apparatus 12 may skip the processing in step S31 and step S32. In this case, the printing apparatus 12 may execute the processing in step S33.

In step S32, the printing apparatus 12 determines whether a setting change in the processing apparatus 16 is necessary. Specifically, the printing apparatus 12 determines whether it is necessary to change the settings of the processing apparatus 16 with respect to the two consecutive print jobs, that is, the previous print job and the current print job. The printing apparatus 12 refers to the print image data D1 or the job data D2 with respect to the two consecutive print jobs. For example, when the processing blades 46 respectively used for the two consecutive print jobs are different from each other, the printing apparatus 12 determines that it is necessary to change the settings of the processing apparatus 16. This is because it is necessary to replace the processing blade 46. For example, when the sizes of the image frames F1 with respect to the two consecutive print jobs are different from each other, the printing apparatus 12 determines that it is necessary to change the settings of the processing apparatus 16. This is because it is necessary to change the intervals between the mark images A3. When the processing blades 46 match each other and the sizes of the image frames F1 match each other with respect to the two consecutive print jobs, the printing apparatus 12 determines that there is no need to change the settings of the processing apparatus 16.

When it is determined in step S32 that it is necessary to change the settings of the processing apparatus 16, the printing apparatus 12 makes the transition of the process to step S33. When it is determined that there is no need to change the settings of the processing apparatus 16, the printing apparatus 12 makes the transition of the process to step S34.

In step S33, the printing apparatus 12 prints the lead-in region E2A with the first pattern P1. Specifically, the printing apparatus 12 prints the same number of surplus images B2 as the number represented by the first designation value.

In step S34, the printing apparatus 12 prints the lead-in region E2A with the second pattern P2. Specifically, the printing apparatus 12 prints the same number of surplus images B2 as the number represented by the second designation value.

In step S35, the printing apparatus 12 prints the target region E1. Specifically, the printing apparatus 12 prints the same number of target images B1 as the number represented by the print job. As a result, the target region E1 is printed.

In step S36, the printing apparatus 12 compares the current print job with the next print job. When there is no next print job, for example, when the current print job is the last print job, the printing apparatus 12 may skip the processing in step S36 and step S37. In this case, the printing apparatus 12 may execute the processing in step S38.

In step S37, the printing apparatus 12 determines whether a setting change in the processing apparatus 16 is necessary. Similarly to step S32, the printing apparatus 12 determines whether it is necessary to change the settings of the processing apparatus 16 with respect to the two consecutive print jobs, that is, the current print job and the next print job. When it is determined that it is necessary to change the settings of the processing apparatus 16, the printing apparatus 12 makes the transition of the process to step S38. When it is determined that there is no need to change the settings of the processing apparatus 16, the printing apparatus 12 makes the transition of the process to step S39.

In step S38, the printing apparatus 12 prints the lead-out region E2B with the first pattern P1. Specifically, the printing apparatus 12 prints the same number of surplus images B2 as the number represented by the first designation value.

In step S39, the printing apparatus 12 prints the lead-out region E2B with the second pattern P2. Specifically, the printing apparatus 12 prints the same number of surplus images B2 as the number represented by the second designation value.

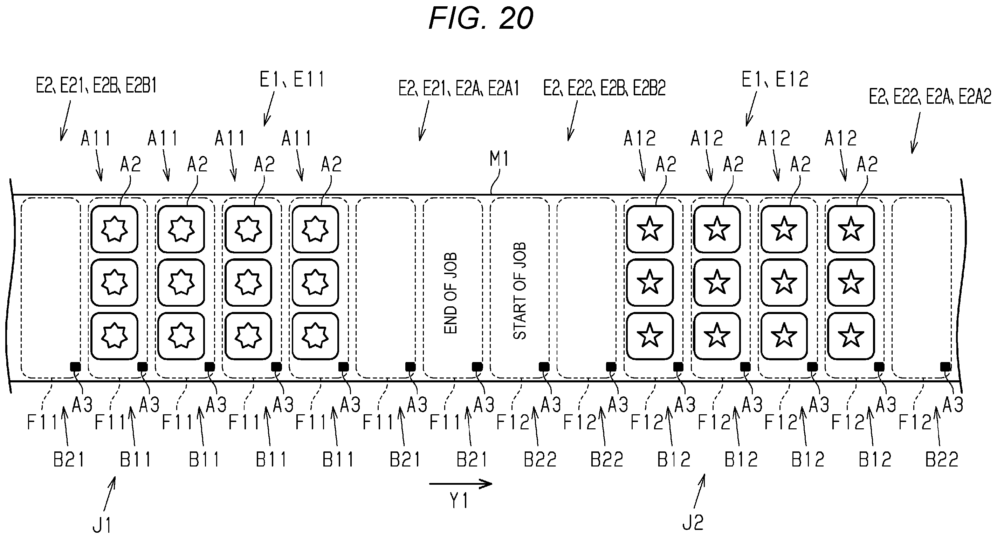

As illustrated in FIG. 20, the target region E1 and the surplus region E2 are printed on the medium M1 by the printing apparatus 12 executing the print processing. The printing apparatus 12 executes, for example, the second print job J2 and the first print job J1 in this order. In the example illustrated in FIG. 20, the surplus region E2 located between the second target region E12 and the first target region E11 is printed with the first pattern P1. Specifically, in the example illustrated in FIG. 20, all the surplus regions E2 are printed with the first pattern P1.

The printing apparatus 12 first prints the second surplus region E22 by printing the same number of second surplus images B22 as the number represented by the surplus data D3. On this occasion, the printing apparatus 12 prints the second lead-in region E2A2 by printing the same number of second surplus images B22 as the number represented by the first designation value. The printing apparatus 12 may print the second surplus image B22 including a text of END OF JOB in the second lead-in region E2A2. Then, the printing apparatus 12 prints the second target region E12 by printing the same number of second target images B12 as the number represented by the second print job J2. Then, the printing apparatus 12 prints the second surplus region E22 by printing the same number of second surplus images B22 as the number represented by the surplus data D3. On this occasion, the printing apparatus 12 prints the second lead-out region E2B2 by printing the same number of second surplus images B22 as the number represented by the first designation value. The printing apparatus 12 may print the second surplus image B22 including a text of START OF JOB in the second lead-out region E2B2. Then, the printing apparatus 12 prints the first surplus region E21 by printing the same number of first surplus images B21 as the number represented by the surplus data D3. On this occasion, the printing apparatus 12 prints the first lead-in region E2A1 by printing the same number of first surplus images B21 as the number represented by the first designation value. The printing apparatus 12 may print the first surplus image B21 including a text of END OF JOB in the first lead-in region E2A1. Then, the printing apparatus 12 prints the first target region E11 by printing the same number of first target images B11 as the number represented by the first print job J1. Then, the printing apparatus 12 prints the first surplus region E21 by printing the same number of first surplus images B21 as the number represented by the surplus data D3. On this occasion, the printing apparatus 12 prints the first lead-out region E2B1 by printing the same number of first surplus images B21 as the number represented by the first designation value. The printing apparatus 12 may print the first surplus image B21 including a text of START OF JOB in the first lead-out region E2B1.

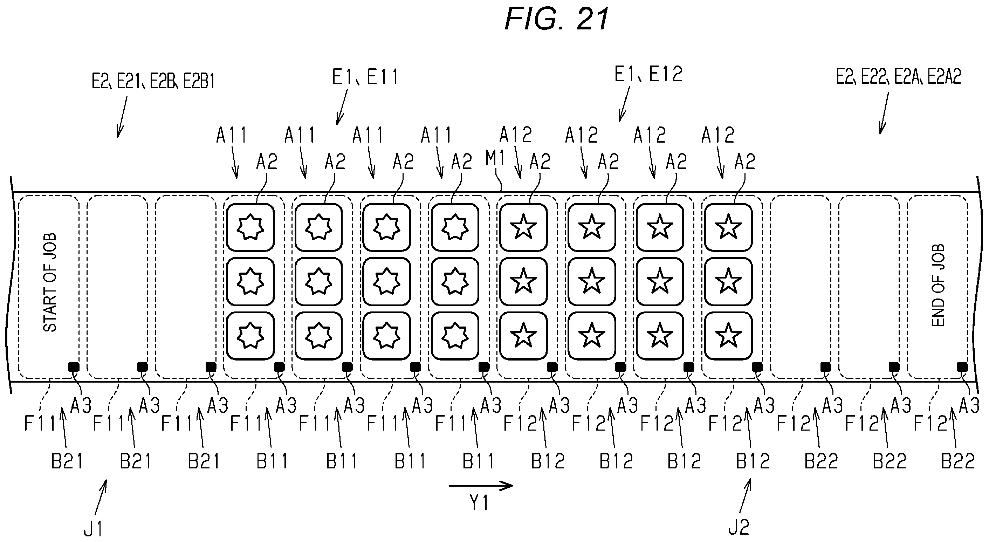

As illustrated in FIG. 21, the target region E1 and the surplus region E2 are printed on the medium M1 by the printing apparatus 12 executing the print processing. The printing apparatus 12 executes, for example, the second print job J2 and the first print job J1 in this order. In the example illustrated in FIG. 21, the surplus region E2 located between the first target region E11 and the second target region E12 is printed with the second pattern P2. Specifically, in the example illustrated in FIG. 21, the surplus region E2 located between the first target region E11 and the second target region E12 is printed with the second pattern P2, and the other surplus regions E2 are printed with the first pattern P1.

The printing apparatus 12 prints the second lead-out region E2B2 by printing the same number of second surplus images B22 as the number represented by the second designation value. The printing apparatus 12 prints the first lead-in region E2A1 by printing the same number of first surplus images B21 as the number represented by the second designation value. In one example, since the second designation value is 0, the first lead-in region E2A1 and the second lead-out region E2B2 are not formed between the first target region E11 and the second target region E12. As a result, the first target region E11 and the second target region E12 are continuous in the medium M1. In this case, consumption of the medium M1, consumption of the liquid, and so on by the surplus region E2 are reduced.

The printing apparatus 12 may determine whether to perform printing with the first designation value or to perform printing with the second designation value based on not only whether the setting change of the processing apparatus 16 is necessary but also another determination. That is, the printing apparatus 12 may determine whether to apply the first pattern P1 or to apply the second pattern P2 based on not only the execution order of the print jobs but also another index. When the layout file selected on the surplus setting screen 70 is applied to all the print jobs, it is difficult to set the surplus region E2 for each of the print jobs. In this regard, by the surplus data D3 including the first pattern P1 and the second pattern P2, the surplus region E2 can be set for each of the print jobs.

### Functions and Advantages of First Embodiment

Then, functions and advantages of the first embodiment will be described.
(1-1) The information processing apparatus 13 receives the target print instruction to print the target region E1 by receiving one or more print jobs selected from the plurality of print jobs. The information processing apparatus 13 receives the surplus print instruction to print the surplus region E2. The information processing apparatus 13 transmits the surplus data D3 and one or more print jobs based on the surplus print instruction to the printing apparatus 12. The printing apparatus 12 acquires, from the print image data D1, the target image data representing the target image B1 including the product image A1. The printing apparatus 12 acquires, from the print image data D1, the surplus image data which represents the surplus image B2 that does not include the product image A1 and which represents the surplus image B2 the same in size as the target image B1. The printing apparatus 12 prints the target region E1 by printing the same number of target images B1 as the number represented by the print job. The printing apparatus 12 prints the surplus region E2 by printing the same number of surplus images B2 as the number represented by the surplus data D3. According to the configuration described above, the printing system 11 can separately receive the number of target images B1 and the number of surplus images B2. Accordingly, the user can easily perform setting with respect to the surplus region E2. Therefore, the time and effort required for the processing are reduced.
(1-2) The printing apparatus 12 prints the lead-in region E2A and the lead-out region E2B by printing the same number of surplus images B2 as the number represented by the surplus data D3. According to the configuration described above, the printing system 11 can receive the number of surplus images B2 constituting the lead-in region E2A and the number of surplus images B2 constituting the lead-out region E2B. Thus, the user can easily perform setting with respect to the lead-in region E2A and the lead-out region E2B.
(1-3) The information processing apparatus 13 receives the target print instruction by receiving two or more print jobs selected from the plurality of print jobs and receiving the printing apparatus 12 selected from the plurality of printing apparatuses 12 as the transmission destination of the two or more print jobs. After receiving the target print instruction, the information processing apparatus 13 receives the surplus print instruction. The information processing apparatus 13 transmits the two or more print jobs and the surplus data D3 to the printing apparatus 12. According to the configuration described above, the user can distribute the two or more print jobs to the printing apparatus 12, and then provide the surplus print instruction to the information processing apparatus 13. Accordingly, the user can easily perform setting with respect to the surplus region E2.
(1-4) The information processing apparatus 13 determines the number of surplus images B2 constituting the surplus region E2 based on the length of the surplus region E2 represented by the surplus print instruction and the print image data D1. The information processing apparatus 13 transmits, to the printing apparatus 12, surplus data D3 representing the number of surplus images B2 constituting the surplus region E2. According to the configuration described above, the user can designate the length of the surplus region E2. The printing system 11 prints the same number of surplus images B2 as the number corresponding to the designated length. Accordingly, the user can easily perform setting with respect to the surplus region E2.
(1-5) The information processing apparatus 13 determines the number of surplus images B2 constituting the lead-in region E2A based on the length of the lead-in region E2A represented by the surplus print instruction and the print image data D1. The information processing apparatus 13 determines the number of surplus images B2 constituting the lead-out region E2B based on the length of the lead-out region E2B represented by the surplus print instruction and the print image data D1. The information processing apparatus 13 transmits, to the printing apparatus 12, the surplus data D3 representing the number of surplus images B2 constituting the lead-in region E2A and the number of surplus images B2 constituting the lead-out region E2B. According to the configuration described above, the user can designate the length of the lead-in region E2A and the lead-out region E2B. The printing system 11 prints the same number of surplus images B2 as the number corresponding to the designated length. Thus, the user can easily perform setting with respect to the lead-in region E2A and the lead-out region E2B.
(1-6) The information processing apparatus 13 receives the surplus print instruction by receiving one or more layout files selected from the plurality of layout files. According to the configuration described above, the user can easily perform setting of the surplus region E2 by selecting the layout file.
(1-7) The information processing apparatus 13 selects one or more layout files from the plurality of layout files so that the processing apparatus 16 designated by one or more print jobs matches the processing apparatus 16 associated with one or more layout files. The length required for the surplus region E2 may vary in some cases depending on the processing apparatus 16. According to the configuration described above, the number of surplus images B2 is determined in accordance with the processing apparatus 16 used for the processing. Therefore, usability is improved.
(1-8) The information processing apparatus 13 receives the surplus print instruction by receiving the number of surplus images B2 constituting the surplus region E2. According to the configuration described above, the user can designate the number of surplus images B2. Therefore, the user can easily perform setting with respect to the surplus region E2.
(1-9) The printing apparatus 12 prints the surplus region E2 for each of the two or more print jobs. According to the configuration described above, the user can easily perform setting of the surplus region E2 to be printed for each of the print jobs. Therefore, the time and effort required for the processing are reduced.
(1-10) Based on the execution order of the two or more print jobs, the printing apparatus 12 determines whether to print the surplus image B2 with the first designation value or to print the surplus image B2 with the second designation value. Depending on the execution order of the print jobs, the processing apparatus 16 is not required to be adjusted in some cases. For example, a small amount of information described in the surplus image B2 may be enough in some cases. In this case, there may be no problem in some cases even when the surplus region E2 is small. According to the configuration described above, since the setting of the surplus region E2 can be changed with the execution order of the print jobs, usability is improved.
(1-11) The printing apparatus 12 acquires the surplus image data representing the surplus image B2 including the information described in the layout file. According to the configuration described above, the surplus region E2 with the surplus image B2 including the information of the layout file is printed. This improves the usability.

### Second Embodiment

Then, the second embodiment will be described.

The printing apparatus 12 may print the plurality of print jobs on the medium M1. In this case, the printing apparatus 12 may print the surplus region E2 between the target regions E1 in some cases. That is, the printing apparatus 12 may print the first surplus region E21, the second surplus region E22, or both thereof between the first target region E11 and the second target region E12. The surplus region E2 between the target regions E1 is the lead-out region E2B accompanying the print job to be processed first, the lead-in region E2A accompanying the print job to be processed later, or both thereof out of the two consecutive print jobs. The operator of the processing apparatus 16 figures out a boundary between the print jobs by checking the surplus region E2 between the target regions E1.

Depending on the contents of the plurality of print jobs, there is no need to change the settings of the processing apparatus 16 between the print jobs in some cases. For example, there is no need to replace the processing blade 46 or change the detection interval of the detector 47 between the print jobs in some cases. Even in such a case, the time and effort required for the processing may be reduced in some cases by describing the information related to the print job, the information related to the processing, and the like in the surplus region E2. However, when the surplus region E2 on which the printing apparatus 12 prints such information is provided, there is a possibility that the processing apparatus 16 fails to detect the mark image A3 and stops. Therefore, in the second embodiment, the printing system 11 prints the surplus region E2 between the target regions E1 by printing the surplus image B2 including the mark image A3.

When there is no need to change the settings of the processing apparatus 16 between the print jobs, the surplus region E2 between the target regions E1 is omitted in the first embodiment, but in the second embodiment, the surplus region E2 between the target regions E1 is not omitted. By not omitting the surplus region E2, the information related to printing, processing, and so on is printed in the surplus region E2. As a result, the operator can figure out the information related to printing, processing, and so on.

As illustrated in FIG. 17, the information processing apparatus 13 is configured to execute transmission processing similarly to the first embodiment. In step S11, the information processing apparatus 13 receives the target print instruction. Specifically, the information processing apparatus 13 receives the target print instruction by receiving the print job. The information processing apparatus 13 receives one or more print jobs selected from the plurality of print jobs stored in the information storage unit 62. The information processing apparatus 13 receives, for example, the print job selected on the job setting screen 67. In one example, the information processing apparatus 13 receives the first print job J1 and the second print job J2 out of the plurality of print jobs. Accordingly, the information processing apparatus 13 receives the target print instruction to print the first target region E11 and the second target region E12. In one example, the target print instruction includes an instruction to print the second print job J2 and the first print job J1 in this order.

In step S12, the information processing apparatus 13 receives the surplus print instruction. The surplus print instruction may include an instruction to print the first surplus region E21. The surplus print instruction may include an instruction to print the first lead-in region E2A1. The surplus print instruction may include an instruction to print the first lead-out region E2B1. The surplus print instruction may include an instruction to print the second surplus region E22. The surplus print instruction may include an instruction to print the second lead-in region E2A2. The surplus print instruction may include an instruction to print the second lead-out region E2B2.

The surplus print instruction may include information designating the length of the surplus region E2. Similarly to the first embodiment, the surplus print instruction may include information designating the length of the lead-in region E2A, or may include information designating the length of the lead-out region E2B. The surplus print instruction may include information designating the number of surplus images B2, information designating the distance of the surplus region E2, and the like. The length of the lead-in region E2A affects the length of the first surplus region E21 and the length of the second surplus region E22. The length of the lead-out region E2B affects the length of the first surplus region E21 and the length of the second surplus region E22. Therefore, in this regard, the surplus print instruction includes information designating the length of the first surplus region E21 and the length of the second surplus region E22.

The information processing apparatus 13 may be configured to be able to individually set the surplus region E2 for each print job. For example, the information processing apparatus 13 may switch the number of surplus images B2 between the first designation value and the second designation value for each print job. In this case, the surplus print instruction may include an instruction to designate a pattern to be applied out of a plurality of patterns contained in the layout file for each print job. In this way, the surplus print instruction may include information designating the length of the first surplus region E21 and information designating the length of the second surplus region E22.

The information processing apparatus 13 receives the surplus print instruction by receiving the layout file. The information processing apparatus 13 receives one or more layout files selected from the plurality of layout files stored in the information storage unit 62. The information processing apparatus 13 receives the layout file selected in the lead-in setting field 71, the layout file selected in the lead-out setting field 72, or both thereof. Accordingly, the information processing apparatus 13 receives the surplus print instruction. The information processing apparatus 13 may receive the surplus print instruction by directly receiving the layout file from the terminal apparatus 15. The information processing apparatus 13 may receive the surplus print instruction by not only receiving the layout file but also directly receiving the setting related to the surplus region E2 through the surplus setting screen 70.

In step S13, the information processing apparatus 13 generates the surplus data D3. The information processing apparatus 13 generates the surplus data D3 based on the surplus print instruction. The information processing apparatus 13 may generate, as the surplus data D3, the layout file thus received. The information processing apparatus 13 may generate, as the surplus data D3, a parameter representing the setting related to the surplus region E2 received through the surplus setting screen 70.

In step S13, the information processing apparatus 13 may determine the number of surplus images B2 constituting the surplus region E2 based on the surplus print instruction. Similarly to the first embodiment, the information processing apparatus 13 may determine the number of surplus images B2 constituting the surplus region E2 based on the length of the surplus region E2 contained in the surplus print instruction and the print job.

The information processing apparatus 13 may determine the number of first surplus images B21 constituting the first lead-in region E2A1 based on the length of the lead-in region E2A contained in the surplus print instruction and the first print job J1. The information processing apparatus 13 may determine the number of first surplus images B21 constituting the first lead-out region E2B1 based on the length of the lead-out region E2B contained in the surplus print instruction and the first print job J1. As described above, the information processing apparatus 13 may determine the number of first surplus images B21 constituting the first surplus region E21 based on the length of the first surplus region E21 contained in the surplus print instruction and first print image data.

The information processing apparatus 13 may determine the number of second surplus images B22 constituting the second lead-in region E2A2 based on the length of the lead-in region E2A contained in the surplus print instruction and the second print job J2. The information processing apparatus 13 may determine the number of second surplus images B22 constituting the second lead-out region E2B2 based on the length of the lead-out region E2B contained in the surplus print instruction and the second print job J2. As described above, the information processing apparatus 13 may determine the number of second surplus images B22 constituting the second surplus region E22 based on the length of the second surplus region E22 contained in the surplus print instruction and second print image data.

In step S13, the information processing apparatus 13 may generate the surplus data D3 including information related to the number of surplus images B2 thus determined. The information processing apparatus 13 may generate the surplus data D3 representing the number of first surplus images B21 and the number of second surplus images B22.

In step S14, the information processing apparatus 13 generates the print data D4. The information processing apparatus 13 generates the print data D4 including the print job received in step S11. The information processing apparatus 13 generates the print data D4 including the surplus data D3 generated in step S13. In one example, the information processing apparatus 13 generates the print data D4 including the first print job J1, the second print job J2, and the surplus data D3.

In step S15, the information processing apparatus 13 transmits the print data D4 to the printing apparatus 12. Specifically, the information processing apparatus 13 transmits the surplus data D3 and the print job to the printing apparatus 12. The information processing apparatus 13 transmits, for example, the first print job J1, the second print job J2, and the surplus data D3 to the printing apparatus 12. After ending the processing in step S15, the information processing apparatus 13 ends the transmission processing.

As shown in FIG. 18, the printing apparatus 12 is configured to execute the print processing similarly to the first embodiment. In step S21, the printing apparatus 12 receives the print data D4. The printing apparatus 12 receives the print job contained in the print data D4 by receiving the print data D4. In one example, the printing apparatus 12 receives the first print job J1 and the second print job J2. The printing apparatus 12 receives the surplus data D3 contained in the print data D4 by receiving the print data D4.

In step S22, the printing apparatus 12 acquires the target image data representing the target image B1 including the product image A1 and the mark image A3 from the print image data D1. Specifically, the printing apparatus 12 acquires the target image data from the print image data D1 for each print job. When executing the first print job J1, the printing apparatus 12 acquires first target image data representing the first target image B11 including the first product image A11 and the mark image A3 from the first print image data. The first print image data is the print image data D1 contained in the first print job J1. When executing the second print job J2, the printing apparatus 12 acquires second target image data representing the second target image B12 including the second product image A12 and the mark image A3 from the second print image data. The second print image data is the print image data D1 contained in the second print job J2. The target image B1 may include not only the product image A1 and the mark image A3 but also another image.

In step S22, the printing apparatus 12 may acquire the target image data from the print image data D1 based on the identifier such as the spot color or the layer. The printing apparatus 12 may acquire the target image data by extracting the image frame F1 indicating the target image B1 from the plurality of image frames F1 contained in the print image data D1. The printing apparatus 12 may combine the target image data with other data. The printing apparatus 12 may combine the target image data with data stored in the printing apparatus 12.

In step S23, the printing apparatus 12 acquires the surplus image data representing the surplus image B2 including the mark image A3 from the print image data D1. Specifically, the printing apparatus 12 acquires the surplus image data from the print image data D1 for each print job. When executing the first print job J1, the printing apparatus 12 acquires the surplus image data representing the first surplus image B21 including the mark image A3 from the first print image data. When executing the second print job J2, the printing apparatus 12 acquires the surplus image data representing the second surplus image B22 including the mark image A3 from the second print image data. The surplus image B2 may include not only the mark image A3 but also another image.

In step S23, the printing apparatus 12 acquires the surplus image data from the print image data D1 so that the size of the surplus image B2 matches the size of the target image B1. The printing apparatus 12 acquires first surplus image data from the first print image data so that the size of the first surplus image B21 matches the size of the first target image B11. The printing apparatus 12 acquires second surplus image data from the second print image data so that the size of the second surplus image B22 matches the size of the second target image B12. The printing apparatus 12 acquires the first target image data representing the first target image B11 and the first surplus image data representing the first surplus image B21 based on the first image frame F11. The printing apparatus 12 acquires the second target image data representing the second target image B12 and the second surplus image data representing the second surplus image B22 based on the second image frame F12. Therefore, the size of the surplus image B2 matches the size of the target image B1.

In step S23, the printing apparatus 12 may acquire the surplus image data from the print image data D1 based on the identifier such as the spot color or the layer. The printing apparatus 12 may acquire the surplus image data by extracting the image frame F1 indicating the surplus image B2 from the plurality of image frames F1 contained in the print image data D1. The printing apparatus 12 may combine the surplus image data with other data. The printing apparatus 12 may combine the surplus data D3 with the target image data, or may combine data stored in the printing apparatus 12 with the target image data.

In step S23, the printing apparatus 12 may acquire the surplus image data representing the surplus image B2 including the information described in the layout file. The printing apparatus 12 may acquire the surplus image data by combining the print image data D1 and the layout file. For example, the printing apparatus 12 may acquire surplus image data representing the surplus image B2 in which information related to printing and processing is described.

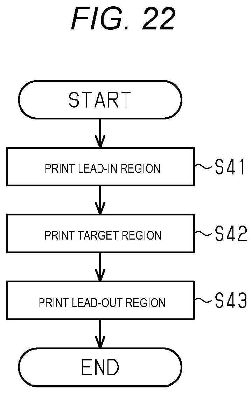

In step S24, the printing apparatus 12 executes region print processing. The printing apparatus 12 prints the target region E1 by printing the same number of target images B1 as the number represented by the print job. The printing apparatus 12 prints the first target region E11 by printing the same number of first target images B11 as the number represented by the first print job J1. The printing apparatus 12 prints the second target region E12 by printing the same number of second target images B12 as the number represented by the second print job J2. The printing apparatus 12 prints the surplus region E2 by printing the same number of surplus images B2 as the number represented by the surplus data D3. The printing apparatus 12 prints the surplus region E2 between the first target region E11 and the second target region E12 by printing the same number of surplus images B2 as the number represented by the surplus data D3. Specifically, the printing apparatus 12 prints the lead-in region E2A and prints the lead-out region E2B by printing the same number of surplus images B2 as the number represented by the surplus data D3. Accordingly, the surplus region E2 is printed between the first target region E11 and the second target region E12. The specific processing in step S24 will be described later with reference to FIG. 22.

In step S25, the printing apparatus 12 determines whether there is a next print job. When there is the next print job, the printing apparatus 12 returns the process to step S22. As a result, the printing apparatus 12 prints the target region E1 for each print job. The printing apparatus 12 prints the surplus region E2 for each of the print jobs. The printing apparatus 12 prints the lead-in region E2A for each print job. The printing apparatus 12 may print the lead-out region E2B for each print job. When there is no next print job, the printing apparatus 12 ends the print processing.

As shown in FIG. 22, the printing apparatus 12 executes the region print processing. In the second embodiment, the printing apparatus 12 does not determine whether to print the surplus region E2 with the first pattern P1 or to print the surplus region E2 with the second pattern P2 in the region print processing. Therefore, the surplus data D3 is not required to include a plurality of patterns regarding the layout of the surplus region E2.

In step S41, the printing apparatus 12 prints the lead-in region E2A. The printing apparatus 12 prints the same number of surplus images B2 as the number represented by the surplus data D3. As a result, the lead-in region E2A is printed. When executing the second print job J2, the printing apparatus 12 prints the second lead-in region E2A2. The printing apparatus 12 prints the first lead-in region E2A1 when executing the first print job J1. On this occasion, the first surplus region E21 is printed between the first target region E11 and the second target region E12.

In step S42, the printing apparatus 12 prints the target region E1. Specifically, the printing apparatus 12 prints the same number of target images B1 as the number represented by the print job. As a result, the target region E1 is printed. The printing apparatus 12 prints the second target region E12 when executing the second print job J2. The printing apparatus 12 prints the first target region E11 when executing the first print job J1.

In step S43, the printing apparatus 12 prints the lead-out region E2B. The printing apparatus 12 prints the same number of surplus images B2 as the number represented by the surplus data D3. As a result, the lead-out region E2B is printed. When executing the second print job J2, the printing apparatus 12 prints the second lead-out region E2B2. On this occasion, the second surplus region E22 is printed between the first target region E11 and the second target region E12. When printing the first print job J1, the printing apparatus 12 prints the first lead-out region E2B1.

The printing apparatus 12 prints the target region E1 and the surplus region E2 by executing the region print processing for each print job. The printing apparatus 12 prints the first target region E11 by printing the same number of first target images B11 as the number represented by the first print job J1. The printing apparatus 12 prints the second target region E12 by printing the same number of second target images B12 as the number represented by the second print job J2. The printing apparatus 12 prints the first surplus region E21 between the first target region E11 and the second target region E12 by printing the same number of first surplus images B21 as the number represented by the surplus data D3. The printing apparatus 12 may print the second surplus region E22 between the first target region E11 and the second target region E12 by printing the same number of second surplus images B22 as the number represented by the surplus data D3.

When executing the second print job J2, the printing apparatus 12 prints the second surplus region E22 by printing the same number of second surplus images B22 as the number represented by the surplus data D3 so as to be adjacent to the second target region E12. The printing apparatus 12 prints the second lead-in region E2A2 so as to be adjacent to the second target region E12. The printing apparatus 12 prints the second lead-out region E2B2 so as to be adjacent to the second target region E12. The printing apparatus 12 prints the second lead-out region E2B2 between the first target region E11 and the second target region E12.

The printing apparatus 12 may print the second surplus region E22 between the first surplus region E21 and the second target region E12 by printing the same number of second surplus images B22 as the number represented by the surplus data D3. Specifically, the printing apparatus 12 may print the second lead-out region E2B2 between the first lead-in region E2A1 and the second target region E12.

When executing the first print job J1, the printing apparatus 12 prints the first surplus region E21 by printing the same number of first surplus images B21 as the number represented by the surplus data D3 so as to be adjacent to the first target region E11. The printing apparatus 12 prints the first lead-in region E2A1 so as to be adjacent to the first target region E11. The printing apparatus 12 prints the first lead-in region E2A1 between the first target region E11 and the second target region E12.

The printing apparatus 12 may print the first surplus region E21 between the first target region E11 and the second surplus region E22 by printing the same number of first surplus images B21 as the number represented by the surplus data D3. Specifically, the printing apparatus 12 may print the first lead-in region E2A1 between the first target region E11 and the second lead-out region E2B2.

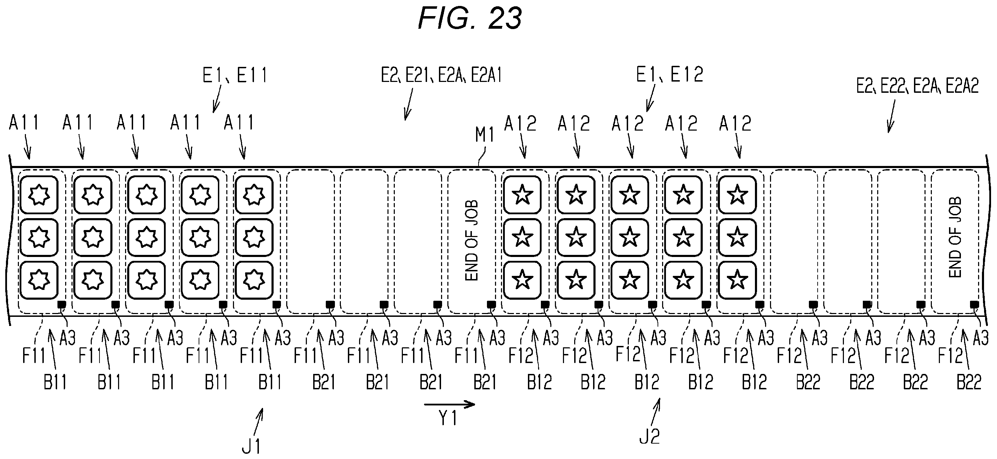

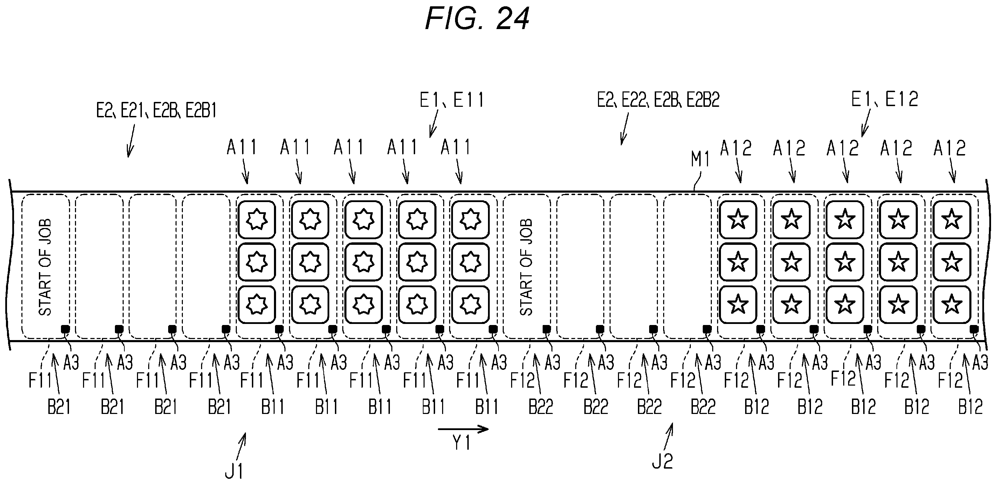

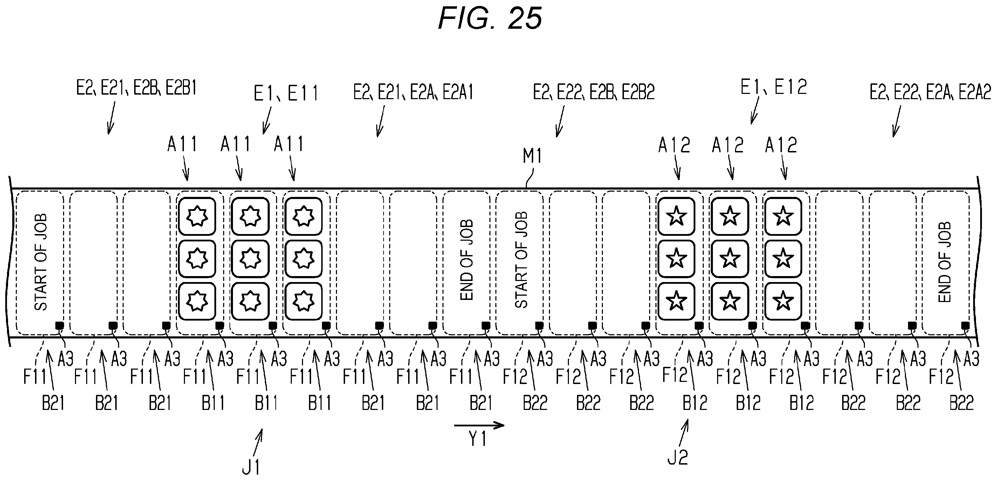

As shown in FIG. 23, FIG. 24, and FIG. 25, the surplus region E2 is printed between the first target region E11 and the second target region E12 by the printing apparatus 12 executing the print processing. In the example illustrated in FIG. 23, the first surplus region E21 is printed between the first target region E11 and the second target region E12. In the example illustrated in FIG. 24, the second surplus region E22 is printed between the first target region E11 and the second target region E12. In the example illustrated in FIG. 25, the first surplus region E21 and the second surplus region E22 are printed between the first target region E11 and the second target region E12.

The printing apparatus 12 prints the mark images A3 constituting the surplus region E2 at the same intervals as the mark images A3 arranged in the target region E1. That is, the printing apparatus 12 prints the first surplus image B21 so that the interval between the mark image A3 in the first surplus region E21 and the mark image A3 in the first target region E11 adjacent to each other matches the interval between the mark images A3 in the first target region E11 adjacent to each other. The printing apparatus 12 prints the second surplus image B22 so that the interval between the mark image A3 in the second surplus region E22 and the mark image A3 in the second target region E12 adjacent to each other matches the interval between the mark images A3 in the second target region E12 adjacent to each other. Since the target image B1 and the surplus image B2 are printed by the image frame F1, the interval between the mark images A3 becomes constant in the print job. That is, the interval between the mark images A3 does not change between the surplus region E2 and the target region E1. Therefore, the processing apparatus 16 can detect the mark images A3 in the surplus region E2. This reduces the possibility that the processing apparatus 16 stops between the print jobs.

### Functions and Advantages of Second Embodiment

Then, functions and advantages of the second embodiment will be described.
(2-1) The information processing apparatus 13 receives the target print instruction to print the first target region E11 and the second target region E12 by receiving the first print job J1 and the second print job J2 selected from the plurality of print jobs. The information processing apparatus 13 receives the surplus print instruction to print the surplus region E2 different from the first target region E11 and the second target region E12. The information processing apparatus 13 transmits the surplus data D3 based on the surplus print instruction, the first print job J1, and the second print job J2 to the printing apparatus 12. The printing apparatus 12 acquires, from the first print image data, the first target image data representing the first target image B11 including the first product image A11 and the mark image A3. The printing apparatus 12 acquires, from the second print image data, the second target image data representing the second target image B12 including the second product image A12 and the mark image A3. The printing apparatus 12 acquires, from the first print image data, the surplus image data representing the surplus image B2 including the mark image A3. The printing apparatus 12 prints the first target region E11 by printing the same number of first target images B11 as the number represented by the first print job J1. The printing apparatus 12 prints the second target region E12 by printing the same number of second target images B12 as the number represented by the second print job J2. The printing apparatus 12 prints the surplus region E2 between the first target region E11 and the second target region E12 by printing the same number of surplus images B2 as the number represented by the surplus data D3. According to the configuration described above, the surplus image B2 including the mark image A3 is printed between the first target region E11 and the second target region E12. This reduces the possibility that the processing apparatus 16 stops in the surplus region E2. Therefore, by providing the surplus region E2, the time and effort required for the processing are reduced, and the possibility that the processing apparatus 16 stops in the surplus region E2 is reduced.
(2-2) The printing apparatus 12 prints the surplus image B2 such that the interval between the mark image A3 in the surplus region E2 and the mark image A3 in the first target region E11 adjacent to each other matches the interval between the mark images A3 in the first target region E11 adjacent to each other. According to the configuration described above, the possibility that the processing apparatus 16 stops in the surplus region E2 is reduced.
(2-3) The printing apparatus 12 acquires the surplus image data from the first print image data so that the size of the surplus image B2 matches the size of the first target image B11. According to the configuration described above, the intervals between the mark images A3 are likely to match between the first target region E11 and the surplus region E2.
(2-4) The printing apparatus 12 acquires the surplus image data from the first print image data based on the plurality of identifiers. According to the configuration described above, the printing apparatus 12 can easily acquire the surplus image data from the first print image data.
(2-5) The printing apparatus 12 prints the second surplus region E22 by printing the same number of second surplus images B22 as the number represented by the surplus data D3 so as to be adjacent to the second target region E12. According to the configuration described above, the printing apparatus 12 can print, in the second surplus region E22, information different from the first surplus region E21. This improves the usability.
(2-6) The printing apparatus 12 prints the second surplus region E22 between the first surplus region E21 and the second target region E12 by printing the same number of second surplus images B22 as the number represented by the surplus data D3. According to the configuration described above, the first surplus region E21 and the second surplus region E22 are located between the first target region E11 and the second target region E12. Therefore, the information is aggregated at a portion where the print job is switched. This improves the usability.
(2-7) The information processing apparatus 13 determines the number of first surplus images B21 constituting the first surplus region E21 based on the length of the first surplus region E21 contained in the surplus print instruction and the first print image data. The information processing apparatus 13 determines the number of second surplus images B22 constituting the second surplus region E22 based on the length of the second surplus region E22 contained in the surplus print instruction and the second print image data. The information processing apparatus 13 transmits surplus data D3 representing the number of first surplus images B21 and the number of second surplus images B22 to the printing apparatus 12. According to the configuration described above, the user can designate the length of the first surplus region E21 and the length of the second surplus region E22. The printing apparatus 12 prints the same number of first surplus images B21 and the same number of second surplus images B22 as the numbers corresponding to the lengths thus designated, respectively. Accordingly, the user can easily perform setting of the first surplus region E21 and the second surplus region E22.
(2-8) The printing apparatus 12 acquires the surplus image data representing the surplus image B2 including the information described in the one or more layout files. According to the configuration described above, the printing apparatus 12 can print the information contained in the layout file in the surplus region E2. This improves the usability.

### Third Embodiment

Then, the third embodiment will be described.

In the processing apparatus 16, the surplus region E2 may be utilized to adjust the position of the processing blade 46 in some cases. The operator of the processing apparatus 16 adjusts the position of the processing blade 46 by processing the surplus region E2 with the processing blade 46.

There is a problem that the consumption amount of the liquid increases when the printing apparatus 12 prints the product image A1 in the surplus region E2. Therefore, when the position of the processing blade 46 can be adjusted by the surplus region E2 without printing the product image A1, the consumption amount of the liquid is reduced. In the third embodiment, the printing system 11 prints the surplus region E2 by printing the surplus image B2 that does not include the product image A1 but includes the pattern image A4.

As illustrated in FIG. 17, the information processing apparatus 13 is configured to execute the transmission processing similarly to the first and second embodiments. In step S11, the information processing apparatus 13 receives the target print instruction. Specifically, the information processing apparatus 13 receives the target print instruction by receiving the print job. The information processing apparatus 13 receives the print job selected from one or more print jobs stored in the information storage unit 62. The information processing apparatus 13 receives, for example, the print job selected on the job setting screen 67. Accordingly, the information processing apparatus 13 receives the target print instruction to print the print job.

In step S12, the information processing apparatus 13 receives the surplus print instruction. The surplus print instruction may include an instruction to print the lead-in region E2A. The surplus print instruction may include an instruction to print the lead-out region E2B.

The information processing apparatus 13 receives the surplus print instruction by receiving the layout file. The information processing apparatus 13 receives one or more layout files selected from the plurality of layout files stored in the information storage unit 62. The information processing apparatus 13 receives the layout file selected in the lead-in setting field 71, the layout file selected in the lead-out setting field 72, or both thereof. Accordingly, the information processing apparatus 13 receives the surplus print instruction. The information processing apparatus 13 may receive the surplus print instruction by directly receiving the layout file from the terminal apparatus 15. The information processing apparatus 13 may receive the surplus print instruction by not only receiving the layout file but also directly receiving the setting related to the surplus region E2 through the surplus setting screen 70.

In step S13, the information processing apparatus 13 generates the surplus data D3. The information processing apparatus 13 generates the surplus data D3 based on the surplus print instruction. The information processing apparatus 13 may generate, as the surplus data D3, the layout file thus received. The information processing apparatus 13 may generate, as the surplus data D3, a parameter representing the setting related to the surplus region E2 received through the surplus setting screen 70.

In step S13, the information processing apparatus 13 may determine the number of surplus images B2 constituting the surplus region E2 based on the surplus print instruction. Similarly to the first and second embodiments, the information processing apparatus 13 may determine the number of surplus images B2 constituting the surplus region E2 based on the length of the surplus region E2 contained in the surplus print instruction and the print job.

The information processing apparatus 13 may determine the number of surplus images B2 constituting the lead-in region E2A based on the length of the lead-in region E2A contained in the surplus print instruction and the print job. The information processing apparatus 13 may determine the number of surplus images B2 constituting the lead-out region E2B based on the length of the lead-out region E2B contained in the surplus print instruction and the print job. The information processing apparatus 13 may generate the surplus data D3 including information related to the number of surplus images B2 thus determined.

In step S14, the information processing apparatus 13 generates the print data D4. The information processing apparatus 13 generates the print data D4 including the print job received in step S11. The information processing apparatus 13 generates the print data D4 including the surplus data D3 generated in step S13.

In step S15, the information processing apparatus 13 transmits the print data D4 to the printing apparatus 12. Specifically, the information processing apparatus 13 transmits the surplus data D3 and the print job to the printing apparatus 12. After ending the processing in step S15, the information processing apparatus 13 ends the transmission processing.

As shown in FIG. 18, the printing apparatus 12 is configured to execute the print processing similarly to the first and second embodiments. In step S21, the printing apparatus 12 receives the print data D4. The printing apparatus 12 receives the print job contained in the print data D4 by receiving the print data D4. In one example, the printing apparatus 12 receives the first print job J1 and the second print job J2. The printing apparatus 12 receives the surplus data D3 contained in the print data D4 by receiving the print data D4.

In step S22, the printing apparatus 12 acquires the target image data representing the target image B1 including the product image A1 from the print image data D1. In one example, the printing apparatus 12 acquires, from the print image data D1, the target image data representing the target image B1 including the product image A1 and the mark image A3. The target image B1 may include not only the product image A1 and the mark image A3 but also another image.

In step S22, the printing apparatus 12 may acquire the target image data from the print image data D1 based on the identifier such as the spot color or the layer. The printing apparatus 12 may acquire the target image data by extracting the image frame F1 indicating the target image B1 from the plurality of image frames F1 contained in the print image data D1. The printing apparatus 12 may combine the target image data with other data. The printing apparatus 12 may combine the target image data with data stored in the printing apparatus 12.

In step S23, the printing apparatus 12 acquires, from the print image data D1, the surplus image data representing the surplus image B2 that does not include the product image A1 and includes the pattern image A4. In one example, the printing apparatus 12 acquires, from the print image data D1, surplus image data representing the surplus image B2 that does not include the product image A1 and includes the mark image A3 and the pattern image A4. The surplus image B2 may include not only the mark image A3 and the pattern image A4 but also other images.

In step S23, the printing apparatus 12 acquires the surplus image data from the print image data D1 so that the size of the surplus image B2 matches the size of the target image B1. The printing apparatus 12 acquires the target image data representing the target image B1 and the surplus image data representing the surplus image B2 based on the image frame F1. Therefore, the size of the surplus image B2 matches the size of the target image B1.

In step S23, the printing apparatus 12 may acquire the surplus image data from the print image data D1 based on the identifier such as the spot color or the layer. The printing apparatus 12 may acquire the surplus image data by extracting the image frame F1 indicating the surplus image B2 from the plurality of image frames F1 contained in the print image data D1. For example, the printing apparatus 12 may acquire the surplus image data by extracting the pattern image A4 from the print image data D1 based on the identifier. The printing apparatus 12 may combine the surplus image data with other data. The printing apparatus 12 may combine the surplus data D3 with the surplus image data, or may combine the data stored in the printing apparatus 12 with the surplus image data.

The printing apparatus 12 may acquire the surplus image data representing the surplus image B2 including information described in the text data stored in the printing apparatus 12. The printing apparatus 12 may acquire the surplus image data by combining the print image data D1 and the text data with each other. For example, the printing apparatus 12 may acquire the surplus image data representing the surplus image B2 in which a text such as START OF JOB or END OF JOB is described.

In step S23, the printing apparatus 12 may acquire the surplus image data representing the surplus image B2 including the information described in the layout file. The printing apparatus 12 may acquire the surplus image data by combining the print image data D1 and the layout file. For example, the printing apparatus 12 may acquire surplus image data representing the surplus image B2 in which information related to printing and processing is described.

In step S24, the printing apparatus 12 executes region print processing. The printing apparatus 12 prints the target region E1 by printing a target image B1. The printing apparatus 12 prints the target region E1 by printing the same number of target images B1 as the number represented by the print job. The printing apparatus 12 prints the surplus region E2 by printing a surplus image B2. The printing apparatus 12 prints the surplus region E2 by printing the same number of surplus images B2 as the number represented by the surplus data D3. Specifically, the printing apparatus 12 prints the lead-in region E2A and prints the lead-out region E2B by printing the same number of surplus images B2 as the number represented by the surplus data D3. The specific processing in step S24 will be described later with reference to FIG. 22.

In step S25, the printing apparatus 12 determines whether there is a next print job. When there is the next print job, the printing apparatus 12 returns the process to step S22. As a result, the printing apparatus 12 prints the target region E1 for each print job. The printing apparatus 12 prints the surplus region E2 for each of the print jobs. The printing apparatus 12 prints the lead-in region E2A for each print job. The printing apparatus 12 prints the lead-out region E2B for each print job. When there is no next print job, the printing apparatus 12 ends the print processing.

As shown in FIG. 22, the printing apparatus 12 executes the region print processing similarly to the second embodiment. In the third embodiment, similarly to the second embodiment, the printing apparatus 12 does not determine whether to print the surplus region E2 with the first pattern P1 or to print the surplus region E2 with the second pattern P2 in the region print processing. Therefore, the surplus data D3 is not required to include a plurality of patterns regarding the layout of the surplus region E2.

In step S41, the printing apparatus 12 prints the lead-in region E2A. The printing apparatus 12 prints the same number of surplus images B2 as the number represented by the surplus data D3. As a result, the lead-in region E2A in which the surplus images B2 including the pattern images A4 are arranged is printed.

When printing the lead-in region E2A, the printing apparatus 12 may print the pattern image A4 with the print color associated with the spot color based on the conversion information contained in the print job or the layout file. The printing apparatus 12 may print the pattern image A4 with the print color associated with the spot color based on, for example, the conversion information contained in the layout file for setting the lead-in region E2A. The printing apparatus 12 may print the surplus image B2 after converting the pattern image A4 into the print color expressed by C, M, Y, and K.

In step S42, the printing apparatus 12 prints the target region E1. Specifically, the printing apparatus 12 prints the same number of target images B1 as the number represented by the print job. As a result, the target region E1 in which the target images B1 including the product images A1 are arranged is printed.

In step S43, the printing apparatus 12 prints the lead-out region E2B. The printing apparatus 12 prints the same number of surplus images B2 as the number represented by the surplus data D3. As a result, the lead-out region E2B in which the surplus images B2 including the pattern images A4 are arranged is printed.

When printing the lead-out region E2B, the printing apparatus 12 may print the pattern image A4 with the print color associated with the spot color based on the conversion information contained in the print job or the layout file. The printing apparatus 12 may print the pattern image A4 with the print color associated with the spot color based on, for example, the conversion information contained in the layout file for setting the lead-out region E2B. The printing apparatus 12 may print the surplus image B2 after converting the pattern image A4 into the print color expressed by C, M, Y, and K.

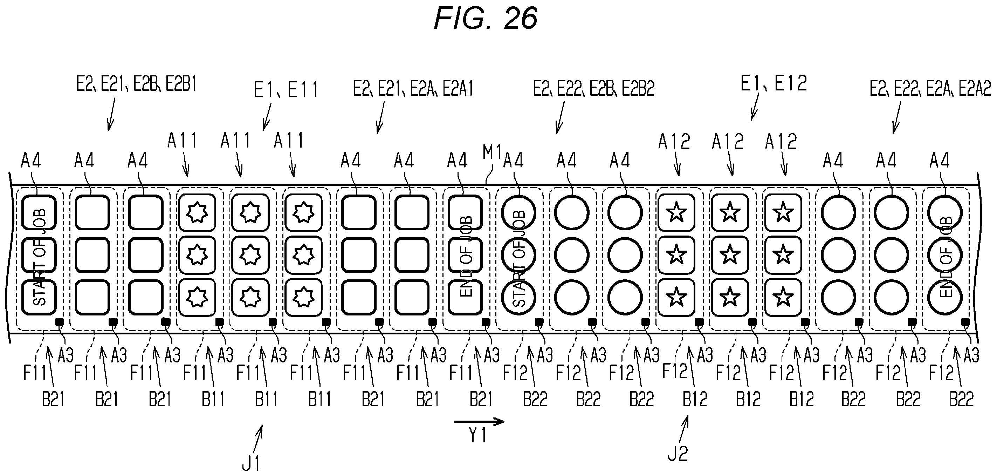

As shown in FIG. 26, by the printing apparatus 12 executing the print processing, the surplus region E2 in which the surplus images B2 including the pattern images A4 are arranged is printed. The operator of the processing apparatus 16 adjusts the position of the processing blade 46 by processing the pattern image A4 with the processing blade 46. Therefore, the consumption amount of the liquid is reduced compared to when the surplus image B2 includes the product image A1.

### Functions and Advantages of Third Embodiment

Then, functions and advantages of the third embodiment will be described.
(3-1) The information processing apparatus 13 receives the target print instruction to print the target region E1 by receiving one or more print jobs selected from the plurality of print jobs. The information processing apparatus 13 receives the surplus print instruction to print the surplus region E2. The information processing apparatus 13 transmits the surplus data D3 and one or more print jobs based on the surplus print instruction to the printing apparatus 12. The printing apparatus 12 acquires, from the print image data D1, the target image data representing the target image B1 including the product image A1. The printing apparatus 12 acquires, from the print image data D1, the surplus image data which represents the surplus image B2 that does not include the product image A1 and includes the pattern image A4, and which represents the surplus image B2 the same in size as the target image B1. The printing apparatus 12 prints the target region E1 by printing a target image B1. The printing apparatus 12 prints the surplus region E2 by printing a surplus image B2. According to the configuration described above, in the surplus region E2, the product image A1 is not printed but the pattern image A4 is printed. In the processing apparatus 16, the processing blade 46 can be adjusted with the pattern image A4. Therefore, the consumption amount of the liquid is reduced compared to when the product image A1 is printed in the surplus region E2.
(3-2) The printing apparatus 12 acquires the surplus image data by extracting the pattern image A4 from the print image data D1 based on the spot color. According to the configuration described above, the printing apparatus 12 can easily acquire the surplus image data from the print image data D1.
(3-3) The printing apparatus 12 acquires the surplus image data by identifying the pattern image A4 from the print image data D1 based on the name provided to the spot color. According to the configuration described above, the printing apparatus 12 can easily acquire the surplus image data from the print image data D1.
(3-4) The printing apparatus 12 acquires the surplus image data by extracting the pattern image A4 from the print image data D1 based on the layer. According to the configuration described above, the printing apparatus 12 can easily acquire the surplus image data from the print image data D1.
(3-5) The printing apparatus 12 acquires the surplus image data representing the surplus image B2 including the information described in the text data stored in the printing apparatus 12. According to the configuration described above, the surplus region E2 with the surplus image B2 including the information of the text data is printed. This improves the usability.
(3-6) The information processing apparatus 13 receives the surplus print instruction by receiving one or more layout files selected from the plurality of layout files. The printing apparatus 12 acquires the surplus image data representing the surplus image B2 including the information described in the one or more layout files. According to the configuration described above, the surplus region E2 with the surplus image B2 including the information described in the layout file is printed. This improves the usability.
(3-7) The printing apparatus 12 prints the pattern image A4 with the print color represented by the conversion information. According to the configuration described above, the printing apparatus 12 can easily print the pattern image A4. For example, the position of the processing blade 46 is easily adjusted since the pattern image A4 is printed with a color that is easy for the operator of the processing apparatus 16 to visually recognize.

### Fourth Embodiment

Then, the fourth embodiment will be described.

In the processing apparatus 16, in some cases, the position of the processing blade 46 may be adjusted or the processing blade 46 may be replaced. For example, in the processing apparatus 16, it is necessary to adjust the position of the processing blade 46 every time the processing is performed on the medium M1 a predetermined number of times, or to replace the processing blade 46 in accordance with the next product image A1. In such a case, when the processing apparatus 16 is configured to automatically stop, the operator does not need to monitor the processing apparatus 16, and therefore, the time and effort required for the processing are reduced. Therefore, the printing system 11 prints an image on the medium M1 so as to omit the mark image A3 at a position desired by the user.

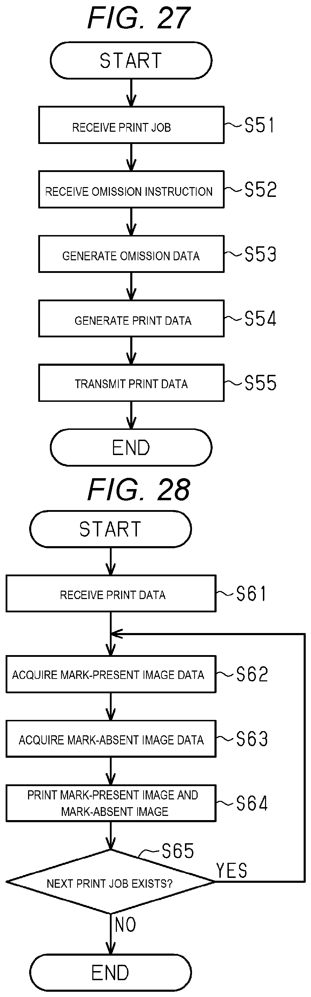

As shown in FIG. 27, the information processing apparatus 13 is configured to execute the transmission processing. The transmission processing is realized by the information controller 61 executing a program stored in the information storage unit 62. The transmission processing is processing of transmitting the print data D4 to the printing apparatus 12. The transmission processing is started when, for example, the information processing apparatus 13 causes the terminal apparatus 15 to display the job setting screen 67.

In step S51, the information processing apparatus 13 receives the print job. Specifically, the information processing apparatus 13 receives one or more print jobs selected from the plurality of print jobs stored in the information storage unit 62. That is, the information processing apparatus 13 receives one or more print jobs selected on the job setting screen 67. The information processing apparatus 13 may receive the first print job J1 and the second print job J2 selected from the plurality of print jobs.

In step S52, the information processing apparatus 13 receives the omission instruction. By receiving the print job thus selected, the information processing apparatus 13 may receive the omission instruction contained in the job data D2 of that print job. The information processing apparatus 13 may receive the omission instruction contained in the layout files by receiving one or more layout files selected from the plurality of layout files stored in the information storage unit 62. For example, the information processing apparatus 13 may directly receive the omission instruction from the terminal apparatus 15. The omission instruction is an instruction to omit the mark image A3 from the target region E1, an instruction to omit the mark image A3 from the surplus region E2, or the like.

In step S53, the information processing apparatus 13 generates the omission data based on the omission instruction. The omission data is, for example, data for printing the mark-absent image C4 that does not include the mark image A3. The omission data is data for printing the mark-absent image C4 at a position represented by the omission instruction. The omission data may be data for conveying the medium M1 without printing at the position represented by the omission instruction.

In step S54, the information processing apparatus 13 generates the print data D4. The information processing apparatus 13 generates the print data D4 including the print job received in step S51. The information processing apparatus 13 generates the print data D4 including the omission data generated in step S53.

In step S55, the information processing apparatus 13 transmits the print data D4 to the printing apparatus 12. Specifically, the information processing apparatus 13 transmits the omission data and the one or more print jobs to the printing apparatus 12. The information processing apparatus 13 may transmit the omission data, the first print job J1, and the second print job J2 to the printing apparatus 12. After ending the processing in step S55, the information processing apparatus 13 ends the transmission processing.

As shown in FIG. 28, the printing apparatus 12 is configured to execute the print processing. The print processing is realized by the processing controller 22, the print controller 32, and the like executing a program stored in the processing storage unit 23, the print storage unit 33, and the like. The print processing is processing of printing an image on the medium M1 based on the print data D4. The print processing starts when the printing apparatus 12 receives the print data D4.

In step S61, the printing apparatus 12 receives the print data D4. The printing apparatus 12 receives the print job contained in the print data D4 by receiving the print data D4. The printing apparatus 12 receives the omission data contained in the print data D4 by receiving the print data D4.

In step S62, the printing apparatus 12 acquires the mark-present image data representing the mark-present image C3 from the print image data D1. The mark-present image C3 may be an image including the product image A1 or an image that does not include the product image A1. The mark-present image C3 may be printed as the target image B1 or may be printed as the surplus image B2. That is, the mark-present image data may be the target image data or may be the surplus image data. The printing apparatus 12 may acquire the mark-present image data by acquiring the target image data representing the target image B1 including the mark image A3 from the print image data D1. The printing apparatus 12 may acquire the mark-present image data by acquiring the surplus image data representing the surplus image B2 including the mark image A3 from the print image data D1.

The printing apparatus 12 may acquire the mark-present image data from the print image data D1 based on the identifier such as the spot color or the layer. The printing apparatus 12 may acquire the mark-present image data by extracting the image frame F1 of the mark-present image C3 from the plurality of image frames F1 contained in the print image data D1. The printing apparatus 12 may combine other data with the mark-present image data. The printing apparatus 12 may combine the surplus data D3 with the mark-present image data. For example, the printing apparatus 12 may acquire the mark-present image data representing the mark-present image C3 in which the information related to printing and processing is described.

In step S63, the printing apparatus 12 may acquire the mark-absent image data representing the mark-absent image C4 from the print image data D1. The mark-absent image C4 may be an image including the product image A1 or may be an image that does not include the product image A1. The mark-absent image C4 may be printed as the target image B1 or may be printed as the surplus image B2. That is, the mark-absent image data may be the target image data or may be the surplus image data. The printing apparatus 12 may acquire the mark-absent image data by acquiring the target image data representing the target image B1 that does not include the mark image A3 from the print image data D1. The printing apparatus 12 may acquire the mark-absent image data by acquiring the surplus image data representing the surplus image B2 that does not include the mark image A3 from the print image data D1.

The printing apparatus 12 may acquire the mark-absent image data based on the identifier such as the spot color and the layer. The printing apparatus 12 may acquire the mark-absent image data by extracting the image frame F1 of the mark-absent image C4 from the plurality of image frames F1 contained in the print image data D1.

The printing apparatus 12 may acquire the mark-absent image data by combining superimposition data with the print image data D1. The superimposition data is image data to be superimposed on the mark image A3. The superimposition data is stored in the print storage unit 33. The superimposition data represents a blank image. The printing apparatus 12 combines the superimposition data with the print image data D1 so as to overwrite the mark image A3. That is, the printing apparatus 12 acquires the mark-absent image C4 by superimposing the blank image on the mark image A3. The printing apparatus 12 may combine other data with the mark-absent image data. The printing apparatus 12 may combine the surplus data D3 with the mark-absent image data. In this case, the mark-absent image C4 in which the information contained in the surplus data D3 is described is printed.

In step S64, the printing apparatus 12 prints the mark-present image C3 and the mark-absent image C4. The printing apparatus 12 prints the mark-present image C3 and the mark-absent image C4 by the image frame F1.

In step S64, the printing apparatus 12 prints the plurality of mark-present images C3. For example, the printing apparatus 12 prints the mark-present image C3 by printing the target image B1 including the mark image A3. The printing apparatus 12 prints the mark-present image C3 by printing the surplus image B2 including the mark image A3. The printing apparatus 12 may print only the target region E1, or may print the surplus region E2 together with the target region E1 by printing the mark-present image C3. The plurality of mark-present images C3 may constitute only the target region E1, or may constitute the target region E1 and the surplus region E2.

In step S64, the printing apparatus 12 prints one or more mark-absent images C4. For example, the printing apparatus 12 prints the mark-absent image C4 by printing the target image B1 that does not include the mark image A3. The printing apparatus 12 prints the mark-absent image C4 by printing the surplus image B2 that does not include the mark image A3. The printing apparatus 12 may print the target region E1 or may print the surplus region E2 by printing the mark-absent image C4. The one or more mark-absent images C4 may constitute the target region E1 or may constitute the surplus region E2.

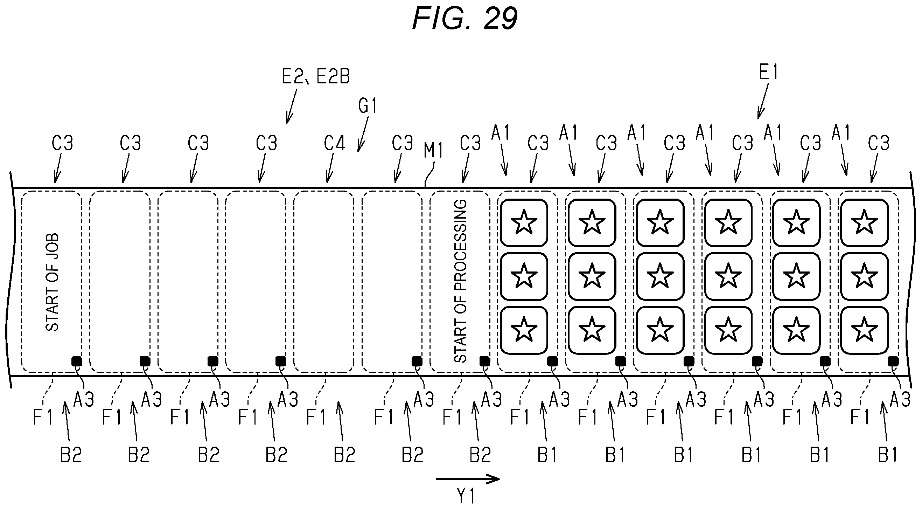

In step S64, the printing apparatus 12 forms a mark-absent region G1 at a position that is represented by the omission data and is adjacent to at least one mark-present image C3 out of the plurality of mark-present images C3. Specifically, the printing apparatus 12 forms the mark-absent region G1 by printing the mark-absent image C4 at a position that is represented by the omission data and is adjacent to at least one of the mark-present images C3. For example, the printing apparatus 12 forms the mark-absent region G1 at a position represented by the omission data and between two adjacent mark-present images C3 out of the plurality of mark-present images C3. In one example, the printing apparatus 12 forms the mark-absent region G1 by printing the mark-absent image C4 at a position represented by the omission data and between the two adjacent mark-present images C3 out of the plurality of mark-present images C3. The mark-absent region G1 is a region that does not include the mark image A3. The mark-absent region G1 is illustrated in, for example, FIG. 29. In one example, the mark-absent region G1 is a region where the mark-absent image C4 is printed. The mark-absent region G1 may be formed between the mark-present images C3 or may be formed at an end portion in the plurality of mark-present images C3. That is, the mark-absent image C4 may be printed between the mark-present images C3, or may be printed at the end portion in the plurality of mark-present images C3. The mark-absent image C4 may be located in the target region E1 or may be located in the surplus region E2.

In step S65, the printing apparatus 12 determines whether there is a next print job. When there is the next print job, the printing apparatus 12 returns the process to step S62. When there is no next print job, the printing apparatus 12 ends the print processing.

As illustrated in FIG. 29, the medium M1 on which the mark-present image C3 and the mark-absent image C4 are arranged can be obtained by the printing apparatus 12 executing the print processing. In this way, the printing apparatus 12 prints the image row in which the plurality of mark-present images C3 is arranged such that one or more mark-present images C3 out of the plurality of mark-present images C3 are replaced with the mark-absent images C4 based on the omission data.

In the example illustrated in FIG. 29, the plurality of mark-present images C3 is arranged over the target region E1 and the surplus region E2. The mark-absent image C4 is located in the surplus region E2. The mark-absent image C4 is located between the mark-present images C3 located in the surplus region E2. The mark-absent image C4 may be located between the mark-present images C3 located in the target region E1. The mark-absent image C4 may be located between the mark-present image C3 in the target region E1 and the mark-present image C3 in the surplus region E2 adjacent to each other. The mark-absent image C4 may be located in an end portion of the surplus region E2.

The mark-present image C3 is printed by the image frame F1. Therefore, the interval between the mark images A3 in the two mark-present images C3 located across the mark-absent region G1 becomes larger than the interval between the mark images A3 in the two adjacent mark-present images C3. Therefore, the processing apparatus 16 automatically stops in the mark-absent region G1.

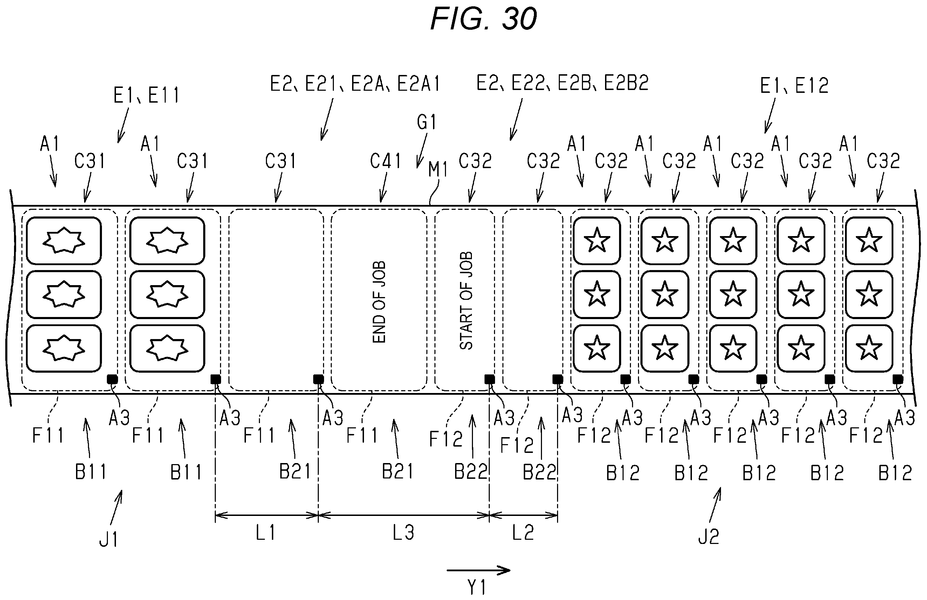

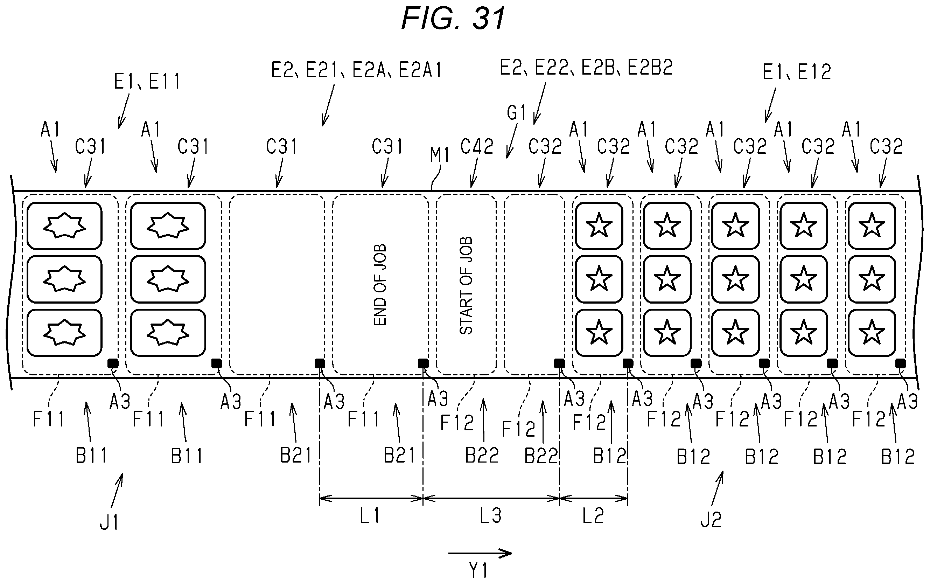

As shown in FIGS. 30 and 31, a plurality of print jobs may be executed consecutively in the printing apparatus 12 in some cases. For example, the printing apparatus 12 may continuously execute the first print job J1 and the second print job J2 in some cases. In this case, the user may locate the mark-absent image C4 at the boundary between the first print job J1 and the second print job J2 in order to indicate switching between the print jobs. As a result, the processing apparatus 16 stops at the boundary between the print jobs. Accordingly, the operator of the processing apparatus 16 can change the settings of the processing apparatus 16 in accordance with the print job.

In the example illustrated in FIGS. 30 and 31, the printing apparatus 12 executes the second print job J2 and the first print job J1 in this order. In this case, for example, the user prints the mark-absent image C4 in the first lead-in region E2A1 or the second lead-out region E2B2. In the example shown in FIG. 30, the mark-absent image C4 is printed at a position in the first lead-in region E2A1 and adjacent to the second lead-out region E2B2. In the example shown in FIG. 31, the mark-absent image C4 is printed at a position in the second lead-out region E2B2 and adjacent to the first lead-in region E2A1.

As illustrated in FIG. 28, when continuously executing a plurality of print jobs, the printing apparatus 12 executes the processing in steps S62 to S64 for each print job. That is, the printing apparatus 12 acquires the mark-present image data and the mark-absent image data, and prints the mark-present image C3 and the mark-absent image C4 for each print job.

The printing apparatus 12 acquires, from the first print image data, first mark-present image data representing a first mark-present image C31. The first mark-present image C31 is the mark-present image C3 by the first print job J1. In one example, the first mark-present image C31 is an image including the first product image A11 and the mark image A3, but is not limited thereto. The first mark-present image C31 may be printed as the first target image B11 or may be printed as the first surplus image B21. The printing apparatus 12 may acquire the first mark-present image data by acquiring the first target image data representing the first target image B11 including the mark image A3 from the first print image data. The printing apparatus 12 may acquire the first mark-present image data by acquiring the first surplus image data representing the first surplus image B21 including the mark image A3 from the first print image data.

The printing apparatus 12 acquires first mark-absent image data representing a first mark-absent image C41 from the first print image data. The first mark-absent image C41 is the mark-absent image C4 by the first print job J1. In one example, the first mark-absent image C41 is an image that does not include the first product image A11 and the mark image A3, but is not limited thereto. The first mark-absent image C41 may be printed as the first target image B11 or may be printed as the first surplus image B21. The printing apparatus 12 may acquire the first mark-absent image data by acquiring the first target image data representing the first target image B11 that does not include the mark image A3 from the first print image data. The printing apparatus 12 may acquire the first mark-absent image data by acquiring the first surplus image data representing the first surplus image B21 that does not include the mark image A3 from the first print image data.

The printing apparatus 12 acquires second mark-present image data representing a second mark-present image C32 from the second print image data. The second mark-present image C32 is the mark-present image C3 by the second print job J2. In one example, the second mark-present image C32 is an image including the second product image A12 and the mark image A3, but is not limited thereto. The second mark-present image C32 may be printed as the second target image B12 or may be printed as the second surplus image B22. The printing apparatus 12 may acquire the second mark-present image data by acquiring the second target image data representing the second target image B12 including the mark image A3 from the second print image data. The printing apparatus 12 may acquire the second mark-present image data by acquiring the second surplus image data representing the second surplus image B22 including the mark image A3 from the second print image data.

The printing apparatus 12 acquires second mark-absent image data representing a second mark-absent image C42 from the second print image data. The second mark-absent image C42 is the mark-absent image C4 by the second print job J2. In one example, the second mark-absent image C42 is an image that does not include the second product image A12 and the mark image A3, but is not limited thereto. The second mark-absent image C42 may be printed as the second target image B12 or may be printed as the second surplus image B22. The printing apparatus 12 may acquire the second mark-absent image data by acquiring the second target image data representing the second target image B12 that does not include the mark image A3 from the second print image data. The printing apparatus 12 may acquire the second mark-absent image data by acquiring the second surplus image data representing the second surplus image B22 that does not include the mark image A3 from the second print image data.

The printing apparatus 12 prints the mark-present image C3 and the mark-absent image C4 in step S64 for each print job. The printing apparatus 12 prints the first mark-present image C31 and the first mark-absent image C41. The printing apparatus 12 prints the first mark-present image C31 and the first mark-absent image C41 by the first image frame F11. The printing apparatus 12 prints the second mark-present image C32 and the second mark-absent image C42. The printing apparatus 12 prints the second mark-present image C32 and the second mark-absent image C42 by the second image frame F12.

As shown in FIGS. 30 and 31, the printing apparatus 12 prints a plurality of first mark-present images C31. For example, the printing apparatus 12 prints the first mark-present image C31 by printing the first target image B11 including the mark image A3. The printing apparatus 12 prints the first mark-present image C31 by printing the first surplus image B21 including the mark image A3. The printing apparatus 12 may print only the first target region E11, or may print the first surplus region E21 together with the first target region E11 by printing the first mark-present image C31. The plurality of first mark-present images C31 may constitute only the first target region E11, or may constitute the first target region E11 and the first surplus region E21.

In the first print job J1, the mark images A3 are arranged at first intervals L1. The first interval L1 is an interval between the mark images A3 in two first mark-present images C31 adjacent to each other. The first interval L1 is an interval between the mark images A3 adjacent to each other in the image row by the first print job J1. The first interval L1 is determined by the size of the first image frame F11.

The printing apparatus 12 prints a plurality of second mark-present images C32. For example, the printing apparatus 12 prints the second mark-present image C32 by printing the second target image B12 including the mark image A3. The printing apparatus 12 prints the second mark-present image C32 by printing the second surplus image B22 including the mark image A3. The printing apparatus 12 may print only the second target region E12 or may print the second surplus region E22 together with the second target region E12 by printing the second mark-present image C32. The plurality of second mark-present images C32 may constitute only the second target region E12, or may constitute the second target region E12 and the second surplus region E22.

In the second print job J2, the mark images A3 are arranged at second intervals L2. The second interval L2 is an interval between the mark images A3 in two second mark-present images C32 adjacent to each other. The second interval L2 is an interval between the mark images A3 adjacent to each other in the image row by the second print job J2. The second interval L2 is determined by the size of the second image frame F12.

As shown in FIG. 30, the printing apparatus 12 prints one or more first mark-absent images C41. For example, the printing apparatus 12 prints the first mark-absent image C41 by printing the first surplus image B21 that does not include the mark image A3. In one example, one or more first mark-absent images C41 constitute the first surplus region E21.

The printing apparatus 12 prints the first mark-absent image C41 at a position that is represented by the omission data and is adjacent to at least one of the plurality of first mark-present images C31. In the example illustrated in FIG. 30, the first mark-absent image C41 is located between the first mark-present image C31 and the second mark-present image C32. That is, the first mark-absent image C41 is printed at a position located between the first mark-present image C31 and the second mark-present image C32. Accordingly, the processing apparatus 16 can stop at the boundary between the print jobs.

As shown in FIG. 31, the printing apparatus 12 prints one or more second mark-absent images C42. For example, the printing apparatus 12 prints the second mark-absent image C42 by printing the second surplus image B22 that does not include the mark image A3. In one example, one or more second mark-absent images C42 constitute the second surplus region E22.

The printing apparatus 12 prints the second mark-absent image C42 at a position that is represented by the omission data and is adjacent to at least one of the plurality of second mark-present images C32. In the example illustrated in FIG. 31, the second mark-absent image C42 is located between the first mark-present image C31 and the second mark-present image C32. That is, the second mark-absent image C42 is printed at a position located between the first mark-present image C31 and the second mark-present image C32. Accordingly, the processing apparatus 16 can stop at the boundary between the print jobs.

In both the example shown in FIG. 30 and the example shown in FIG. 31, the mark-absent image C4 is located between the first mark-present image C31 and the second mark-present image C32. As a result, a boundary interval L3 becomes larger than the first interval L1 or becomes larger than the second interval L2. The boundary interval L3 is an interval between the mark images A3 in the first mark-present image C31 and the second mark-present image C32 located across the mark-absent region G1. In one example, the boundary interval L3 is an interval between the mark images A3 in the first mark-present image C31 and the second mark-present image C32 located across the mark-absent image C4. When the boundary interval L3 becomes larger than the first interval L1 or becomes larger than the second interval L2, the processing apparatus 16 can be stopped.

Depending on the print job, the first interval L1 and the second interval L2 may be different from each other. This is because the size of the first image frame F11 is different from the size of the second image frame F12. In the example shown in FIGS. 30 and 31, the first interval L1 is larger than the second interval L2. That is, the size of the first image frame F11 is larger than the size of the second image frame F12. Specifically, in the conveyance direction Y1, the length of the first image frame F11 is larger than the length of the second image frame F12.

When the first interval L1 and the second interval L2 are different from each other, the boundary interval L3 may be smaller than the first interval L1 or may be smaller than the second interval L2 in some cases. For example, when the second mark-absent image C42 is printed as in the example illustrated in FIG. 31, there is a possibility that the boundary interval L3 becomes smaller than the first interval L1. When a difference in size between the first image frame F11 and the second image frame F12 is large, the boundary interval L3 tends to be smaller than the first interval L1. In this case, since the boundary interval L3 fails to be larger than the detection interval of the detector 47, there is a possibility that the processing apparatus 16 fails to stop in the mark-absent region G1.

In this regard, the printing apparatus 12 is configured to print the second mark-absent image C42 such that the boundary interval L3 is larger than the first interval L1 and the second interval L2 when the omission data represents that the second mark-absent image C42 is printed between the plurality of first mark-present images C31 and the plurality of second mark-present images C32. That is, the printing apparatus 12 is configured to print the mark-absent image C4 such that the boundary interval L3 is larger than the first interval L1 and the second interval L2 when the omission data represents that the mark-absent image C4 is printed at the boundary between the first print job J1 and the second print job J2. For example, the printing apparatus 12 may print the plurality of second mark-absent images C42 between the first mark-present image C31 and the second mark-present image C32 so that the boundary interval L3 is larger than the first interval L1 and the second interval L2. For example, the printing apparatus 12 may print the plurality of first mark-absent images C41 between the first mark-present image C31 and the second mark-present image C32 so that the boundary interval L3 is larger than the first interval L1 and the second interval L2. Alternatively, the printing apparatus 12 may increase the size of the mark-absent image C4 so that the boundary interval L3 is larger than the first interval L1 and the second interval L2. The printing apparatus 12 may edit the mark-absent image data so as to stretch the mark-absent image C4.

The first print job J1 and the second print job J2 are provided with the respective names simply for the sake of distinction. Therefore, out of the two consecutive print jobs in FIGS. 30 and 31, the print job to be printed first may be defined as the first print job J1, and the print job to be printed later may be defined as the second print job J2. That is, the first interval L1 and the second interval L2 may be substituted for each other, and the first mark-absent image C41 and the second mark-absent image C42 may be substituted for each other.

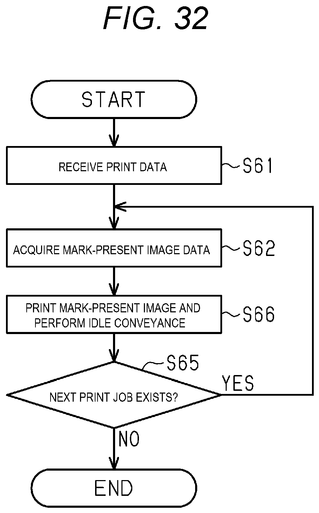

As shown in FIG. 32, the print processing may be changed. The print processing illustrated in FIG. 32 is different from the print processing illustrated in FIG. 28 in that the omission data is data for performing idle conveyance at the position indicated by the omission instruction. That is, the printing apparatus 12 may perform the idle conveyance instead of printing of the mark-absent image C4. The idle conveyance is an operation of conveying the medium M1 without printing. In FIG. 32, description of processing common to the print processing shown in FIG. 28 will be omitted.

In step S66, the printing apparatus 12 executes printing of the mark-present image C3 and the idle conveyance. The printing apparatus 12 executes the idle conveyance at the position represented by the omission data while printing the mark-present image C3.

In step S66, the printing apparatus 12 prints a plurality of mark-present images C3. For example, the printing apparatus 12 prints the mark-present image C3 by printing the target image B1 including the mark image A3. The printing apparatus 12 prints the mark-present image C3 by printing the surplus image B2 including the mark image A3. The printing apparatus 12 may print only the target region E1, or may print the surplus region E2 together with the target region E1 by printing the mark-present image C3.

In step S66, the printing apparatus 12 executes the idle conveyance. Specifically, the printing apparatus 12 performs the idle conveyance so as to form the mark-absent region G1 at a position represented by the omission data and adjacent to at least one mark-present image C3. The printing apparatus 12 executes the idle conveyance so as to form the mark-absent region G1 at the position represented by the omission data and between two adjacent mark-present images C3. On this occasion, the printing apparatus 12 performs the idle conveyance so as to form the mark-absent region G1 in which the interval between the mark images A3 in the two mark-present images C3 adjacent to each other across the mark-absent region G1 is larger than the interval between the mark images A3 in the two mark-present images C3 adjacent to each other without the mark-absent region G1 interposed therebetween. The mark-absent region G1 may be formed in the target region E1, may be formed in the surplus region E2, or may be formed between the target region E1 and the surplus region E2. Instead of the idle conveyance, the printing apparatus 12 may perform idle ejection in which the liquid is not ejected from the printing unit 31 to the medium M1 when the printing unit 31 passes above the mark-absent region G1.

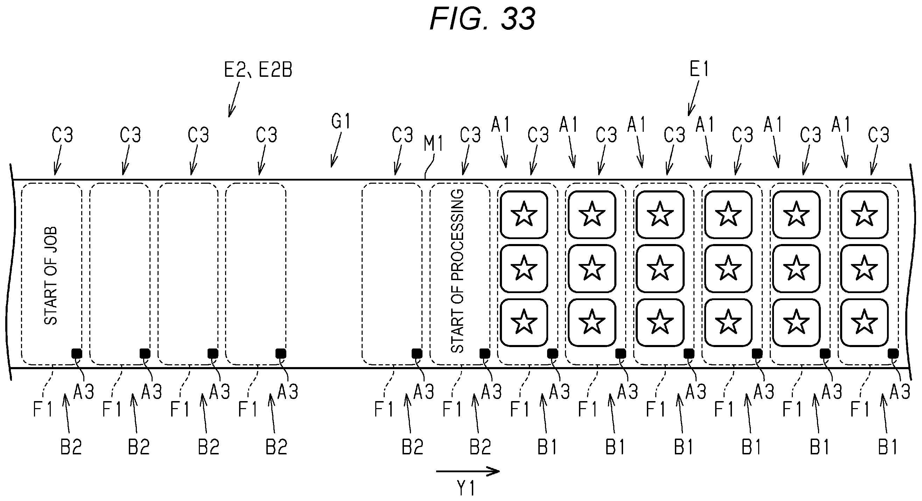

As illustrated in FIG. 33, by the printing apparatus 12 executing the print processing illustrated in FIG. 32, the medium M1 on which the mark-present images C3 are arranged can be obtained. As described above, the printing apparatus 12 executes the idle conveyance so as to insert the mark-absent region G1 into the image row in which the plurality of mark-present images C3 are arranged based on the omission data. Accordingly, the processing apparatus 16 stops in the mark-absent region G1.

In the example illustrated in FIG. 33, the plurality of mark-present images C3 is arranged over the target region E1 and the surplus region E2. The mark-absent region G1 is located in the surplus region E2. The mark-absent region G1 is located between the mark-present images C3 located in the surplus region E2. The mark-absent region G1 may be located between the mark-present images C3 located in the target region E1. The mark-absent region G1 may be located between the mark-present image C3 in the target region E1 and the mark-present image C3 in the surplus region E2 adjacent to each other. The mark-absent region G1 may be located at an end portion of the surplus region E2.

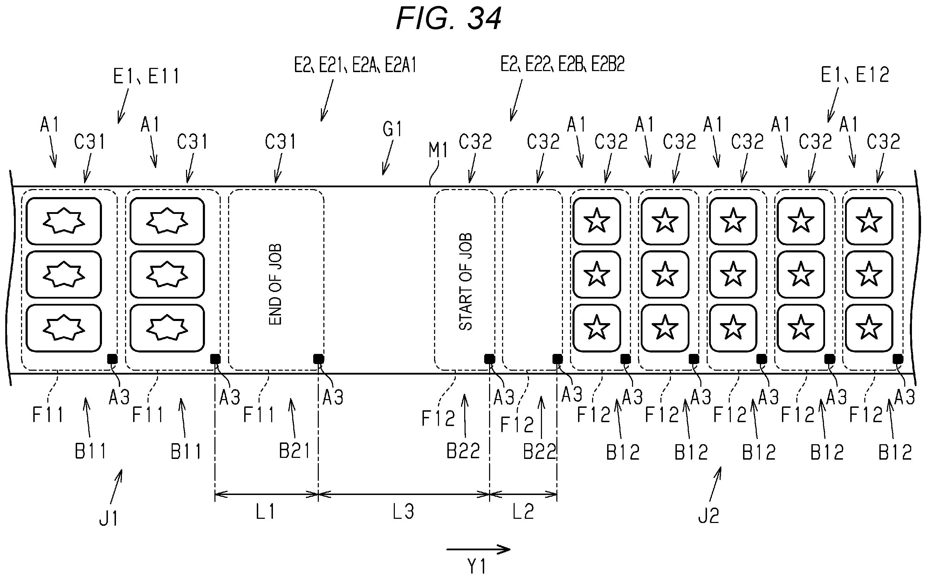

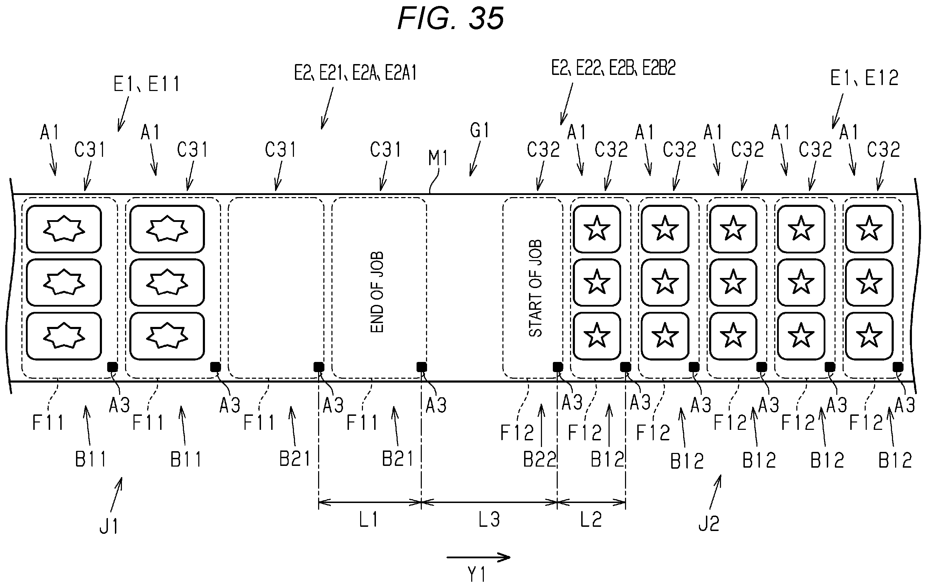

As shown in FIGS. 34 and 35, a plurality of print jobs may be executed consecutively in the printing apparatus 12 in some cases. For example, the printing apparatus 12 may continuously execute the first print job J1 and the second print job J2 in some cases. In this case, the user may form the mark-absent region G1 on the boundary between the first print job J1 and the second print job J2 by the idle conveyance in order to indicate switching between the print jobs. As a result, the processing apparatus 16 stops at the boundary between the print jobs. The example illustrated in FIG. 34 is an example in which the idle conveyance is executed instead of printing of the first mark-absent image C41 in the example illustrated in FIG. 31. The example illustrated in FIG. 35 is an example in which the idle conveyance is executed instead of printing of the second mark-absent image C42 in the example illustrated in FIG. 32.

The printing apparatus 12 performs the idle conveyance so as to form the mark-absent region G1 between the first mark-present image C31 and the second mark-present image C32. Specifically, when the omission data represents that the mark-absent region G1 is formed between the plurality of first mark-present images C31 and the plurality of second mark-present images C32, the printing apparatus 12 forms the mark-absent region G1 such that the boundary interval L3 is larger than the first interval L1 and the second interval L2. That is, when the omission data represents that the mark-absent region G1 is formed at the boundary between the first print job J1 and the second print job J2, the printing apparatus 12 executes the idle conveyance so as to form the mark-absent region G1 in which the boundary interval L3 is larger than the first interval L1 and the second interval L2. Accordingly, the processing apparatus 16 can stop at the boundary between the first print job J1 and the second print job J2.

### Functions and Advantages of Fourth Embodiment

Then, functions and advantages of the fourth embodiment will be described.
(4-1) The printing apparatus 12 forms the mark-absent region G1 that does not include the mark image A3 at a position represented by the omission data and between the two mark-present images C3 adjacent to each other out of the plurality of mark-present images C3. According to the configuration described above, the mark-absent region G1 is formed based on the print image data D1 and the omission data. The processing apparatus 16 that detects the mark image A3 automatically stops in the mark-absent region G1. Therefore, the time and effort required for the processing are reduced.
(4-2) The printing apparatus 12 forms the mark-absent region G1 by printing the mark-absent image C4 at the position represented by the omission data and between the two mark-present images C3 adjacent to each other. According to the configuration described above, the printing system 11 can easily form the mark-absent region G1.
(4-3) When the omission data represents that the mark-absent image C4 is printed between the plurality of first mark-present images C31 and the plurality of second mark-present images C32, the printing apparatus 12 prints the mark-absent image C4 such that the interval between the mark images A3 in the first mark-present image C31 and the second mark-present image C32 located across the mark-absent image C4 is larger than the interval between the mark images A3 in the two first mark-present images C31 adjacent to each other and the interval between the mark images A3 in the two second mark-present images C32 adjacent to each other. According to the configuration described above, when the mark-absent image C4 is located at the boundary between the first print job J1 and the second print job J2, the processing apparatus 16 automatically stops at the boundary between the first print job J1 and the second print job J2. This reduces the time and effort required for the processing.
(4-4) The printing apparatus 12 acquires mark-absent image data representing the mark-absent image C4 that does not include the first product image A11 and the mark image A3 from the first print image data. According to the configuration described above, since the mark-absent image C4 does not include the product image A1, it is easy for the user to figure out the boundary between the first print job J1 and the second print job J2.
(4-5) The print image data D1 is data contained in the PDF file. The PDF file includes the mark-present image data and the mark-absent image data. According to the configuration described above, the printing apparatus 12 can easily acquire the mark-absent image data.
(4-6) The printing apparatus 12 acquires the mark-absent image data by extracting the mark image A3 from the print image data D1 based on the spot color. According to the configuration described above, the printing apparatus 12 can easily acquire the mark-absent image data.
(4-7) The printing apparatus 12 acquires the mark-absent image data by extracting the mark image A3 from the print image data D1 based on the layer. According to the configuration described above, the printing apparatus 12 can easily acquire the mark-absent image data.
(4-8) The printing apparatus 12 acquires the mark-absent image data by combining the superimposition data with the print image data D1. According to the configuration described above, the printing apparatus 12 can easily acquire the mark-absent image data.
(4-9) The printing apparatus 12 conveys the medium M1 so as to form, at the position represented by the omission data and between the two mark-present images C3 adjacent to each other, the mark-absent region G1 in which the interval between the mark images A3 in the two mark-present images C3 adjacent to each other across the mark-absent region G1 out of the plurality of mark-present images C3 is larger than the interval between the mark images A3 in the two mark-present images C3 adjacent to each other without the mark-absent region G1 interposed therebetween out of the plurality of mark-present images C3. According to the configuration described above, since the interval between the mark images A3 in the mark-present images C3 adjacent to each other across the mark-absent region G1 increases, the processing apparatus 16 can stop. This reduces the time and effort required for the processing.
(4-10) When the omission data represents that the mark-absent region G1 is formed between the plurality of first mark-present images C31 and the plurality of second mark-present images C32, the printing apparatus 12 executes the conveyance of the medium M1 so as to form the mark-absent region G1 in which the interval between the mark images A3 in the first mark-present image C31 and the second mark-present image C32 adjacent to each other across the mark-absent region G1 is larger than the interval between the mark images A3 in the two first mark-present images C31 adjacent to each other and the interval between the mark images A3 in the two second mark-present images C32 adjacent to each other. When the interval between the mark images A3 in the first mark-present image C31 and the second mark-present image C32 adjacent to each other across the mark-absent region G1 is small, there is a possibility that the processing apparatus 16 fails to stop. According to the configuration described above, since the interval between the mark images A3 in the first mark-present image C31 and the second mark-present image C32 adjacent to each other across the mark-absent region G1 increases, the processing apparatus 16 can stop. This reduces the time and effort required for the processing.

### Modified Examples

Each of the embodiments described above can be implemented with the following modifications. Each of the embodiments described above and the following modified examples can be implemented in combination with each other within a range where no technical contradictions occur. The embodiments described above may appropriately be combined with each other.

The printing apparatus 12 may directly receive a target region instruction, a surplus region instruction, and the like from the terminal apparatus 15. The printing apparatus 12 may accumulate the print jobs and the layout files. The information processing apparatus 13 may be integrated with the printing apparatus 12.

The liquid to be ejected by the printing unit 31 is not limited to ink, and may be, for example, a liquid material including particles of a functional material dispersed or mixed in a liquid. For example, the printing unit 31 may eject a liquid material containing, in a dispersed or dissolved form, a material such as an electrode material or a pixel material used in manufacture and so on of a liquid crystal display, an electroluminescent display, and a surface-emitting display.

### Technical Ideas

Technical ideas figured out from the embodiment and the modified examples described above, and the functions and advantages thereof will hereinafter be described.
(A) A printing system includes a printing apparatus configured to print an image on a medium, and an information processing apparatus configured to process information related to the printing apparatus, wherein the printing apparatus includes a printing unit configured to print the image on the medium based on print image data including a product image, and a controller configured to control the printing unit based on a print job including the print image data, the information processing apparatus includes an information storage unit configured to store a plurality of print jobs each identical to the print job, and an information controller configured to transmit the information to the printing apparatus, the information controller is configured to execute receiving a target print instruction to print a target region by receiving one or more print jobs selected from the plurality of print jobs, receiving a surplus print instruction to printing a surplus region different from the target region, and transmitting surplus data based on the surplus print instruction and the one or more print jobs to the printing apparatus, and the controller is configured to execute acquiring target image data representing a target image including the product image from the print image data, acquiring, from the print image data, surplus image data that represents a surplus image not including the product image, and represents the surplus image having a size matching a size of the target image, printing the target region by printing the target images as many as a number represented by the print job, and printing the surplus region by printing the surplus images as many as a number represented by the surplus data. According to the configuration described above, the printing system can separately receive the number of target images and the number of surplus images. Accordingly, the user can easily perform setting with respect to the surplus region. Therefore, the time and effort required for the processing are reduced.
(B) In the printing system, the surplus region may include a lead-in region and a lead-out region, the surplus data may represent a number of surplus images each identical to the surplus image constituting the lead-in region printed in advance of the target region and a number of surplus images each identical to the surplus image constituting the lead-out region printed subsequently to the target region, and the controller may print the lead-in region and the lead-out region by printing the surplus images as many as a number represented by the surplus data. According to the configuration described above, the printing system can receive the number of surplus images constituting the lead-in region and the number of surplus images constituting the lead-out region. Thus, the user can easily perform setting with respect to the lead-in region and the lead-out region.
(C) The printing system may include a plurality of printing apparatuses, wherein the printing apparatus may be one of the plurality of printing apparatuses, and the information controller may be configured to execute receiving the target print instruction by receiving two or more print jobs selected from the plurality of print jobs and receiving the printing apparatus selected as a transmission destination of the two or more print jobs from the plurality of printing apparatuses, receiving the surplus print instruction after receiving the target print instruction, and transmitting the two or more print jobs and the surplus data to the printing apparatus. According to the configuration described above, the user can distribute the two or more print jobs to the printing apparatus, and then provide the surplus print instruction to the information processing apparatus. Accordingly, the user can easily perform setting with respect to the surplus region.
(D) In the printing system, the surplus print instruction may include information designating a length of the surplus region, and the information controller may be configured to execute determining a number of surplus images each identical to the surplus image constituting the surplus region based on the length of the surplus region and the print image data, and transmitting the surplus data representing the number of surplus images constituting the surplus region to the printing apparatus. According to the configuration described above, the user can designate the length of the surplus region. The printing system prints the same number of surplus images as the number corresponding to the designated length. Accordingly, the user can easily perform setting with respect to the surplus region.
(E) In the printing system, the surplus region may include a lead-in region and a lead-out region, the surplus print instruction may include information designating a length of the lead-in region to be printed in advance of the target region and a length of the lead-out region to be printed subsequently to the target region, and the information controller may be configured to execute determining a number of surplus images each identical to the surplus image constituting the lead-in region based on the length of the lead-in region and the print image data, determining a number of surplus images each identical to the surplus image constituting the lead-out region based on the length of the lead-out region and the print image data, and transmitting the surplus data representing the number of surplus images constituting the lead-in region and the number of surplus images constituting the lead-out region to the printing apparatus. According to the configuration described above, the user can designate the length of the lead-in region and the lead-out region. The printing system prints the same number of surplus images as the number corresponding to the designated length. Thus, the user can easily perform setting with respect to the lead-in region and the lead-out region.
(F) In the printing system, the information storage unit may store a plurality of layout files, and the information controller may receive the surplus print instruction by receiving one or more layout files selected from the plurality of layout files. According to the configuration described above, the user can easily perform setting of the surplus region by selecting the layout file.
(G) In the printing system, the plurality of print jobs may include information designating a processing apparatus configured to process the medium printed, the plurality of layout files may be associated with the processing apparatus, and the information controller may select the one or more layout files from the plurality of layout files such that the processing apparatus designated by the one or more print jobs matches the processing apparatus associated with the one or more layout files. Depending on the processing apparatus, the length required for the surplus region may differ in some cases. According to the configuration described above, the number of surplus images is determined in accordance with the processing apparatus used for the processing. Therefore, usability is improved.
(H) In the printing system, the information controller may receive the surplus print instruction by receiving the number of surplus images constituting the surplus region. According to the configuration described above, the user can designate the number of surplus images. Therefore, the user can easily perform setting with respect to the surplus region.
(I) In the printing system, the information controller may be configured to execute receiving the target print instruction by receiving two or more print jobs selected from the plurality of print jobs, and transmitting the two or more print jobs and the surplus data to the printing apparatus, and the controller may print the surplus region for each of the two or more print jobs. According to the configuration described above, the user can easily perform setting of the surplus region to be printed for each of the print jobs. Therefore, the time and effort required for the processing are reduced.
(J) In the printing system, the one or more layout files may include a first designation value and a second designation value configured to designate a number of surplus images each identical to the surplus image constituting the surplus region, the information controller may be configured to execute receiving the target print instruction by receiving two or more print jobs selected from the plurality of print jobs, transmitting the two or more print jobs and the surplus data to the printing apparatus, and the controller may determine whether to print the surplus image with the first designation value or to print the surplus image with the second designation value based on an execution order of the two or more print jobs. Depending on the execution order of the print jobs, the processing apparatus is not required to be adjusted in some cases. In this case, there may be no problem in some cases even when the surplus region is small. According to the configuration described above, since the setting of the surplus region can be changed with the execution order of the print jobs, usability is improved.
(K) In the printing system, the one or more layout files may include information to be described in the surplus region, and the controller may acquire the surplus image data representing the surplus image including the information to be described in the one or more layout files. According to the configuration described above, the surplus region with the surplus image including the information of the layout file is printed. This improves the usability.
(L) A printing apparatus includes a printing unit configured to print an image on a medium based on print image data including a product image, and a controller configured to control the printing unit based on a print job including the print image data, wherein the controller is configured to execute receiving the print job for printing a target region, receiving surplus data for printing a surplus region different from the target region, acquiring target image data representing a target image including the product image from the print image data, acquiring surplus image data representing a surplus image that does not include the product image and has a size matching a size of the target image from the print image data, printing the target region with the target images as many as a number represented by the print job, and printing the surplus region with the surplus images as many as a number represented by the surplus data. According to the configuration described above, the user can easily perform setting with respect to the surplus region. Therefore, the time and effort of the user are reduced.
(M) A printing method is a method executed by a computer controlling, based on a print job including print image data including a product image, a printing unit configured to print an image on a medium based on the print image data, the method including receiving the print job for printing a target region, receiving surplus data for printing a surplus region different from the target region, acquiring target image data representing a target image including the product image from the print image data, acquiring surplus image data representing a surplus image that does not include the product image and has a size matching a size of the target image from the print image data, printing the target region with the target images as many as a number represented by the print job, and printing the surplus region with the surplus images as many as a number represented by the surplus data. According to the method described above, substantially the same advantages as in the printing apparatus described above can be obtained.
(N) An information processing apparatus is an apparatus configured to process information related to a printing apparatus configured to print an image on a medium based on print image data including a product image, the apparatus including an information storage unit configured to store a plurality of print jobs including the print image data and a plurality of layout files, and an information controller configured to transmit the information to the printing apparatus, wherein the information controller is configured to execute receiving, by receiving one or more print jobs selected from the plurality of print jobs, a target print instruction to print a target region in which target images including the product image are located as many as a number represented by the one or more print jobs, receiving, by receiving one or more layout files selected from the plurality of layout files, a surplus print instruction to print a surplus region in which surplus images not including the product image are located as many as a number represented by the one or more layout files, and transmitting the one or more layout files and the one or more print jobs to the printing apparatus. According to the configuration described above, the user can easily perform setting of the surplus region by selecting the layout file. This reduces the time and effort of the user.
(O) A non-transitory computer-readable storage medium storing a program is a medium storing a program that causes a computer, which includes an information storage unit configured to store a plurality of print jobs including print image data including a product image and a plurality of layout files, and an information controller configured to transmit information to a printing apparatus configured to print an image on a medium based on the print image data, to execute processing of information related to the printing apparatus, the processing including receiving, by receiving one or more print jobs selected from the plurality of print jobs, a target print instruction to print a target region in which target images including the product image are located as many as a number represented by the one or more print jobs, receiving, by receiving one or more layout files selected from the plurality of layout files, a surplus print instruction to print a surplus region in which surplus images not including the product image are located as many as a number represented by the one or more layout files, and transmitting the one or more layout files and the one or more print jobs to the printing apparatus. According to the non-transitory computer-readable medium storing the program, substantially the same advantages as those of the information processing apparatus described above can be obtained.

## Claims

1. A printing system comprising:
a printing apparatus configured to print an image on a medium; and
an information processing apparatus configured to process information related to the printing apparatus, wherein
the printing apparatus includes
a printing unit configured to print the image on the medium based on print image data including a product image, and
a controller configured to control the printing unit based on a print job including the print image data,
the information processing apparatus includes
an information storage unit configured to store a plurality of print jobs each identical to the print job, and
an information controller configured to transmit the information to the printing apparatus,
the information controller is configured to execute
receiving a target print instruction to print a target region by receiving one or more print jobs selected from the plurality of print jobs,
receiving a surplus print instruction to printing a surplus region different from the target region, and
transmitting surplus data based on the surplus print instruction and the one or more print jobs to the printing apparatus, and
the controller is configured to execute
acquiring target image data representing a target image including the product image from the print image data,
acquiring, from the print image data, surplus image data that represents a surplus image not including the product image, and represents the surplus image having a size matching a size of the target image,
printing the target region by printing the target images as many as a number represented by the print job, and
printing the surplus region by printing the surplus images as many as a number represented by the surplus data.

2. The printing system according to claim 1, wherein
the surplus region includes a lead-in region and a lead-out region,
the surplus data represents a number of surplus images each identical to the surplus image constituting the lead-in region printed in advance of the target region and a number of surplus images each identical to the surplus image constituting the lead-out region printed subsequently to the target region, and
the controller prints the lead-in region and the lead-out region by printing the surplus images as many as a number represented by the surplus data.

3. The printing system according to claim 1, further comprising
a plurality of printing apparatuses, wherein
the printing apparatus is one of the plurality of printing apparatuses, and
the information controller is configured to execute
receiving the target print instruction by receiving two or more print jobs selected from the plurality of print jobs and receiving the printing apparatus selected as a transmission destination of the two or more print jobs from the plurality of printing apparatuses,
receiving the surplus print instruction after receiving the target print instruction, and
transmitting the two or more print jobs and the surplus data to the printing apparatus.

4. The printing system according to claim 1, wherein
the surplus print instruction includes information designating a length of the surplus region, and
the information controller is configured to execute
determining a number of surplus images each identical to the surplus image constituting the surplus region based on the length of the surplus region and the print image data, and
transmitting the surplus data representing the number of surplus images constituting the surplus region to the printing apparatus.

5. The printing system according to claim 4, wherein
the surplus region includes a lead-in region and a lead-out region,
the surplus print instruction includes information designating a length of the lead-in region to be printed in advance of the target region and a length of the lead-out region to be printed subsequently to the target region, and
the information controller is configured to execute
determining a number of surplus images each identical to the surplus image constituting the lead-in region based on the length of the lead-in region and the print image data,
determining a number of surplus images each identical to the surplus image constituting the lead-out region based on the length of the lead-out region and the print image data, and
transmitting the surplus data representing the number of surplus images constituting the lead-in region and the number of surplus images constituting the lead-out region to the printing apparatus.

6. The printing system according to claim 1, wherein
the information storage unit stores a plurality of layout files, and
the information controller receives the surplus print instruction by receiving one or more layout files selected from the plurality of layout files.

7. The printing system according to claim 6, wherein
the plurality of print jobs includes information designating a processing apparatus configured to process the medium printed,
the plurality of layout files is associated with the processing apparatus, and
the information controller selects the one or more layout files from the plurality of layout files such that the processing apparatus designated by the one or more print jobs matches the processing apparatus associated with the one or more layout files.

8. The printing system according to claim 1, wherein
the information controller receives the surplus print instruction by receiving the number of surplus images constituting the surplus region.

9. The printing system according to claim 1, wherein
the information controller is configured to execute
receiving the target print instruction by receiving two or more print jobs selected from the plurality of print jobs, and
transmitting the two or more print jobs and the surplus data to the printing apparatus, and
the controller prints the surplus region for each of the two or more print jobs.

10. The printing system according to claim 6, wherein
the one or more layout files include a first designation value and a second designation value configured to designate a number of surplus images each identical to the surplus image constituting the surplus region,
the information controller is configured to execute
receiving the target print instruction by receiving two or more print jobs selected from the plurality of print jobs,
transmitting the two or more print jobs and the surplus data to the printing apparatus, and
the controller determines whether to print the surplus image with the first designation value or to print the surplus image with the second designation value based on an execution order of the two or more print jobs.

11. The printing system according to claim 6, wherein
the one or more layout files include information to be described in the surplus region, and
the controller acquires the surplus image data representing the surplus image including the information to be described in the one or more layout files.

12. A printing apparatus comprising:
a printing unit configured to print an image on a medium based on print image data including a product image; and
a controller configured to control the printing unit based on a print job including the print image data, wherein
the controller is configured to execute
receiving the print job for printing a target region,
receiving surplus data for printing a surplus region different from the target region,
acquiring target image data representing a target image including the product image from the print image data,
acquiring surplus image data representing a surplus image that does not include the product image and has a size matching a size of the target image from the print image data,
printing the target region with the target images as many as a number represented by the print job, and
printing the surplus region with the surplus images as many as a number represented by the surplus data.

13. A printing method executed by a computer controlling, based on a print job including print image data including a product image, a printing unit configured to print an image on a medium based on the print image data, the method comprising:
receiving the print job for printing a target region;
receiving surplus data for printing a surplus region different from the target region;
acquiring target image data representing a target image including the product image from the print image data;
acquiring surplus image data representing a surplus image that does not include the product image and has a size matching a size of the target image from the print image data;
printing the target region with the target images as many as a number represented by the print job; and
printing the surplus region with the surplus images as many as a number represented by the surplus data.

14. An information processing apparatus configured to process information related to a printing apparatus configured to print an image on a medium based on print image data including a product image, the apparatus comprising:
an information storage unit configured to store a plurality of print jobs including the print image data and a plurality of layout files; and
an information controller configured to transmit the information to the printing apparatus, wherein
the information controller is configured to execute
receiving, by receiving one or more print jobs selected from the plurality of print jobs, a target print instruction to print a target region in which target images including the product image are located as many as a number represented by the one or more print jobs,
receiving, by receiving one or more layout files selected from the plurality of layout files, a surplus print instruction to print a surplus region in which surplus images not including the product image are located as many as a number represented by the one or more layout files, and
transmitting the one or more layout files and the one or more print jobs to the printing apparatus.

15. A non-transitory computer-readable storage medium storing a program that causes a computer, which includes an information storage unit configured to store a plurality of print jobs including print image data including a product image and a plurality of layout files, and an information controller configured to transmit information to a printing apparatus configured to print an image on a medium based on the print image data, to execute processing of information related to the printing apparatus, the processing comprising:
receiving, by receiving one or more print jobs selected from the plurality of print jobs, a target print instruction to print a target region in which target images including the product image are located as many as a number represented by the one or more print jobs;
receiving, by receiving one or more layout files selected from the plurality of layout files, a surplus print instruction to print a surplus region in which surplus images not including the product image are located as many as a number represented by the one or more layout files; and
transmitting the one or more layout files and the one or more print jobs to the printing apparatus.
